(19) Europäisches Patentamt
European Patent Office
Office européen des brevets

(11) **EP 4 716 261 A1**

(12) **EUROPEAN PATENT APPLICATION**
published in accordance with Art. 153(4) EPC

(43) Date of publication:
**25.03.2026 Bulletin 2026/13**

(21) Application number: **24807604.4**

(22) Date of filing: **17.05.2024**

(51) International Patent Classification (IPC):
*H04W 4/80* (2018.01)     *H04W 8/00* (2009.01)
*H04B 1/7163* (2011.01)     *H04W 72/0446* (2023.01)
*G01S 13/02* (2006.01)     *G01S 13/76* (2006.01)
*H04W 48/10* (2009.01)     *H04W 12/08* (2021.01)

(52) Cooperative Patent Classification (CPC):
G01S 13/02; G01S 13/76; H04B 1/7163;
H04W 4/80; H04W 8/00; H04W 12/08; H04W 48/10;
H04W 72/0446

(86) International application number:
**PCT/KR2024/006747**

(87) International publication number:
**WO 2024/237733 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.05.2023 KR 20230063703
31.05.2023 KR 20230070262**

(71) Applicant: **LG Electronics Inc.
Yeongdeungpo-gu
Seoul 07336 (KR)**

(72) Inventors:
• **LEE, Hongwon**
  **Seoul 06772 (KR)**
• **CHOI, Jinsoo**
  **Seoul 06772 (KR)**
• **JANG, Insun**
  **Seoul 06772 (KR)**
• **CHO, Hangyu**
  **Seoul 06772 (KR)**

(74) Representative: **Plasseraud IP
104 Rue de Richelieu
CS92104
75080 Paris Cedex 02 (FR)**

(54) **METHOD AND APPARATUS FOR SETTING UP AND MAINTAINING SESSION IN ULTRA-WIDEBAND WIRELESS NETWORK SYSTEM**

(57)     Disclosed are a method and an apparatus for setting up and maintaining a session in an ultra-wideband wireless network system. A method performed by a first device in an ultra-wideband (UWB) wireless network system according to an embodiment of the present disclosure may comprise the steps of: transmitting an advertising poll frame to a second device; receiving an advertising response frame from the second device; and transmitting a start-of-ranging (SOR) frame to the second device. On the basis that the advertising response frame is a public advertising response frame, the public advertising response frame may include a responder address which is a public address randomly generated by the second device.

FIG.30

Transmit advertising poll frame to second device — S3010

Receive, from second device, advertising response frame including responder address which is public address randomly generated by second device based on being public advertising response frame — S3020

Transmit SOR frame to second device — S3030

EP 4 716 261 A1

**Description**

[TECHNICAL FIELD]

The present disclosure relates to a method and a device for setting up and maintaining a session in an ultra-wideband wireless network system.

[BACKGROUND ART]

A low-rate (LR) wireless networks may support low data rate connectivity between fixed or mobile devices having limited battery consumption requirements. For example, a LR wireless network may be applied to a wireless personal area network (WPAN). The Institute of Electrical and Electronics Engineers (IEEE) 802.15.4 standard defines various technologies for a physical layer (PHY) and a medium access control (MAC) sublayer for a LR wireless network. For example, the IEEE 802.15.4 standard defines various modes that support precise ranging.

An ultra wideband (UWB) wireless network may support transmitting massive information at low power over a very wide band (e.g., a frequency band of 3.1 GHz-10.6GHz). For example, an UWB technology may support transmitting digital sign information wirelessly by converting it into an impulse signal with a very short time duration below a nanosecond. The IEEE 802.15.4z standard defines an ultra wideband (UWB) technology related to the ranging technology. For example, the IEEE 802.15.4z standard includes a high-rate pulse frequency (HRP) PHY technology that supports high-speed data communication (e.g., 27-31 Mbps) and accurate two-way ranging and positioning, and a high-rate pulse frequency (LRP) PHY technology that supports various modes for low-speed data communication (e.g., a Radio Frequency Identification (RFID) application). Furthermore, the IEEE 802.15.4z standard includes an UWB PHY technology that refines the integrity and accuracy of ranging measurement, and a MAC technology that supports the exchange of ranging-related information between devices participating in ranging and the control of a time-of-flight (TOF) ranging procedure. Recently, the IEEE 802.15.4ab standard for the advancement of an UWB PHY/MAC including the refinement of the IEEE 802.15.4z standard-based wireless network technology is under discussion.

[Disclosure]

[Technical Problem]

A technical problem of the present disclosure is to provide an advertising method and device based on various packet formats in a UWB wireless network system.

An additional technical problem of the present disclosure is to provide a method and a device for transmitting or receiving after session setup in a UWB wireless network system.

The technical objects to be achieved by the present disclosure are not limited to the above-described technical objects, and other technical objects which are not described herein will be clearly understood by those skilled in the pertinent art from the following description.

[Technical Solution]

A method performed by a first device in an ultra-wideband (UWB) wireless network system according to an aspect of the present disclosure may include transmitting an advertising poll frame to a second device; receiving an advertising response frame from the second device; and transmitting a start-of-ranging (SOR) frame to the second device. Based on the advertising response frame being a public advertising response frame, the public advertising response frame may include a responder address which is a public address randomly generated by the second device.

A method performed by a second device in an ultra-wideband (UWB) wireless network system according to an additional aspect of the present disclosure may include receiving an advertising poll frame from a first device; transmitting an advertising response frame to the first device; and receiving a start-of-ranging (SOR) frame from the first device. Based on the advertising response frame being a public advertising response frame, the public advertising response frame may include a responder address which is a public address randomly generated by the second device.

[Technical Effects]

According to the present disclosure, an advertising method and device based on various packet formats in a UWB wireless network system may be provided.

According to the present disclosure, a method and a device for transmitting or receiving after session setup in a UWB wireless network system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a block configuration diagram of a wireless communication device according to an embodiment of the present disclosure.

FIG. 2 is a diagram for describing a HRP UWB PPDU format to which the present disclosure may be applied.

FIG. 3 is a diagram representing a RMARKER position according to a STS packet configuration in a HRP-ERDEV PPDU format to which the present disclosure may be applied.

FIG. 4 is a diagram for describing two-way ranging techniques to which the present disclosure may be applied.

FIG. 5 is a diagram for describing examples of a format of a RMI IE, a RCPCS IE, a RRMC IE and a RRTI IE to which the present disclosure may be applied.

FIG. 6 shows an example of a message sequence chart for SS-TWR applying a deferred reply time result to which the present disclosure may be applied.

FIG. 7 shows an example of a message sequence chart for SS-TWR applying an embedded reply time result to which the present disclosure may be applied.

FIG. 8 shows an example of a message sequence chart for SS-TWR using a SP3 packet to which the present disclosure may be applied.

FIG. 9 shows an example of a message sequence chart for DS-TWR to which deferred reply time information to which the present disclosure may be applied is applied.

FIG. 10 shows an example of a message sequence chart for DS-TWR to which embedded ranging time information to which the present disclosure may be applied is applied.

FIG. 11 is a diagram for describing the role of a device in a ranging procedure to which the present disclosure may be applied.

FIG. 12 shows examples of ARC IE, RDM IE, RBU IE, RR IE and SRRE IE formats to which the present disclosure may be applied.

FIG. 13 is a diagram for describing a ranging block structure and a ranging phase to which the present disclosure may be applied.

FIG. 14 shows examples of a timing diagram for various multi-device ranging to which the present disclosure may be applied.

FIG. 15 shows a timing diagram in an example of a block-based mode to which the present disclosure may be applied.

FIG. 16 is a diagram for describing examples of various transmission offsets to which the present disclosure may be applied.

FIG. 17 shows an example of a message sequence chart for one-to-many SS-TWR to which the present disclosure may be applied.

FIG. 18 shows an example of a message sequence chart for SP3 one-to-many SS-TWR to which the present disclosure may be applied.

FIG. 19 is a diagram representing an example of a MMS packet to which the present disclosure may be applied.

FIG. 20 is a diagram representing additional examples of a MMS packet to which the present disclosure may be applied.

FIG. 21 is a diagram representing additional examples of a MMS packet to which the present disclosure may be applied.

FIG. 22 represents examples of a NBA-MMS-UWB ranging control phase, ranging phase and measurement report phase to which the present disclosure may be applied.

FIG. 23 is a diagram for describing ranging session initialization and setup to which the present disclosure may be applied.

FIG. 24 is a diagram representing an example of AP transmission and reception operations to which the present disclosure may be applied.

FIGS. 25 and 26 are a diagram representing examples of AP transmission and reception operations in a plurality of RANs to which the present disclosure may be applied.

FIG. 27 is a diagram representing examples of an advertising message format and a response message format according to the present disclosure.

FIG. 28 is a diagram representing examples of message exchange between an initiator and a responder according to the present disclosure.

FIG. 29 represents an example of exchange of channel usage coordination information and ranging session concurrent between devices belonging to a different RAN according to the present disclosure.

FIG. 30 is a diagram for describing the operation of the first device according to the present disclosure.

FIG. 31 is a diagram for describing the operation of the second device according to the present disclosure.

FIG. 32 represents an example of a private address-based advertising poll packet format according to the present disclosure.

FIG. 33 represents an example of a private address-based advertising response packet format according to the present disclosure.

FIG. 34 represents an example of a private address-based ranging start packet format according to the present disclosure.

FIG. 35 represents an example of a poll packet format for public advertising according to the present disclosure.

FIG. 36 represents an example of a response packet format for public advertising according to the present disclosure.

FIG. 37 represents an example of a ranging start packet format for public advertising according to the present disclosure.

FIG. 38 represents another example of a poll packet format for public advertising according to the present disclosure.

FIG. 39 represents another example of a poll packet format for public advertising according to the present disclosure.

FIG. 40 represents another example of a poll packet format for public advertising according to the present disclosure.

FIG. 41 represents another example of a poll packet format for public advertising according to the present disclosure.

FIG. 42 represents another example of a poll packet format for public advertising according to the present disclosure.

FIG. 43 illustrates a poll packet format for public advertising based on a security level according to the present disclosure.

FIG. 44 illustrates a poll packet format for public advertising based on a security mode according to the present disclosure.

FIG. 45 is a diagram representing an example of a method for distinguishing frames by an ID in a ranging operation according to the present disclosure.

FIG. 46 is a diagram representing exemplary formats of a public-poll frame, a public-response frame and a public-report frame according to the present disclosure.

FIG. 47 is a diagram representing an example of a method for distinguishing frames by an address type in a ranging operation according to the present disclosure.

FIG. 48 is a diagram representing exemplary formats of a poll frame, a response frame and a report frame according to the present disclosure.

FIG. 49 is a diagram representing an example of a method for distinguishing frames by a subtype according to the present disclosure.

FIG. 50 represents an example of finding a peripheral device based on secured advertising according to the present disclosure.

FIG. 51 represents an example of access control of multiple devices based on unsecured advertising according to the present disclosure.

FIG. 52 represents an example of a purchase process through an arbitrary device based on unsecured advertising according to the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The examples of the present disclosure may be applied to various wireless communication systems. For example, the examples of the present disclosure may be applied to an IEEE 802.15 standard-based wireless network (e.g., Zigbee, Bluetooth, etc.). In particular, the examples of the present disclosure may be applied to an IEEE 802.15.4 standard-based wireless network, and further, may be applied to a newly proposed IEEE 802.15.4ab standard-based UWB wireless network, or a next-generation UWB wireless network after IEEE 802.15.4ab. A wireless communication system to which the examples of the present disclosure are applied is not limited to a wireless network of the IEEE 802.15 series, and may be applied to a wireless local area network (WLAN) technology or a Wi-Fi technology of the IEEE 802.11 series, and may be applied to a cellular wireless communication system (e.g., a technology of the Long Term Evolution (LTE) series of the 3rd Generation Partnership Project (3GPP) standard and a 5G New Radio (NR)).

The IEEE 802.15.4ab standard including a technology for further advancing an UWB PHY/MAC is under discussion. For example, in the IEEE 802.15.4ab standard, additional coding, a preamble and a modulation technique for supporting improved link budget and/or reduced air-time; an additional channel and operating frequency; an interference reduction technology to support higher device density and higher traffic use cases; improvement of accuracy, precision, reliability and interoperability for high-integrity ranging; a technique for reducing complexity and power consumption; definition of a hybrid operation with narrowband signaling to support an UWB; refined native discovery and connection setup mechanism; a sensing capability for supporting presence detection and environment mapping; a mechanism supporting high data-rate streaming allowing a minimum throughput of 50Mbps as well as low-power and low-latency streaming; support for peer-to-peer, peer-to-multi-peer, station-to-infrastructure protocol and infrastructure synchronization mechanism, etc. are discussed.

Hereinafter, technical features to which examples of the present disclosure may be applied will be described.

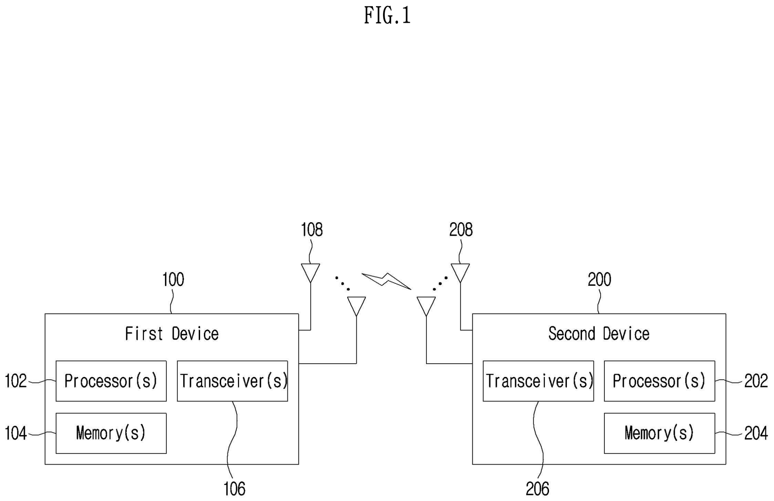

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

When devices 100 and 200) illustrated in FIG. 1 support ranging, it may be called a ranging-capable device (RDEV) or an enhanced ranging-capable device (ERDEV). For example, devices 100 and 200 illustrated in FIG. 1 may be called various terms such as a transmitting device, a receiving device, a transmitting RDEV, a receiving RDEV, a transmitting ERDEV, a receiving ERDEV, etc. For example, devices 110 and 200 may be called an initiator, a responder, an originator, a recipient, a controller, a controlee, etc. according to a role in a ranging operation. The role of one device is not fixed, but may be relatively determined according to a relationship with other devices. When one device interacts with multiple devices, one device may play multiple roles.

Referring to FIG. 1, the first device 100 and the second device 200 may transmit and receive a wireless signal through various UWB wireless network technologies (e.g., IEEE 802.15.4 series). The first device 100 and the second device 200 may include an interface for a medium access control (MAC) layer and a physical layer (PHY) that follow the regulations of the IEEE 802.15.4 standard. The IEEE 802.15.4-based PHY and MAC are included in an UWB subsystem, and an UWB subsystem may further include an UWB command interface (UCI) corresponding to an interface between an UWB controller and a host. An UWB subsystem may exchange a message with a host system through an UCI.

In addition, the first device 100 and the second device 200 may additionally support various communication standards (e.g., IEEE 802.15 series, IEEE 802.11 series, 3GPP LTE series, 5G NR series standards, etc.) technologies other than UWB wireless network technology. In addition, the device of the present disclosure may be implemented in various devices such as a mobile phone, a vehicle, a personal computer, augmented reality (AR) equipment, and virtual reality (VR) equipment, etc. In addition, the device of the present specification may support various communication services such as a voice call, a video call, data communication, autonomous-driving, machine-type communication (MTC), machine-to-machine (M2M), device-to-device (D2D), IoT (Internet-of-Things), etc.

The first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement an UWB wireless network technology (e.g., IEEE 802.15.4 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

The second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement an UWB wireless network technology (e.g., IEEE 802.15.4 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, the transceivers 106 and 206 of FIG. 1 may perform a transmission and reception operation of a signal (e.g., a packet or a physical layer protocol data unit (PPDU) conforming to IEEE 802.15.4, etc.). In addition, in the present disclosure, an operation in which various devices generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields included in the PPDU, 2) determining / configuring / acquiring time resources or frequency resources used for fields included in the PPDU; 3) determining / configuring / acquiring a specific sequence used for fields included in the PPDU action, 4) power control operation and/or power saving operation applied to a device, 5) operations related to ACK signal determination/acquisition/configuration/calculation/-decoding/encoding, etc. In addition, in the following example, various information (e.g., information related to fields / subfields / control fields / parameters / power, etc.) used by various devices to determine / acquire / configure / calculate / decode / encode transmission and reception signals may be stored in the memories 104 and 204 of FIG. 1.

In an UWB band, a device may perform medium access based on a Carrier Sense Multiple Access with Collision Avoidance (CSMA/CA) mechanism. A CSMA/CA mechanism may perform Clear Channel Assessment (CCA) that senses a wireless channel or medium for a predetermined time duration before a device starts transmission. Sensing may be performed, for example, by an energy detection (ED) method based on a predetermined threshold. As a result of sensing, if a medium is determined to be in an idle status, transmission is started through a corresponding medium. On the other hand, when a medium is detected to be occupied or busy, a device may attempt transmission after setting a delay period for medium access (e.g., a random backoff period) and waiting without starting transmission. By applying a random backoff period, multiple devices are expected to attempt transmission after waiting for a different time, so collision may be minimized.

In addition, when a superframe structure is applied, a slotted CSMA-CA mechanism may be applied to data transmission in the contention access period (CAP) of an active portion between the active portion and the inactive portion of an interval between beacons. A CSMA-CA mechanism may not be applied to data transmission in an active portion and in a contention free period (CFP). When a superframe structure is not applied, an unslotted CSMA-CA mechanism may be applied to the transmission of all data frames excluding an ACK frame for a data request command.

Ranging Measurement

Ranging includes distance measurement between two devices, and a device having a ranging capability may be referred to as a ranging-capable device (RDEV) or an enhanced ranging-capable device (ERDEV).

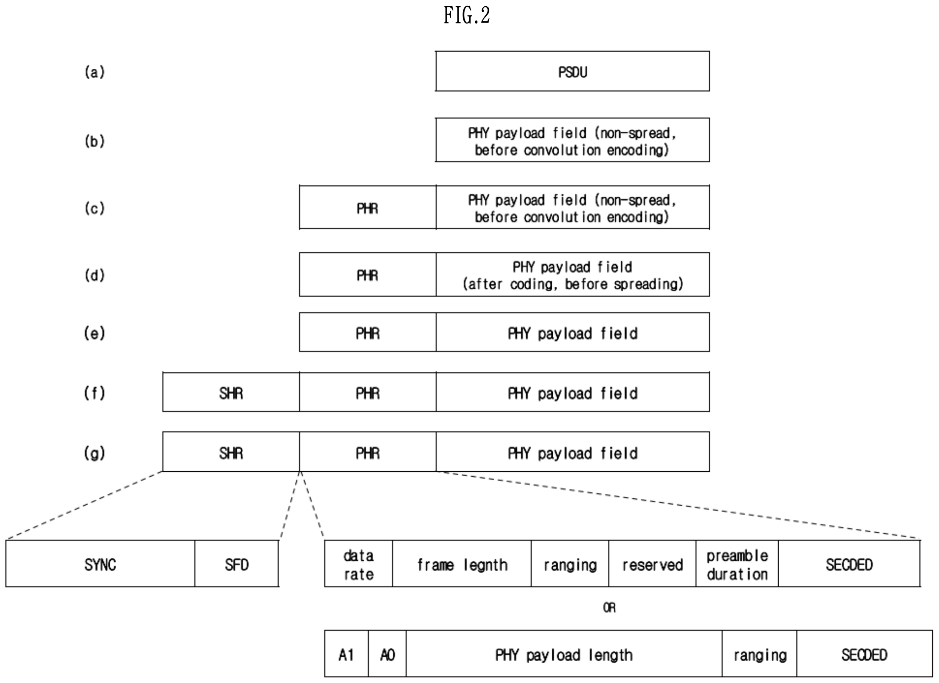

FIG. 2 is a diagram for describing a HRP UWB PPDU format to which the present disclosure may be applied.

FIGS. 2(a) to 2(g) show the encoding process of a HRP UWB PPDU. Through an encoding process, a HRP UWB PPDU having a format including a synchronization header (SHR), a PHY header (PHR) and a PHY payload field may be generated.

FIG. 2(a) shows a PHY service data unit (PSDU) received from a MAC through a PHY service access point (SAP). A PSDU may include a MAC PDU.

In FIG. 2(b), Reed-Solomon encoding may be applied to a PSDU, generating a PHY payload field. A PHY payload field in FIG. 2(b) is non-spread, and corresponds to a status before convolution encoding is applied.

In FIG. 2(c), a PHR field may be added in front of a PHY payload field. A PHR field may have a size of 19 bits of bit 0 to bit 18. For example, bit 0-1 may correspond to a data rate field, bit 2-8 may correspond to a frame length field, bit 9 may correspond to a ranging field, bit 10 may be reserved, bit 11-12 may correspond to a preamble duration field and bit 13-18 may correspond to a single error correct, double error detect (SECDED) field. A data rate field may indicate a data rate value applied to a PHY payload field. A frame length field may indicate the length of a PSDU. A ranging field may indicate whether a corresponding frame is a ranging frame (RFRAME). A preamble duration field may indicate the length (symbol unit) of the SYNC field of a SHR.

In FIG. 2(d), convolution encoding may be applied to generate a coded PHY payload field, and spreading may be applied to a PHY payload field in FIG. 2(e).

In FIG. 2(f), a SHR may be added in front of a PHR. A SHR field may include a SYNC field (or a preamble code) and a start-of-frame delimiter (SFD) field.

In FIG. 2(g), modulation is applied to SHR, PHR and PHY payload fields, and a PPDU encoding procedure is terminated. A basic coding rate may be applied to a SHR field. A PHR field may have a format including data rate (2 bits), frame length (7 bits), ranging (1 bit), reserve (1 bit), preamble duration (2 bits) and SECDED (6 bits) for a base pulse repetition frequency (BRFP) mode, or may have a format including A1 (1 bit), A0 (1 bit), PHY payload length (10 bits), ranging (1 bit) and SECDED (6 bits) for a higher pulse repetition frequency (HPRF) mode. The A1 and A0 fields may also indicate the size of an additional gap between a payload and a STS. For a PHR field, burst position modulation-binary phase shift keying (BPM-BPSK) with a coding rate of 850kb/s or 6.8Mb/s may be applied in a BPRF mode, and modulation with a coding rate of 3.9Mb/s, 7.8Mb/s, 15.6Mb/s or 31.2Mb/s may be applied in a HPRF mode, and BPM-BPSK with 850kb/s or 110kb/s may be applied in other cases. For a PHY payload field, modulation with a coding rate of 6.8Mb/s, 7.8Mb/s, 27.2Mb/s or 31.2Mb/s may be applied in a HPRF mode, and BPM-BPSK with a coding rate indicated in a PHR may be applied in other cases.

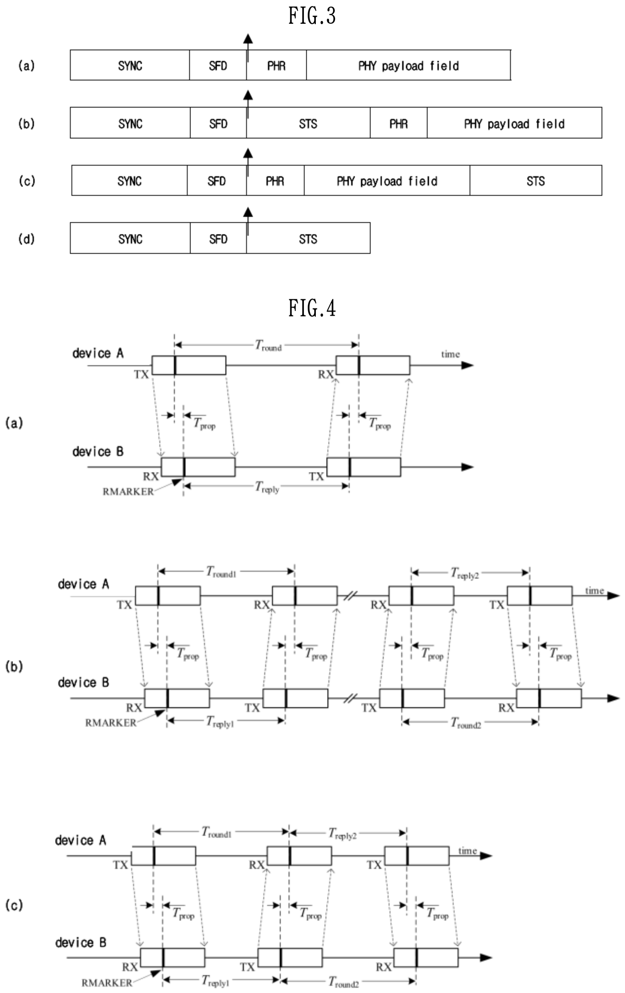

FIG. 3 is a diagram representing a RMARKER position according to a STS packet configuration in a HRP-ERDEV PPDU format to which the present disclosure may be applied.

A scrambled timestamp sequence (STS) field may include a sequence of pseudo-randomized pulses. For example, a STS may include a sequence of advanced encryption standard (AES)-128-based pseudo-randomized pulses, and may be utilized for accurate localization in the localization technology based on the spread spectrum technology in UWB communication.

A PPDU STS packet structure configuration may be different according to whether a STS field is included and its location.

FIG. 3(a) shows a format corresponding to STS packet configuration 0 (i.e., a STS field does not exist in a PPDU). This format may be defined in a mandatory way.

FIG. 3(b) shows a format corresponding to STS packet configuration 1 (i.e., a STS field is located immediately after a SFD field and before a PHR field). This format may be defined in a mandatory way.

FIG. 3(c) shows a format corresponding to STS packet configuration 2 (i.e., a STS field is located after a PHY payload field). This format may be defined in an optional way.

FIG. 3(d) shows a format corresponding to STS packet configuration 3 (i.e., a STS field is located immediately after a SFD field, a PHR field does not exist, and a data field (i.e., a PHY payload field) does not exist). This format may be defined in a mandatory way.

A PPDU format like examples in FIG. 3 may be referred to as a HRP-ERDEV PPDU format. In FIG. 3, an arrow indicates a ranging marker (RMARKER) reference position in each format. RMARKER may be a reference for timestamp measurement or ranging counter.

For example, RMARKER may be defined as a time at which the start of the first symbol following the SFD of RFRAME is at a local antenna. The next higher layer may estimate a relative clock offset between local reference clocks on a remote transmitting end and a receiving end based on the reporting of a SRMARKER receiving ranging counter value for at least one STS segment.

A ranging counter supported by RDEV corresponds to a set of behavioral properties and capabilities of a RDEV calculating a ranging counter value. A ranging counter value is an unsigned integer, and may be defined as a length of at least 32 bits. The unit of a ranging counter is defined as $2^{-7}$ of a 499.2MHz chipping period for a HRP UWB PHY, and is approximately 15.65 picoseconds(ps), and is defined as $20^{-20}$ of a 1MHz basic chipping rate for a LRP UWB PHY, and is approximately 0.9537ps.

A ranging capability may be enabled in a RDEV by using a MAC common part sublayer (MCPS)-DATA.request primitive and a MAC sublayer management entity (MLME)-RX-ENABLE.request primitive. A primitive may mean a set of instructions or parameters exchanged between sublayer entities or layers within one device. For example, an originator may request a ranging capability through a MCPS-DATA.request primitive, and a ranging capability may be enabled in a recipient through a MLME-RX-ENABLE.request primitive.

Ranging and Localization Method

The ranging and localization methods supported by RDEVs and ERDEVs may be based on a time-stamping capability. As a time-based technique, single-sided two-way ranging (SS-TWR), double-sided two-way ranging (DS-TWR), and one-way ranging/time difference of arrival (OWR/TDOA) are described below.

FIG. 4 is a diagram for describing two-way ranging techniques to which the present disclosure may be applied.

In the example of FIG. 4(a), SS-TWR includes the measurement of the round-trip delay of a single message from one device to another device and a response sent to a sending device. Device A initiates message exchange, device B sends a response, and T_prop corresponds to the propagation time of RMARKER between devices.

Each device precisely measures the transmission and reception time of a message frame, and accordingly, may calculate T_round and T_reply by simple subtraction. The resulting TOF may be estimated as ^T_prop by the following equation.

【Equation 1】

$$\hat{T}_{\text{prop}} \;=\; \frac{1}{2}(T_{\text{round}} - T_{\text{reply}})$$

When a device may estimate a relative clock offset between itself and a remote device, the accuracy of TOF may be improved by the following equation.

【Equation 2】

$$\hat{T}_{\text{prop}} \;=\; \frac{1}{2}(T_{\text{round}} - T_{\text{reply}} - (1 - C_{\text{offs}}))$$

Here, C_offs corresponds to a value obtained after the receiver of device A measures a relative clock offset between itself and the transmitter of remote device B.

In the example of FIG. 4(b), DS-TWR corresponds to the extension of SS-TWR, and two round-trip times may be used and combined to calculate a TOF result by reducing an error for a case where an uncorrected clock frequency offset exists although a response delay is long. Device A initiates the first round-trip time measurement, and device B responds to it, and then device B initiates the second round-trip time measurement, and device A responds to it, so the entire DS-TWR exchange may be completed. T_prop corresponds to the propagation time of RMARKER between devices.

Each device precisely measures the transmission and reception time of a message frame, and accordingly, may calculate T_round and T_reply by simple subtraction. The resulting TOF may be estimated as ^T_prop by the following equation.

【Equation 3】

$$\hat{T}_{\text{prop}} \;=\; \frac{(T_{\text{round1}} \times T_{\text{round2}} - T_{\text{reply1}} \times T_{\text{reply2}})}{(T_{\text{round1}} + T_{\text{round2}} + T_{\text{reply1}} + T_{\text{reply2}})}$$

The example of FIG. 4(c) corresponds to the reduction of DS-TWR through four messages in FIG. 4(b) to three messages. In other words, the response of the first round-trip time measurement may be used as the initiation message of the second round-trip time measurement.

Next, a TDOA method is described. TDOA corresponds to a technique for locating a wireless device (e.g., a radio frequency identification (RFID) device) based on the relative arrival time of a single message or multiple messages. OWR may be used for TDOA. There are two cases of TDOA. In one case, a message is periodically broadcast by a mobile device, and a time at which a broadcast message arrives at multiple fixed nodes synchronized in a predetermined manner may be compared. Generally, a message transmitted by a mobile device may be referred to as a blink. In another case, multiple synchronized nodes may sequentially broadcast a message according to a transmission time offset known to each other. For any pair of fixed synchronized nodes, a difference in the arrival time of blinks in the first case, or a difference in the arrival time of broadcast messages received by a mobile device in the second case locates a mobile device on a hyperbolic surface. By combining results from such multiple pairs, an intersection point between sets of hyperbolic surfaces may be derived, and accordingly, the location of a mobile device may be specified. In the second case, a transmission offset may be considered when calculating a difference in the arrival time of messages from synchronized nodes.

RFID devices may typically use the shortest blink message as much as possible (e.g., a multipurpose frame) to reduce power consumption. A multipurpose frame may be 12 octets long, and may include a short frame control field and a sequence number field, and may not include a destination address field, an extended source address field and a frame check sequence (FCS).

The synchronization of fixed nodes may be performed by the wired distribution of clock signals, and a wireless synchronization technique may be applied. The UWB messages (and known/pre-measured TOF) transmitted between fixed nodes may be used to calculate a relative clock frequency offset and a drift between fixed nodes. This information may be used to correct the arrival time of blink messages based on a common time, making TDOA data meaningful.

Set-up Procedure before Ranging Exchange

In order to reduce power consumption, disabling ranging may be defined as a default status. Enabling ranging in all RDEVs participating in TWR exchange may be performed by a higher layer. In addition, when an optional capability is used, it may be assumed that predetermined coordination for preamble and channel selection is performed before TWR exchange.

Finish-up Procedure after Ranging Exchange

At the end of TWR exchange, each device may have transmit (TX) and receive (RX) ranging counter values related to round-trip time measurement or reply time. In order to calculate TOF, all of these values are required in a node where calculation is performed. For this purpose, out-of-band (OOB) signaling, a custom message, a ranging measurement information (RMI) information element (IE), etc. may be used.

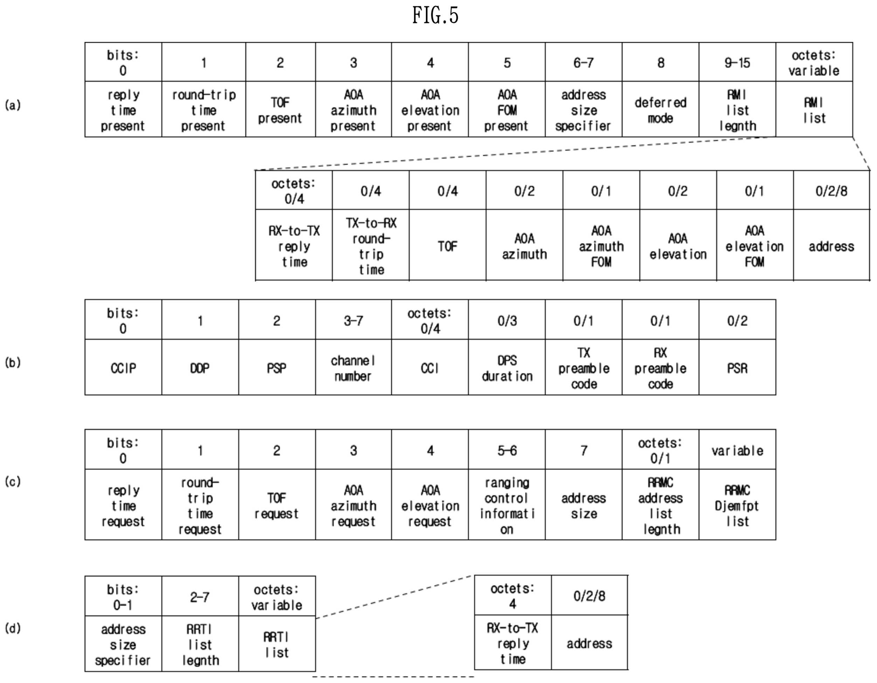

FIG. 5 is a diagram for describing examples of a format of a RMI IE, a RCPCS IE, a RRMC IE and a RRTI IE to which the present disclosure may be applied.

FIG. 5(a) shows an example of a RMI IE format.

A RMI IE may be used to send at least one ranging-related measurement to at least one device. A RMI IE content field may have the same format as the example of FIG. 5(a).

1, a value of a reply time present field, may indicate that a RX-to-TX (or TX-to-RX) reply time field is present in each RMI list element, and a value of 0 may indicate that it is not present. A RX-to-TX (or TX-to-RX) reply time may correspond to T_reply described by referring to FIG. 4.

1, a value of a round-trip time present field, may indicate that a TX-to-RX round-trip time field is present in each RMI list element, and a value of 0 may indicate that it is not present. A TX-to-RX round-trip time may correspond to T_round described by referring to FIG. 4.

1, a value of a TOF present field, may indicate that a TOF field is present in each RMI list element, and a value of 0 may indicate that it is not present.

1, a value of an AOA azimuth present field, may indicate that an AOA azimuth field is present in each RMI list element, and a value of 0 may indicate that it is not present.

1, a value of an AOA elevation present field, may indicate that an AOA elevation field is present in each RMI list element, and a value of 0 may indicate that it is not present.

1, a value of an AOA figure of merit (FOM) present field, may indicate that an AOA azimuth FOM field is present in each RMI list element when an AOA azimuth field is present, and may indicate that an AOA elevation FOM field is present in each RMI list element when an AOA elevation field is present, and a value of 0 may indicate that an AOA azimuth FOM field or an AOA elevation FOM field is not present.

An address size specifier field may specify the size of addresses used in a RMI list field (e.g., 2 or 8).

0, a value of a deferred mode field, may indicate that a corresponding RMI IE is embedded into RFRAME, and a value of 1 may indicate that a corresponding RMI IE is included in a deferred message transmitted in the next measurement report phase.

A RMI list length field may specify the number of elements of a RMI list field. Fields included in a RMI list field are as shown in FIG. 5(a).

FIG. 5(b) shows an example of a RCPCS IE format.

A ranging channel and preamble code selection (RCPCS) IE may be used to indicate channel selection for dynamic preamble code and channel selection (DPS) and/or selection of a TX/RX preamble code. DPS may include changing a long preamble to protect against an attacking device intercepting ranging. A RCPCS IE content field may have the same format as the example of FIG. 5(b).

1, a value of a CCI present (CCIP) field, may indicate that a CCI field is present, and a value of 0 may indicate that it is not present.

1, a value of a DPS Duration Present (DDP) field, may indicate that a DPS duration field is present, and a value of 0 may indicate that it is not present.

1, a value of a preamble sequence selection present (PSP) field, may indicate that preamble sequence selection fields, i.e., a TX preamble code field, a RX preamble code field and a preamble symbol repetitions (PSR) field, are present, and a value of 0 may indicate that they are not present.

A channel number field may indicate an UWB channel number for forthcoming ranging exchange.

A channel configuration interval (CCI) field may specify a channel configuration interval. A channel configuration interval may correspond to a time in the unit of a ranging scheduling time unit (RSTU) between the transmission of a corresponding IE and reconfiguration for a specified channel.

A RSTU corresponds to 416 chips (approximately 833.33ns) (416 chips = 416 / 499.2*106) for a HRP UWB PHY. A RSTU corresponds to 1 microsecond (us) (= 1 chip at a 1MHz basic chipping rate) for a LRP UWB PHY.

A DPS duration field may specify the effective time duration of DPS. A corresponding duration may be specified in the unit of a RSTU for an ERDEV and in the unit of a symbol for a non-ERDEV.

A TX preamble code field may indicate a DPS preamble code that will be used for transmission during the forthcoming ranging exchange on a side transmitting a corresponding IE.

A RX preamble code field may indicate a DPS preamble code that will be used for reception during the forthcoming ranging exchange on a side transmitting a corresponding IE.

A PSR field may indicate the number of preamble symbol repetitions that will be used for the SYNC of each RFRAME of the forthcoming ranging exchange.

A MLMR-DPS.request and MLME-DPS.confirm primitive may be applied to the optional DPS mode of ranging. The ConfigTime parameter of a MLME-DPS.request primitive may be used to specify a future time to which a preamble code and/or a channel number will be applied. A time to which a DPS change will be applied may be exchanged through the CCI field of a RCPCS IE.

Basic Ranging Exchange

A recipient may turn on or enable ranging in a MAC on a recipient side based on a MLME-RX-ENABLE.request primitive from the next higher layer.

After ranging is turned on in a MAC on a recipient side (i.e., receiving a MLME-RX-ENABLE.request primitive), all received RFRAMEs may generate a TX/RX ranging counter.

An originator may transmit data to a recipient based on a MCPS-DATA.request primitive.

A recipient may generate a ranging report for all RFRAMEs and transmit an ACK frame to an originator.

An originator may enable Tx-to-Rx turnaround (i.e., repeat data transmission and ACK reception) by receiving an ACK frame from a recipient. In this regard, the next higher layer may not be involved.

A ranging report may include the issue of a MCPS-DATA.confirm primitive on an originator side (i.e., reporting the result of invoking a MCPS-DATA.request primitive) and the issue of a MCPS-DATA.indication primitive on a recipient side (i.e., indicating the reception of data from an originator, or indicating that ranging information according to the reception of a packet from an originator is available).

Until ranging is disabled, the generation of the ranging report of a recipient, the transmission of ACK to an originator, the enabling of Tx-to-Rx turnaround based on the reception of the ACK frame of an originator and a ranging report may be repeated.

Ranging Procedure

First, the control of ranging and the transmission (transfer) of results are described.

A measurement value may be exchanged between RDEVs to complete ToF calculation. For this purpose, TWR may be controlled through information elements and ranging data may be exchanged between RDEVs.

Specifically, information elements may be used for the control of TWR and the transmission of ranging data between RDEVs participating in ranging exchange. For various ranging methods, according to a required use case, a measurement result by both devices may be combined to complete TOF calculation between RDEVs participating in ranging exchange. In other words, one device may transmit its ranging measurement result to another device. Information elements may be specified to provide a mechanism for controlling TWR and support the transmission of ranging information between devices participating in ranging exchange. In order to ensure the integrity of corresponding information transmission, a secure private data communication capability may be used.

Hereinafter, a ranging procedure for SS-TWR that applies a deferred reply time result is described.

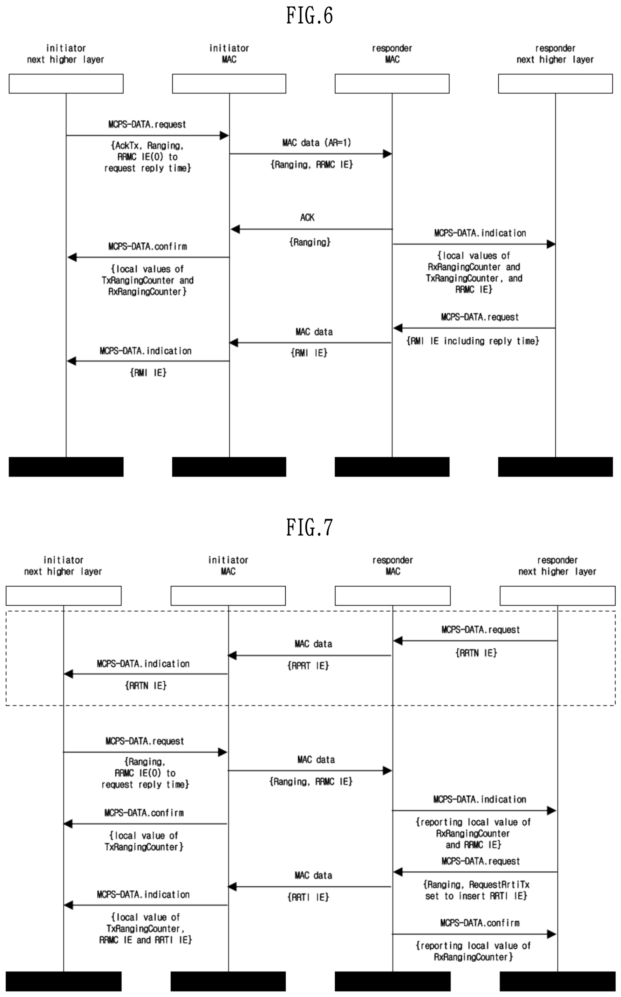

FIG. 6 shows an example of a message sequence chart for SS-TWR applying a deferred reply time result to which the present disclosure may be applied.

In a message sequence chart for ranging exchange, RRMC IE(0) may represent a RRMC IE including a ranging control information field with a value of 0 (i.e., a ranging initiation message for SS-TWR). The Acknowledgment Request (AR) field of a MAC header may represent whether ACK is requested.

The next higher layer of an initiator may have sufficient information for calculating TOF between devices by using the above-described equation at a time when receiving a RMI IE (e.g., FIG. 5(a)).

The ranging exchange initiation of an initiator may invoke a MCPS-DATA.request primitive to request ranging reply time information and transmit a ranging frame including a Ranging Request Measurement and Control (RRMC) information element including a ranging control information field.

FIG. 5(c) shows an example of a RRMC IE format.

A RRMC IE may transmit a ranging request and include information controlling a ranging procedure.

The reply time request, round-trip time request, TOF request, AOA azimuth request and AOA elevation request fields of a RRMC IE format may indicate that corresponding information is requested when that value is 1 and may indicate that corresponding information is not requested when that value is 0.

A ranging control information field may indicate that a corresponding frame is a ranging initiation message for SS-TWR when that value is 0, that a corresponding frame is a response to a ranging initiation message for SS-TWR when that value is 1, that a corresponding frame is a ranging initiation message for DS-TWR when that value is 2 and that a corresponding frame is continuing DS-TWR and initiates the second round-trip time measurement when that value is 3.

A address size field may specify the size of addresses used in a RRMC address list field. When the value of an address size field is 0, all addresses of a RRMC address list element may correspond to a short address. When the value of an address size field is 1, all addresses of a RRMC address list element may correspond to an extended address.

A RRMC address list length field may indicate the number of addresses of a RRMC address list field. When an address is not provided (e.g., for unicast ranging where a target device may be identified by a destination address in a MAC header (MHR)), a RRMC address list length field may be omitted.

When a RRMC IE is a broadcast message, and when a transmitter wants to receive a response to a ranging request from all devices, RRMC address list length and RRMC address list fields may be omitted. Alternatively, when a transmitter wants to receive a response to a ranging request from specific devices (or a device set), RRMC address list length and RRMC address list fields may be used to select a device set for a response.

For SS-TWR, since an initiator generally calculates TOF, a responder may request a TOF result by setting the TOF request field of a RRMC IE included in a response message.

For DS-TWR, since a responder generally calculates TOF, an initiator may request a TOF result by including a RRMC IE in two messages transmitted to perform DS-TWR exchange.

When an initiator requests different information from multiple responders, multiple RRMC IEs may be included in one broadcast message.

A RRMC address list field may include a list of addresses for which a RRMC IE heads.

In relation to a ranging report (or a response ranging frame), an initiator side may complete round-trip time measurement, and a MCPS-DATA.confirm primitive may provide an initiator side with a ranging report defining a round-trip time. On a recipient side, a MCPS-DATA.indication primitive may provide a ranging report on a response side defining a reply time for round-trip time measurement.

FIG. 5(d) shows an example of a Ranging Reply Time Instantaneous (RRTI) IE format.

In association with at least one frame including a RRMC IE where a reply time request field is set as 1, a RRTI IE may be included in a corresponding response frame to transmit the reply time of a response frame.

An address size specifier field may be defined as in the following table.

[Table 1]

| A value of an address size specifier field | Address Size |
|---|---|
| 00 | 0 Octet, no address |
| 01 | Reserved |
| 10 | 2 Octets, short address (16 bits) |
| 11 | 8 Octets, extended address (64 bits) |

A RRTI list length field may indicate the number of elements in a RRTI list field. A RRTI list field may include RRTI list elements.

The RX-to-TX reply time field of a RRTI list field may be set as a value indicating a difference between the transmission time of a response RFRAME including a RRTI IE and a reference time specified by a higher layer (i.e., T_reply in the example of FIG. 4(a)). A reference time may correspond to the reception time (based on RMARKER) of RFRAME including a RRMC IE where a reply time request field is set as 1.

The address field of a RRTI list field may be set as the address of a device transmitting a RRMC IE requesting a reply time. An address field may be omitted in unicast ranging. In scheduled multi-node ranging, when the reply time of other RDEVs are negotiated in advance and the order is determined, an address field may be omitted.

Hereinafter, a ranging procedure for SS-TWR that applies an embedded reply time result is described.

FIG. 7 shows an example of a message sequence chart for SS-TWR applying an embedded reply time result to which the present disclosure may be applied.

For SS-TWR applying a reply time result, ranging exchange may be initiated by a ranging frame requesting ranging reply time information and including a RRMC IE where a ranging control information field is set as 0. A responding device may complete round-trip measurement by transmitting a response frame including an embedded ranging reply time instantaneous (RRTI) IE. When a device has a capability to generate a RRTI IE, the number of messages required for ranging measurement may be minimized, so power may be saved. However, it may take time to calculate the arrival time of a received ranging message and prepare a RRTI IE value. In some cases, this time may be known a priori in an OOB manner, and a ranging reply time negotiation (RRTN) IE may provide a device with a mechanism that indicates a preferred reply time, i.e., a time required to prepare a frame including a RRTI IE. When this time is known, a ranging initiating device may expect a response message after a specific time, and may save energy by delaying turning on a receiver until then. This may be applied to both SS-TWR and DS-TWR ranging exchanges.

In FIG. 7, RRMC IE(0) represents a RRMC IE including a ranging control information field with a value of 0. The communication of a RRTN IE in a box indicated with dotted lines may be performed at any convenient time before ranging exchange is initiated, or preferred reply time information may be pre-known or exchanged through OOB. When receiving a MCPS-DATA.indication primitive including the RRTI IE of a responder, the next higher layer of an initiator may have sufficient information to calculate TOF between two devices according to the above-described equation.

Hereinafter, a ranging procedure for SS-TWR to which a fixed reply time is applied is described.

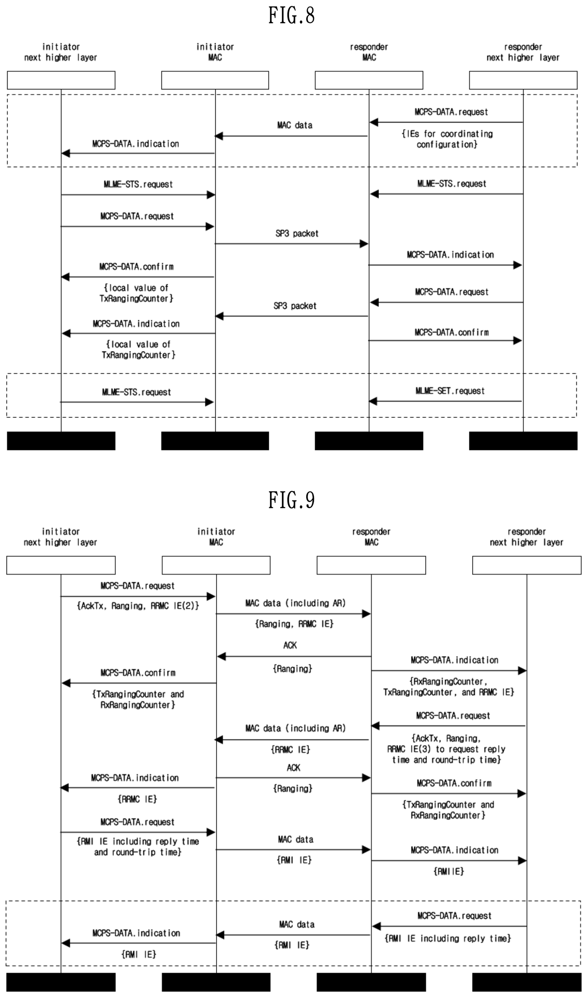

FIG. 8 shows an example of a message sequence chart for SS-TWR using a SP3 (scrambled timestamp sequence packet configuration option three) packet to which the present disclosure may be applied.

When a responding device is capable of precise control over the transmission time of its response message to the arrival time of a ranging initiation message, a reply time (i.e., Treply) may have a fixed known value agreed between devices participating in ranging exchange. In this case, it may not be required to embed Treply in a response message or to transmit it separately in an additional message. The accuracy of resulting ranging may depend on how much precise control a responding device has over the transmission time of its response message. For example, each 1 ns error in TOF may correspond to a ranging error of about 30cm.

HRP-ERDEV PPDU format SP3 may be used for a fixed reply time.

In the example of FIG. 8, an initiation message in a box indicated with dotted lines may represent communication for agreement and coordination for all other parameters required to allow communication to proceed and the use of a SP3 packet between devices. In the example of FIG. 8, only a single message is indicated, but there may be a series of messages in each direction for an agreement on all parameters. For example, a RRNT IE may be used to agree on a fixed reply time.

In each device, the next higher layer may configure a SP3 packet format in all devices, and may appropriately configure an operation by using a MLME-STS.request primitive in order to set a personal area network information base (PIB) attribute (e.g., phyHrpUwbStsKey, phyHrpUwbStsVCounter, phyHrpUwbStsVUpper96, etc.). When a higher layer selects a SP3 packet configuration, subsequent MCPS-DATA primitives are related to a SP3 packet until a higher layer uses a MLME-STS.request primitive to change a packet configuration.

A MCPS-DATA.request primitive may be used to initiate ranging exchange, and in a corresponding mode, a PPDU may not convey MAC data. Although not shown, it may be assumed that the invocation of a MLME-RXENABLE.request primitive turns on a receiver at an appropriate time to receive a PPDU. Since a PHY is configured for a SP3 packet, a PHY may notify a MAC layer of the reception of a PPDU at the end of a scrambled timestamp sequence (STS), and a MAC similarly aware of a SP3 configuration may deliver the RxRangingCounter value of a RangingReportDescriptor parameter of a MCPS-DATA.indication primitive. In addition, when it is assumed that the RangingStsFom of RangingReportDescriptor is acceptable, a higher layer may initiate a response by invoking a MCPS-DATA.request primitive specifying RangingTxTime according to an agreed fixed reply time.

When a SP3 packet response is received in an initiating device, and it is assumed again that the RangingStsFom of the RangingReportDescriptor parameter of a MCPS-DATA.indication primitive is acceptable, an initiator side may have sufficient information to calculate TOF between devices according to the above-described equation based on a known fixed reply time.

Ranging exchange may be repeated multiple times until higher layers are mutually agreed. In order to resume PHY and MAC data interactions, the next higher layer may use a MLME-STS.request primitive to restore a STS packet configuration to a value that allows such data interactions. It is shown in a box indicated with final dotted lines in FIG. 8.

A LRP-ERDEV may also support challenge-response ranging to which a fixed reply time is applied in order to remove the need for a data message to convey a reply time.

Hereinafter, a DS-TWR ranging procedure to which deferred reply time information is applied is described.

FIG. 9 shows an example of a message sequence chart for DS-TWR to which deferred reply time information to which the present disclosure may be applied is applied.

DS-TWR may essentially include the completion of SS-TWR exchange initiated in each device, and a combination of its results. DS-TWR may be initiated by the next higher layer transmitting a ranging data frame conveying a RRMC IE (i.e., RRMC IE(2)) where the value of a ranging control information field is set as 2. This frame and its ACK may define the first round-trip time measurement. The delivery of a RRMC IE in a MCPS-DATA.indication primitive may be notified to the next higher layer to initiate the second round-trip time measurement by the transmission of a data frame in another direction. This data frame may include a RRMC IE (i.e., RRMC IE(3)) where the value of a ranging control information field is set as 3 to indicate the continuation of exchange, and both reply time request and round-trip time request fields may be set as 1 to request a reply time and the result of the first round-trip time measurement. ACK for this message may complete the second round-trip time measurement. A subsequent message from an initiator may convey the first round-trip time measurement result and the reply time of the second round-trip time measurement through a RMI IE. When receiving a MCPS-DATA.indication primitive (including a RMI IE), a responder may have sufficient information to calculate TOF between devices according to the above-described equation. The subsequent reporting of a ranging result to an initiator side by using a RMI IE may be performed according to the value of the TOF request field of an initiating RRMC IE.

Hereinafter, a DS-TWR ranging procedure that applies embedded ranging time information is described.

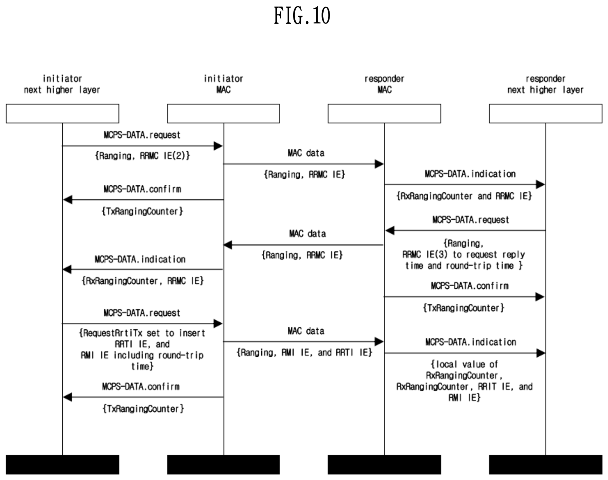

FIG. 10 shows an example of a message sequence chart for DS-TWR to which embedded ranging time information to which the present disclosure may be applied is applied.

For 3-message DS-TWR exchange in FIG. 4(c) described above, it is required that an initiator side may embed a reply time as a part of the completion of the second round-trip time measurement. In the example of FIG. 10, DS-TWR may be initiated by RFRAME conveying a RRMC IE (i.e., RRMC IE(2)) where a TOF request field is set as 0 (i.e., an initiator side does not request ranging report) and a ranging control information field is set as 2.

A responder side may complete the first round-trip time measurement, and initiate the second measurement by using RFRAME conveying a RRMC IE (i.e., RRMC IE(3)) where a ranging control information field is set as 3 to indicate the continuation of exchange. In this RRMC IE, both reply time request and round-trip time request fields are set as 1, so the result of the first round-trip time measurement and a reply time for the second round-trip time measurement may be requested. An initiator may complete exchange by transmitting a final RFRAME that includes the result of the first round-trip time measurement in a RMI IE and the reply time of the second round-trip time measurement in a RRTI IE.

When receiving the MCPS-DATA. indication primitive that is a higher layer, a responder may have sufficient information to calculate TOF between devices according to the above-described equation. When the initiator of ranging exchange wants a corresponding result, an initiator may set the TOF request field of an initiating RRMC IE as a value requesting a responder side to send a result in the RMI IE of a subsequent message at the end of the exchange.

Hereinafter, a different procedure for the coordination of a RDEV and an ERDEV will be described.

For the successful interoperation of a HRP-ERDEV when a STS is used, a transmitter and a receiver need to be arranged for a seed (i.e., a STS key and data value V) used in the generation of a STS in a transmitter and used in the generation of a sequence for correlating with a STS received in a receiver. For the coordination of these values, a secure private data communication capability may be used, and a seed may be transmitted between devices by using a Ranging STS Key and Data (RKSD) IE. A counter value in a RSKD IE may relate to a current packet or a future packet as indicated by the current packet (CP) field of a corresponding IE. A higher layer may use received RSKD IE information and configure a STS seed appropriately for future packet transmission and reception (e.g., through a PIB attribute such as phyHrpUwbStsKey, phyHrpUwbStsVUpper96, phyHrpUwbStsVCounter, etc.). The header IE version of a RSKD IE may be used to synchronize a STS generator by using information transmitted with a secured payload IE and data.

When a frame including a RSKD IE header IE is received, a corresponding IE may be delivered to the next higher layer to set an attribute such as phyHrpUwbStsKey, phyHrpUwbStsVUpper96, phyHrpUwbStsVCounter, etc. appropriately for STS generation. When a frame including a RSKD IE header IE does not pass the incoming security processing, for example, when a receiver does not have a key to validate a message integrity code (MIC), a RSKD IE may be delivered to the next higher layer through the HeaderIeList parameter of a MLME-COMM-STATUS.indication primitive.

Multi-node Ranging

Multi-node ranging may include ranging between at least two devices. Each device may perform a role in multi-node ranging.

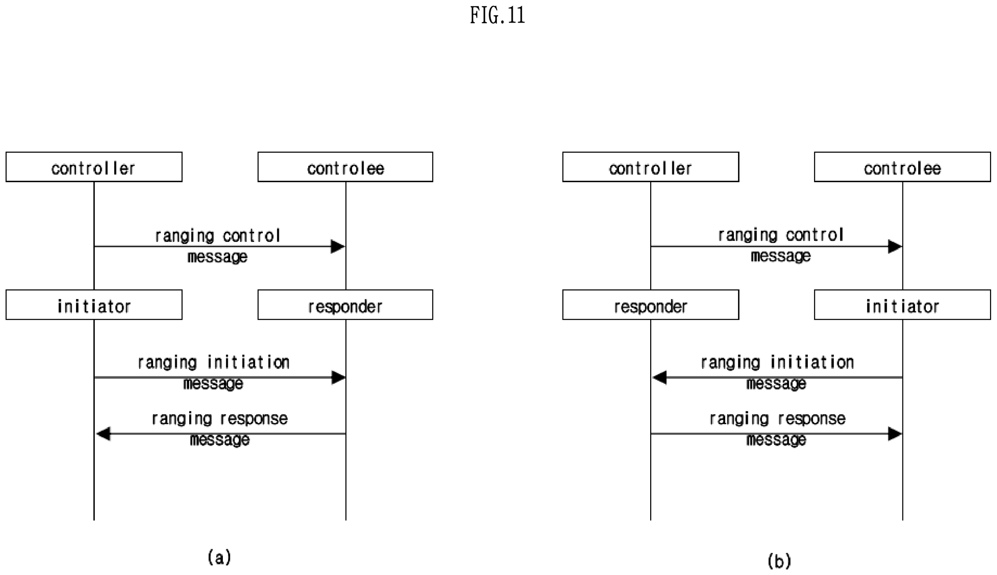

FIG. 11 is a diagram for describing the role of a device in a ranging procedure to which the present disclosure may be applied.

A controller may correspond to a ERDEV that transmits a ranging control message (RCM) and defines a ranging parameter. A RCM may correspond to a data frame including an advanced control (ARC) IE. A controlee may correspond to an ERDEV that uses a ranging parameter provided by a controller through a RCM. An initiator corresponds to an ERDEV that sends the first message of ranging after a RCM and initiates ranging exchange, and a controller or a controlee may be an initiator. A responder corresponds to an ERDEV that responds to a ranging initiation message received from an initiator, and a controller or a controlee may be a responder.

The next higher layer of a controller may determine a ranging parameter and the role of an ERDEV participating in ranging exchange (i.e., an initiator or a responder).

For example, FIG. 11(a) shows an example in which a controller transmitting a ranging control message (RCM) is an initiator transmitting a ranging initiation message in ranging exchange and a controlee receiving a RCM is a responder receiving a ranging initiation message and transmitting a ranging response message in ranging exchange. FIG. 11(b) shows an example in which a controller transmitting a RCM is a responder receiving a ranging initiation message and transmitting a ranging response message in ranging exchange and a controlee receiving a RCM is an initiator transmitting a ranging initiation message in ranging exchange.

A ranging session may be defined as a group of ERDEVs involved in a consecutive ranging procedure configured by the initial set of a ranging parameter. A ranging session may include only one controller and at least one initiator. A controller may configure an initial ranging parameter and update a parameter during a ranging session.

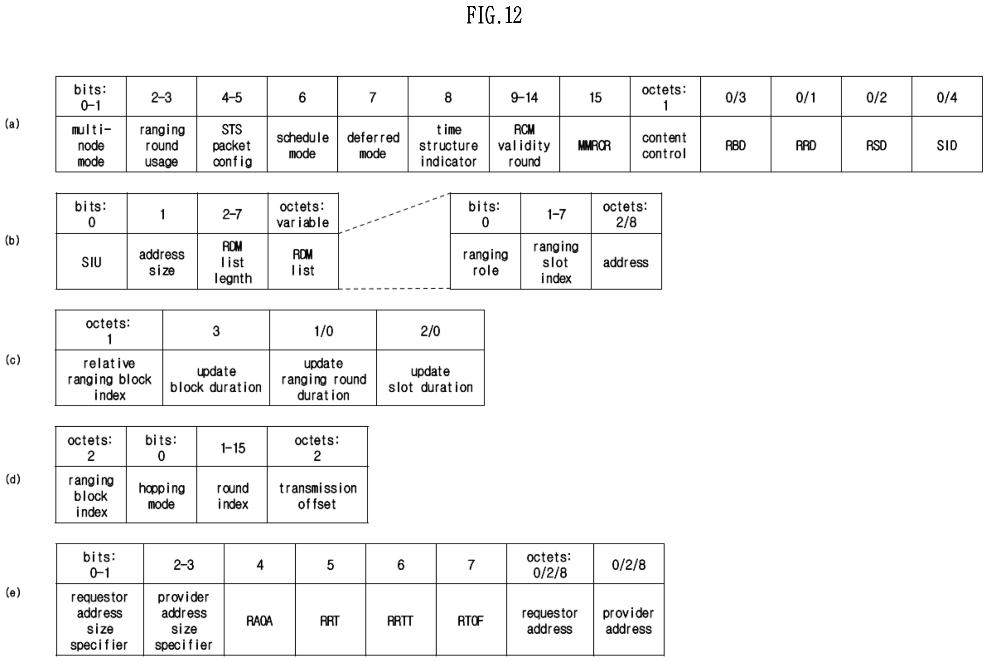

FIG. 12 shows examples of ARC IE, RDM IE, RBU IE, RR IE and SRRE IE formats to which the present disclosure may be applied.

FIG. 12(a) shows an example of a ARC IE format.

A controller may use an ARC IE to transmit ranging configuration information to a controlee. An ARC IE may be transmitted to one controller through a unicast frame and to a plurality of controllers through a broadcast frame.

A controlee may use an ARC IE to transmit its preferred ranging parameter to a controller together with a Ranging Change Request (RCR) IE.

Each field of an ARC IE may be defined as follows.

[Table 2]

| Value of multi-node mode field | Meaning |
| --- | --- |
| 0 | Single device-to-single device (unicast) |
| 1 | Multi-node one-to-many |
| 2 | Multi-node many-to-many |
| 3 | Reserved |

[Table 3]

| Value of ranging round usage field | Meaning |
| --- | --- |
| 0 | OWR(one-way ranging) |
| 1 | SS-TWR(single-sided two-way ranging) |
| 2 | DS-TWR(double-sided two-way ranging) |
| 3 | Ranging ancillary information exchange |

[Table 4]

| Value of STS packet configuration field | Resulting STS packet configuration |
| --- | --- |
| 0 | A STS field is not included in a PPDU (FIG. 3(a)). |
| 1 | STS Packet Structure #1 (FIG. 3(b)) |
| 2 | STS Packet Structure #2 (FIG. 3(c)) |
| 3 | **STS Packet** Structure #3 (FIG. 3(d)) |

[Table 5]

| Value of a schedule mode field | Selected ranging schedule mode and operation |
| --- | --- |
| 0 | Contention-based ranging is used for subsequent ranging rounds, and a RDM IE and a RCPS IE are used for control participation. |
| 1 | Scheduled-based ranging is used for subsequent ranging rounds, and participation in ranging and time slot allocation is fixed or controlled through the use of a RDM IE. |

A contention-based ranging type corresponds to a method in which a controller is unaware of the presence or number of controlees and accordingly, ERDEVs perform ranging in a contention-based manner. A collision may occur, so it may be required to filter an incorrect or wrong ranging result from a higher layer. An initiator or a responder may compete to perform transmission within an appropriate time slot. When an initiator and a responder compete, a ranging contention phase structure (RCPS) IE may be added to an ARC IE to designate a different phase (e.g., distinguished through a slot index) in a RCM. When a RCM is received, a controlee may know that it was selected to participate in a ranging round. A time-scheduled ranging type corresponds to a method in which a controller knows all controlees and designates the exact schedule of ranging transmission. A controller may select devices participating in ranging, give a ranging role (i.e., an initiator or a responder) and allocate a time slot through a ranging device management (RDM) IE. If the role and transmission schedule of a device are pre-designated by an OOB signaling method, etc., a RDM IE may be omitted.

[Table 6]

| Value of deferred mode field | Whether a deferred mode is allowed in measurement report |
| --- | --- |
| 0 | The round-trip measurement is completed immediately by embedding a RRTI IE in a response frame. |
| 1 | The round-trip time or reply time is reported in a measurement report phase. |

[Table 7]

| Value of time structure indicator field | Selected ranging time structure operation |
| --- | --- |
| 0 | A time structure is interval-based, and a RIU IE is used to control ranging interval update. |
| 1 | A time structure is block-based, and a RR IE is used to control ranging interval update. |

A RCM validity rounds field indicates the number of consecutive ranging rounds controlled by a RCM, which may be used to define a ranging round set. A multiple message receipt confirmation request (MMRCR) field may indicate whether multiple message receipt confirmation is requested.

A content control field may represent whether other fields are present in an ARC IE. Bits 0, 1, 2 and 3 of a content control field correspond to a field indicating whether a ranging block duration (RBD) field is present (i.e., RBDP), a field indicating whether a ranging round duration (RRD) field is present (i.e., RRDP), a field indicating whether a ranging slot duration (RSD) field is present (i.e., RSDP) and a field indicating whether a session ID field is present (i.e., SIP), respectively. Bits 4-7 of a content control field may be reserved.

A RBD field may indicate the duration (RSTU unit) of a ranging block.

A RRD field may indicate the duration of a ranging round (a ranging slot unit, i.e., the number of ranging slots in a ranging round).

A RSD field may indicate the duration (RSTU unit) of a ranging slot.

A SID field may indicate a unique identifier for each controller.

When a ranging block structure is the same as a previously specified duration, at least one of the duration fields (e.g., a RBD field, a RRD field, a RSD field) may not be present in the ACI IE of a current RCM. Even in this case, other fields (e.g., a schedule mode field, a STS packet configuration field, etc.) may be used to update a corresponding ranging parameter.

FIG. 12(b) shows an example of a ranging device management (RDM) IE format.

A RDM IE may be used to exchange scheduling information between ERDEVs for a set of ranging rounds designated in a RCM with the same controller.

A slot index usage (SIU) field may indicate whether to use the slot index of a RDM list element. When a value thereof is 0, a RDM IE may be used to allocate a ranging role (i.e., an initiator or a responder) to controlee(s) for contention-based ranging. When a value thereof is 1, a RDM IE may be used to allocate a time slot and allocate a ranging role to controlee(s) for scheduling-based ranging.

An address size field represents the size of an address used for a RDM list field, and 0 may indicate that a short address (16 bits) is used and 1 may indicate that an extended address (64 bits) is used.

A RDM list length field may indicate the number of RDM list elements.

The ranging role field of a RDM list may indicate an initiator or a responder. The ranging slot index field of a RDM list may indicate a slot index allocated to the device of a corresponding address. The address field of a RDM list may indicate the address of each device participating in ranging.

FIG. 12(c) shows an example of a ranging block update (RBU) IE format.

A RBU IE may be used by a controller to notify controlee(s) of an updated ranging block structure.

A relative ranging block index field may indicate the number of residual ranging blocks according to a current configuration before switching to a new configuration.

An updated block duration field may indicate the duration (RSTU unit) of a new ranging block.

An updated ranging round duration field may indicate a ranging round duration value that is an integer multiple of a ranging slot duration within a new ranging block structure.

An updated ranging slot duration may indicate the duration (RSTU unit) of a ranging slot within a new ranging block structure.

FIG. 12(d) shows an example of a ranging round (RR) IE format.

A ranging block index field may indicate the index of a ranging block.

A hopping mode field may indicate whether a hopping mode is supported for a ranging block.

A round index field may indicate a ranging round index within a ranging block.

A transmission offset field may indicate the value (RSTU unit) of the transmission offset of a ranging round within a block. A transmission offset may have a value obtained by subtracting a packet duration from the maximum value of a slot duration as the maximum value.

For a current ranging round (i.e., a ranging round in a ranging block with a block index of i), a RR IE may be included in the RCM of a ranging block with a block index of i. In this case, a RR IE may correspond to information that an ERDEV supports synchronization for a block structure.

For the next ranging round (i.e., a ranging round in the next ranging block with a block index of i+1), when the last message of a current ranging round (i.e., a ranging block with a block index of i) is transmitted from a controller to controlee(s), a RR IE may be transmitted in a final message to indicate ranging round information for a ranging block with a block index of i+1.

When the last message in a current ranging round (i.e., a ranging block with a block index of i) is transmitted from a controlee, a controller may transmit a RR IE in the RCM of the next ranging block with a block index of i+1 to indicate ranging round information for a ranging block with a block index of i+2.

In this case, a RCM in a ranging block with a block index of i+1 may include two RR IEs. One RR IE may be applied to the ranging round of a ranging block with a block index of i+1, and the other RR IE may be applied to the ranging round of a ranging block with a block index of i+2.

FIG. 12(e) shows an example of a SP3 ranging request reports (SRRR) IE format.

A SRRR IE may be used to request the report of AOA and/or reply time and/or round-trip time measurement from a requestor to a provider.

Each of a requestor address size specifier field and a provider address size specifier field may have a value of 00, 01, 10 and 11 as in Table 1 described above, and may indicate that an address is not present or that a short address (16 bits) or an extended address (64 bits) is used.

A report of AOA (RAOA) field may indicate whether report on AOA is requested.

A report of reply time (RRT) field may indicate whether report on a reply time is requested.

A report of round-trip time (RRTT) field may indicate whether report on a round-trip time is requested.

A report of TOF (RTOF) field may indicate whether report on TOF is requested.

A requestor address field may be set as the address of a device transmitting a signal where AOA is measured or initiating ranging.

A provider address field may be set as the address of a device measuring AOA.

Ranging Block and Round Structure

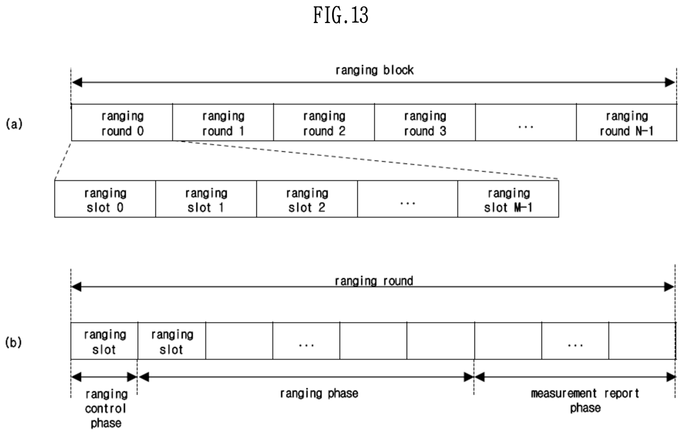

FIG. 13 is a diagram for describing a ranging block structure and a ranging phase to which the present disclosure may be applied.

In FIG. 13(a), a ranging block is a time duration for performing ranging, and one ranging block may include N ranging rounds.

A ranging round corresponds to a sufficient time for ERDEVs participating in ranging exchange to complete a ranging measurement cycle, and one ranging round may include M ranging slots.

A ranging slot may correspond to a time sufficient for transmission of at least one RFRAME.

The number of slots included in a slot duration and a ranging round may be different between ranging rounds. To this end, a controller may transmit a RCM that changes a ranging round configuration to controlee(s).

A ranging control message (RCM) is the first message transmitted by a controller, and may be transmitted in the first slot of a ranging round. A RCM may include configuration information for a ranging parameter.

A ranging control update message (RCUM) corresponds to a message transmitted by a controller in the last slot of ranging round(s) designated by a RCM in order to update a ranging parameter for the next ranging round(s). IE(s) included in a RCM for updating a ranging parameter may be included in a RCUM.

A ranging interval update message (RIUM) corresponds to a message transmitted by a controller to update an interval between ranging blocks and help synchronization between participating ERDEVs. A RCUM may include the scheduled time of the first RIUM, and a RIUM may include the scheduled time of the next RIUM (if used) before the start of the next ranging block.

FIG. 13(b) describes phases in a ranging procedure.

A ranging control phase (RCP) corresponds to a phase where a controller transmits a RCM.

A ranging phase (RP) may include a ranging initiation phase (RIP), a ranging response phase (RRP) and a ranging final phase (RFP).

A RIP corresponds to a phase where an initiator transmits ranging initiation message(s) to responder(s).

A RRP corresponds to a phase where responder(s) transmits response message(s) to an initiator.

A RFP corresponds to a phase where an initiator transmits ranging final message(s) to a responder, and may be used only in DS-TWR.

A measurement report phase (MRP) corresponds to a phase where participating ERDEVs exchange service information related to ranging measurement.

A ranging control update phase (RCUP) corresponds to a phase where a controller transmits a RCUM, and when a RCUP exists, a corresponding phase may be located in the last slot of the set of ranging rounds designated by a RCM.

A ranging interval update phase (RIUP) corresponds to a phase where a controller transmits a RIUM.

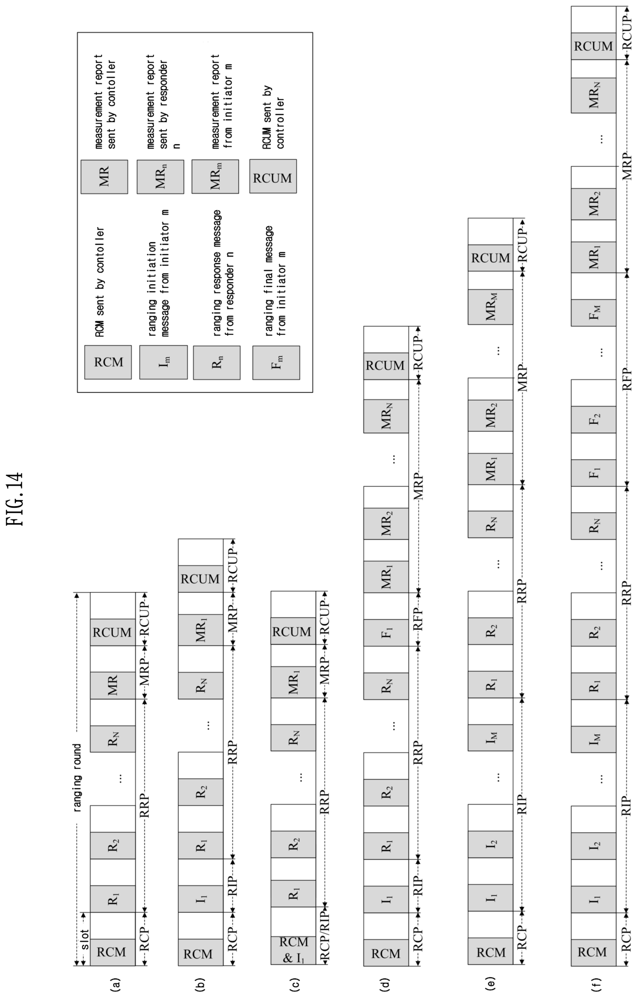

FIG. 14 shows examples of a timing diagram for various multi-device ranging to which the present disclosure may be applied.

FIG. 14(a) corresponds to the example of OWR, FIG. 14(b) corresponds to the example of SS-TWR, FIG. 14(c) corresponds to the example of the combination of a RCP and a RIP in SS-TWR, FIG. 14(d) corresponds to the example of DS-TWR, FIG. 14(e) corresponds to the example of many-to-many SS-TWR and FIG. 14(b) corresponds to the example of many-to-many DS-TWR.

Hereinafter, a ranging mode is described.

In an interval-based mode, the average time of ranging rounds is variable, and a time structure may be applied with adaptive spacing.

In a block-based mode, the average time of ranging rounds is constant. In other words, a ranging block with the same duration may be repeated in a block-based mode.

Ranging mode selection may be determined based on a time structure indicator field within an ARC IE or an OOB mechanism.

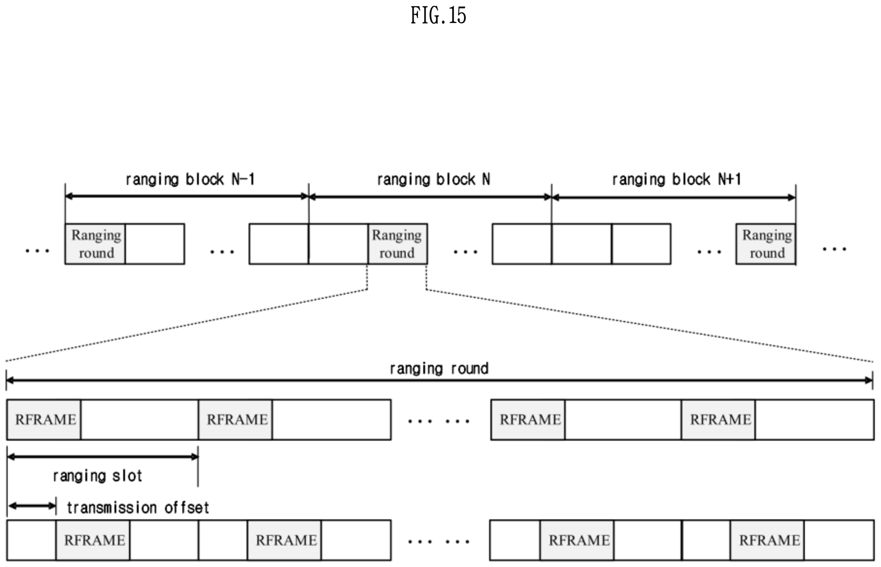

FIG. 15 shows a timing diagram in an example of a block-based mode to which the present disclosure may be applied.

In a block-based mode, a ranging block structure may use a structured timeline. A ranging block structure setup may include designating a ranging block duration (RBD), a ranging round duration (RRD) and a ranging slot duration (RSD) based on the corresponding field of an ARC IE.

The number of ranging rounds corresponds to a value obtained by dividing a ranging block duration by a ranging round duration.

The number of ranging slots corresponds to a value obtained by dividing a ranging round duration by a ranging slot duration.

An ERDEV receiving a RCM may set an associated timeline for ranging based on the value of fields in an initial ranging block structure and an ARC IE. A ranging block structure may be set up and/or fixed by the next higher layer.

A ranging block structure may be transmitted repeatedly by a controller for each RCM (e.g., through an ARC IE). When the change or update of a ranging block structure (i.e., a new ranging block duration, ranging round duration and/or ranging slot duration) is required, a controller may transmit a RBU IE for a new configuration. A RBU IE may be transmitted through a final data frame in a ranging message sequence or a RCM. Whenever a RBU IE is transmitted, a controller may decrease a relative ranging block index one by one until it becomes 0. Accordingly, it may be indicated whether a new configuration will be used in the next block and whether the RCM ARC IE of the next block includes a new configuration.

Hereinafter, indexing is described.

For a ranging block, a block index is given as 0 for the first ranging block, and a relative block index is determined for the remaining blocks by using block index 0 as a reference.

For a ranging round, when N ranging rounds are included in one ranging block, a round index is given as 0 for the first ranging round in a current ranging block, and a relative round index (e.g., 1, ..., M-1) is determined for the remaining N-1 rounds by using round index 0 as a reference.

For a ranging slot, when M ranging slots are included in one ranging round, a slot index is given as 0 for the first ranging slot in a current ranging round, and a relative slot index (e.g., 1, ..., M-1) is determined for the remaining M-1 slots by using slot index 0 as a reference.

The new ranging message exchange may be transmitted/received as the first RCM in the ranging slot with index 0 of the ranging round with index 0 of a ranging block with index 0. In other words, a RCM packet may be transmitted at the start of the first ranging slot of the first ranging round. A RCM may include a RR IE to inform information associated with ranging rounds within a current ranging block.

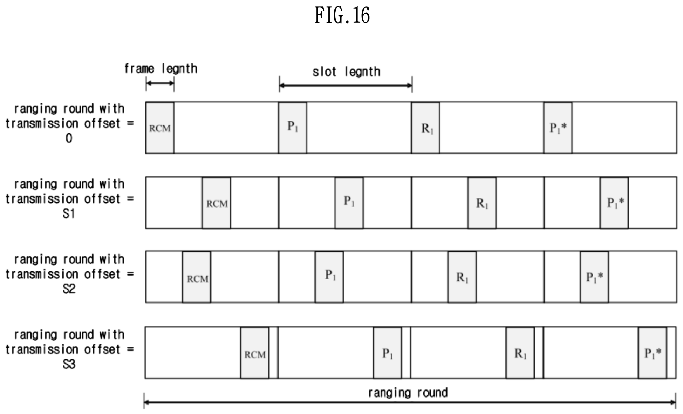

FIG. 16 is a diagram for describing examples of various transmission offsets to which the present disclosure may be applied.

A RR IE included in a RCM may include transmission offset information as information associated with a ranging round within a current ranging block. In subsequent ranging rounds, a controller may start transmission in each slot based on a different transmission offset. A transmission offset may have a value obtained by subtracting an UWB packet duration from a ranging slot duration. A transmission offset may be expressed as a multiple of a RSTU.

A transmission offset may be applied to a ranging round. In other words, the same transmission offset may be applied to all packet transmissions included in the same ranging round. In the next higher layer of a controller, a transmission offset may be selected and communicated to all other devices through a RR IE. A controller may also change a transmission offset for each ranging round based on power that reduces interference.

One-to-many Ranging Procedure

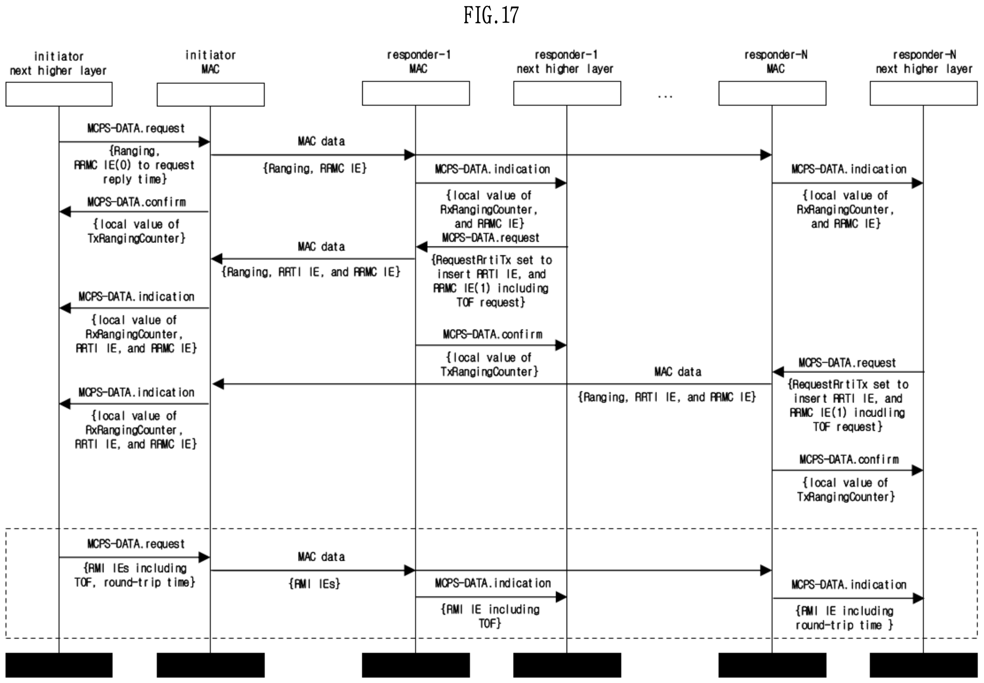

FIG. 17 shows an example of a message sequence chart for one-to-many SS-TWR to which the present disclosure may be applied.

In a ranging procedure for one-to-many TWR, ranging exchange may be initiated by an initiator transmitting a RRMC IE, and a RRMC IE may be included in a ranging initiation message broadcast to multiple responders.

A RRMC IE where a ranging control information field is set as 0 (i.e., RRMC IE(0)) may be transmitted as a SS-TWR ranging initiation message. The reply time request field of a RRMC IE may be set as 1 to request a reply time from a responding ERDEV.

A RRMC IE delivered through a MCPS-DATA.indication primitive from each of the responder-1 to responder-N may give a signal to the next higher layer that must perform a ranging response. Each responder may insert a RequestRrtiTxList parameter into a RRTI IE (as a response to the reply time request of a RRMC IE) and transmit a RRMC IE where a ranging control information field is set as 1 (i.e., RRMC IE(1)) to an initiator. Here, responding RFRAMEs may be transmitted to an initiator in a unicast manner.

When an initiator receives each ranging response frame, an initiator may have sufficient information to calculate the TOF of a corresponding responder.

The final message broadcast by an initiator may include at least one RMI IE(s) for measurement report (when requested by a RRMC IE). A plurality of RMI IEs may be distinguished by a device associated by an address field. For example, responder-1 may set a TOF request field in a RRMC IE as 1, and responder-N may set a round-trip time request field in a RRMC IE as 1. When multiple responders request the same information set like TOF, measurement report from an initiator may be performed through one RMI IE within a final data message.

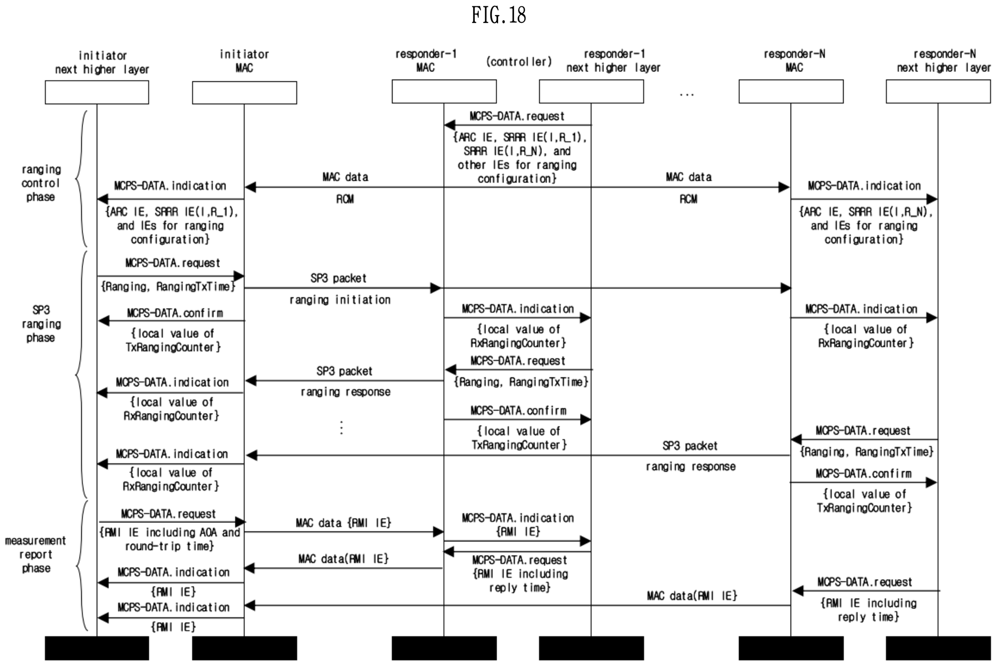

FIG. 18 shows an example of a message sequence chart for SP3 one-to-many SS-TWR to which the present disclosure may be applied.

At the start of a ranging round, a RCM may transmit ranging configuration information and an IE related thereto. A SRRR IE (I, R_1) may set RAOA and RRTT fields as 1 when responder-1 requests AOA and round-trip time from an initiator side.

Multi-node SP3 ranging may be based on scheduling designated by the next higher layer of a controller (i.e., each time slot is allocated to be used in a specific ERDEV).

A RDM IE in a RCM may include information that allocates time slots and device roles within a ranging round. An ARC IE may designate a ranging procedure and a SP3 packet format to make the next higher layer of an ERDEV to recognize the start and end of a SP3 ranging phase and invoke a MLME-STS primitive for enabling/disabling a SP3 packet before/after a ranging phase.

A RSKD IE for exchanging the parts of a STS seed for initializing STS generation between participating ERDEVs may be included in a RCM. According to the scheduling information of ranging transmission, the STS counter value of participating ERDEVs may be appropriately set for transmitting and receiving SP3 packets.

In a SP3 ranging phase, the next higher layer may appropriately set an operation on both sides by using MLME-STS.request to select a SP3 packet format and may set correct values for phyHrpUwbStsKey, phyHrpUwbStsVUpper96 and phyHrpUwbStsVCounter attributes. Since ranging scheduling is designated by a RCM preceding SP3 ranging, a device already knows a participant. Each time slot may be allocated to a specific (E)RDEV.

In a measurement report phase, an initiator may transmit AOA and round-trip time to responder-1 through a RMI IE. Responder-1 to responder-N may embed a requested reply time into a RMI IE sent to an initiator, respectively.

As another example, in the SP3 ranging phase of a message sequence for SP3 one-to-many DS-TWR, after receiving a SP3 frame as a ranging response message from each responder, an initiator may transmit a SP3 frame as a ranging completion message to each responder, through which the local value of an initiator's TxRangingCounter may be delivered to each responder. In a measurement report phase, an initiator may transmit a RMI IE including a reply time and a round-trip time to responders, and for this, each responder may transmit a RMI IE including AOA to an initiator.

Narrowband Assisted (NBA)-UWB

In terms of MAC, NBA-UWB may be viewed as an umbrella feature including multiple semi-independent features. All of these features share some common principles, and among them, the most important thing is that tight clock synchronization exists between narrowband (NB) and UWB. A NB PHY and a UWB PHY should be driven by the same clock, and accordingly, an additional work may not be required to determine relative accuracy. When the same clock is not applied to a NB PHY and a UWB PHY, an explicit requirement for relative clock drift/accuracy between different PHYs/radios may be necessary. Based on tight coupling between NB and UWB, the following various features may be considered for UWB.

- Initialization Channel: An initialization channel may correspond to a NB channel used for UWB channel discovery. The NB wireless technology may be used as a pilot for providing an additional CCA mode for UWB to the IEEE 802.15.4 series standard. Meanwhile, a control channel is distinct from an initialization channel, and about 300 NB channels may be defined for a control channel.
- Multi-millisecond (MMS) UWB (including security MMS): In MMS-UWB, data exchange and obtaining of carrier frequency offset(CFO)/sampling frequency offset(SFO) may be offloaded to a NB PHY. It may enable ToF accuracy refinement and link budget refinement.
- NBA-TDOA: Link budget refinement and energy saving may also be applied to NBA-TDOA.
- NBA-Sensing: NB may be applied to data exchange required for multi-static sensing.

There may be some common elements that may be reused for these features, and in addition, a unique requirement for each feature may exist. Given that a NBA-UWB system may operate in a populated multi-user scenario, it is important to support coexistence/interference for both NB and UWB. The matters related to the NB wireless technology may include duty-cycle optimization, channelization, frequency hopping, blocked channel list agreement and listen-before-talk (LBT) techniques. Ranging session definition and a PHY level parameter also need to be specified. A MAC service may provide an open interface to deliver schedules, initial timing and frequency synchronization and deliver configuration information obtained from an assistance NB to a UWB operation. The MAC may be defined to provide a clear and generic baseline for various use cases. Since each application may have a different requirement, it may be desirable to focus on common elements between specific applications, instead of trying to find a resolution suitable for all cases.

A PHY may include an additional and/or refined technology to enable NBA-UWB-based features defined in MAC. In particular, details for the O-QPSK (offset-quadrature phase shift keying) of the IEEE 802.15.4 series standard, UWB, etc. may include some modifications and refinements to the PHY aspect of NBA-UWB. Alternatively, PHYs different from O-QPSK may also assist UWB by utilizing an open interface provided by a MAC service.

Since O-QPSK supports good link budget and efficient implementation, it may provide a very good baseline for the NB aspect of UWB. A 250kbps mode (or a 250k mode) may be applied as a main element in the relatively optimized airtime. Exemplary refinements for O-QPSK are as follows.

- In addition to a 2450MHz band defined in the existing IEEE 802.15.4 standard, a new band such as Unlicensed National Information Infrastructure(UNII)-3, UNII-5, etc. may be used.
- Channelization for this band may enable reduced airtime for frequency-hopping and other services. It may reduce a preamble length and increase a data rate.
- A requirement for clock accuracy may be defined.
- Convolutional channel coding using a predefined generator polynomial may be applied, and low-density parity-check code (LDPC) coding may also be optionally applied.

For clock accuracy, an additional NB mode may be arranged with UWB. The carrier frequency and chipping rate frequency of HRP UWB must be derived from the same reference oscillator, and must have accuracy within +20ppm to -20ppm or better. In order to utilize the features of NBA-UWB, a similar optional mode for O-QPSK may be defined.

As an O-QPSK-based PPDU format, PPDU configuration(config)-1, PPDU configuration-2, or PPDU configuration-3 may be applied. As described by referring to FIGS. 2 and 3, a PPDU may basically include a preamble, a SFD, a PHR and a payload. PPDU configuration-1 may provide a baseline for a data rate of 250kbps, and other PPDU configurations may be optionally defined for optimized tradeoff between airtime and a link budget. In addition, 1 chip may have a duration of 0.5us and 1 symbol may carry 4 bits (e.g., when forward error correction (FEC) is applied, 4 bits may correspond to coded bits). Meanwhile, the number of chips within 1 symbol may be referred to as a spreading factor (SF).

For example, for a 10-byte-sized PSDU payload, a data rate according to a PPDU configuration and the length of each field are as follows.

- PPDU Configuration-1: Data Rate = 250kbps, Preamble Length = 128us, SFD Length = 32us, PHR Length = 32us, Payload Length = 320us, Entire Packet Duration = 512us
- PPDU Configuration-2: Data Rate = 500kbps, Preamble Length = 64us, SFD Length = 32us, PHR Length = 28us, Payload Length = 172us, Entire Packet Duration = 296us (A rate-1/2 convolution code is applied to both a PHR and a payload, a PHR carries 28(=(8+6)*2) coded bits, and a payload carries 172(=(80+6)*2) coded bits.)
- PPDU Configuration-3: Data Rate = 1000kbps, Preamble Length = 64us, SFD Length = 32us, PHR Length = 28us, Payload Length = 80us, Entire Packet Duration = 204us

Both out-of-band (OOB) signaling and in-band signaling may be used to indicate a NB configuration. For OOB signaling, a SFD may have a format as in a table below.

[Table 8]

| Bit: 0 | 1 | 2 | 3 | 4 | 5 | 6 | 7 |
|---|---|---|---|---|---|---|---|
| 1 | 1 | 1 | 0 | 0 | 1 | 0 | 1 |

For in-band signaling, SFDs may be used to indicate different NB configurations as in a table below.

[Table 9]

| SFD | NB Configuration #, Data Rate |
|---|---|
| 11100101 | #1, 250 kbps |
| 1 0 0 0 1 0 1 0 | #2, 500 kbps |
| 01001001 | #3, 1000 kbps |
| 00101011 | #4, 250 kbps |
| 1 0 1 0 0 0 0 1 | #5, 1000 kbps |

The starting point of a NBA-UWB PHY may be a UWB PHY. For example, a no-data packet format for refining a link budget has already been defined. MMS UWB may include the extension of a no-data packet for further refining a link budget and ToF accuracy. In a corresponding packet format, a short fragment having at least a millisecond of start-to-start spacing may exist, and the entire packet may have a length across a plurality of fragments. 1 millisecond may correspond to 499200 chips.

A MMS UWB packet may include a plurality of fragments divided into two types: a ranging sequence fragment (RSF) and a ranging integrity fragment (RIF).

First, a RSF is described.

- Each RSF may include repetition of a selected MMS ranging sequence (MMRS). One common MMRS may be used in all RSFs.
- 16 complementary sets-based MMRS sequences of length-128 may be defined. Each element of a sequence may be indicated as + or -. Code indexes 33, 34, ..., 48 may be allocated to each of the 16 MMRS sequences. Each MMRS sequence may be separated into two parts [A, B]. A and B may have a length of 64, respectively. Gap G consisting of 0 to 64 zero values may be added to configure a MMRS having a gap such as [A, G, B, G].
- As a MMRS, ternary codes of length-91 and length-127 (e.g., a code defined in the IEEE 802.15.4z standard) may be optionally applied. The use of these ternary codes may cause more interference to a neighboring legacy device compared to the above-described length-128 MMRS.

- Spreading factor L=4 may be applied to a MMRS with or without a gap before repetition within one RSF.

Next, a RIF is described.

- Each RIF may carry the waveform of pulses modulated in a pseudo-random way for ranging integrity. An existing STS may be applied as a baseline for this waveform.
- A RIF may include one STS segment to which spreading factor L=4 is applied. Each STS segment may have the same length.
- The polarity of all STS pulses in all RIFs within one MMS UWB packet may be generated by using a deterministic random bit generator (DRBG) based on AES-128 in a counter mode.

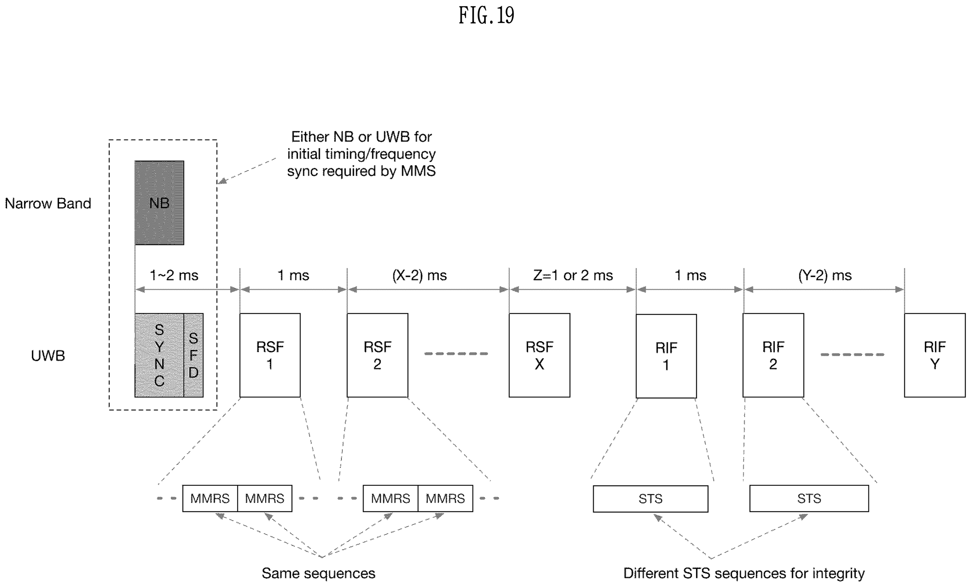

FIG. 19 is a diagram representing an example of a MMS packet to which the present disclosure may be applied.

An example in FIG. 19 represents an example of a generic MMS packet to which NB assistance is or is not applied. An allowable configuration for X, Y and Z indicated in FIG. 19 is described in detail below.

In each RSF, a MMRS symbol is generated first, and then a corresponding MMRS symbol may be repeated N_MSR times. One MMRS symbol may be generated as follows.

When a MMRS is used based on a complementary set, MMRS symbol S'=[A', G', B', G'] may be obtained by determining a MMRS that does not include a gap in step-1, i.e., [A, B] (here, A and B are a sequence of length-64, respectively); obtaining a MMRS that determines gap G and includes a gap in step-2, i.e., S=[A, G, B, G]; and applying spreading using spreading factor L=4 in step-3.

When an Ipatov sequence is used for a MMRS, MMRS symbol S' may be obtained by determining Ipatov sequence S in step-1; and applying spreading using spreading factor L=4 in step-2.

N_MSR, the number of MMRS repetitions within each RSF, may be configured as one value of the set {32, 40, 48, 64, 128, 256}. A small value of N_MSR may be advantageous for coexistence due to short active transmission, and a large value of N_MSR may be advantageous for the entire energe use even without a high-performance power amplifier (PA). The value of N_MSR may be the same in all RSFs within one MMS packet.

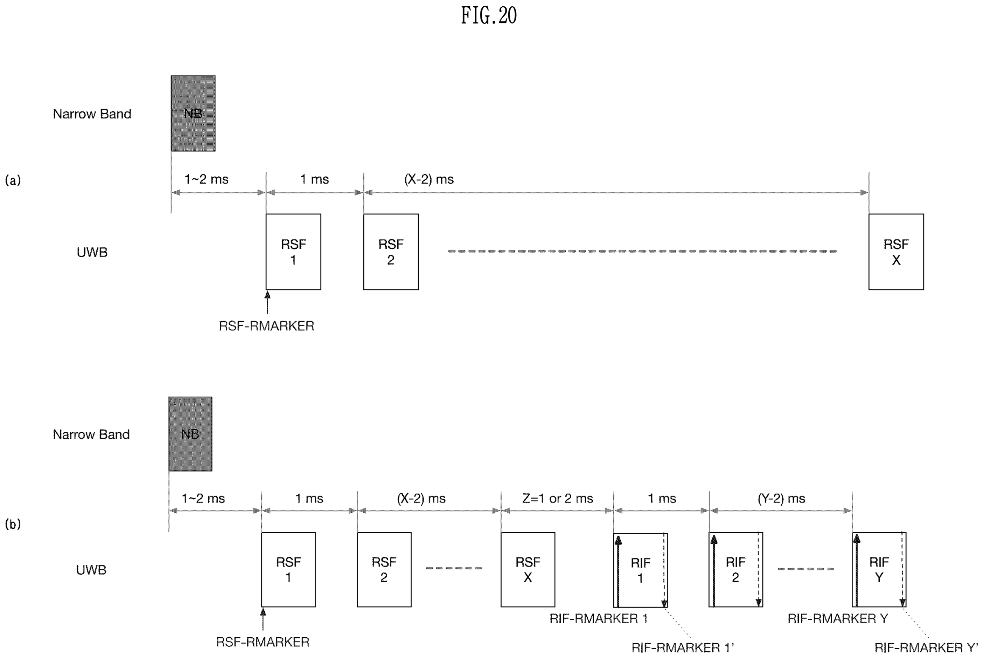

FIG. 20 is a diagram representing additional examples of a MMS packet to which the present disclosure may be applied.

A RSF-only MMS packet format in FIG. 20(a) may enable efficient and rapid channel impulse response (CIR) generation by using MMS coherent combining. In a mixed MMS packet format for ranging integrity in FIG. 20(b), RIFs may follow RSFs.

For a RSF-only MMS packet in FIG. 20(a), the following numerology may be applied to increase processing gain.

X, the number of preamble fragments, may be configured as one value of the set {1, 2, 4, 8, 16}. RSF-RMARKER may be defined as the peak of the first pulse of the first RSF.

In a mixed MMS packet for ranging integrity in FIG. 20(b), when a NB is used to assist timing/frequency synchronization, the following numerology may be applied.

Additional RIF-RMARKERs may be defined as the peak of the first pulse and the peak of the last pulse of each RSF. RIF-RMARKER y corresponds to the peak of the first pulse of RIF-y, and RIF-RMARKER y' corresponds to the peak of the last pulse of RIF-y. In order to increase the gain, X, the number of RFSs, may be configured as one value of the set {0, 1, 2, 4, 8}, and Y, the number of RIFs, may be configured as one value of the set {1, 2, 4, 8}. X=0 may imply a RIF-only MMS packet.

For example, the first mode with X = Y = 1, 2, 4, 8 and the second mode with X = 1 and Y = 2, 4, 8 may be defined as a baseline. In addition, other combinations of X and Y values may be optionally applied.

In case of Z=2, an additional 1ms gap between RSFs and RIFs may provide an additional time budget before starting to process fragments for integrity verification.

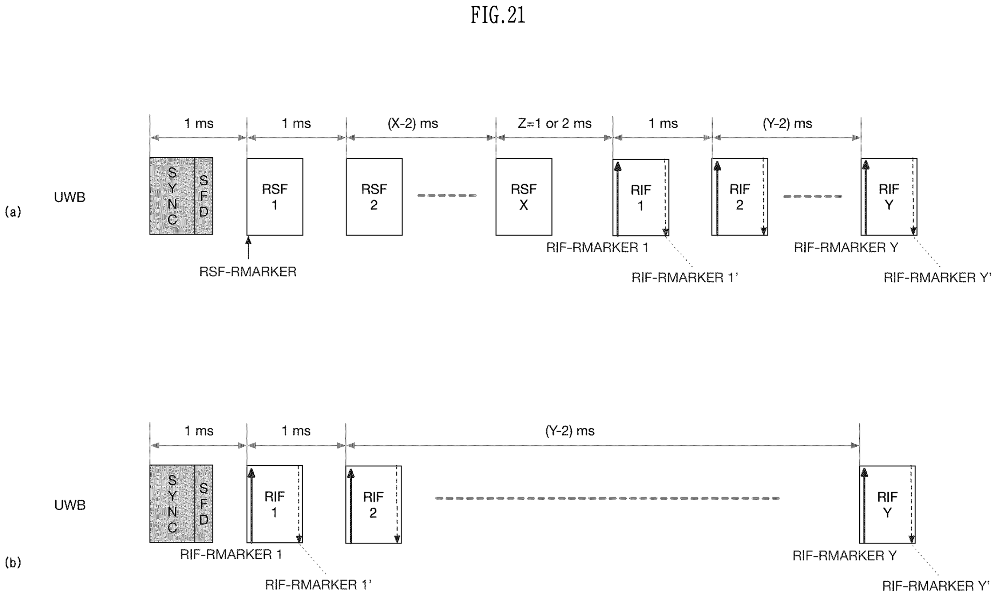

FIG. 21 is a diagram representing additional examples of a MMS packet to which the present disclosure may be applied.

FIG. 21(a) represents an example of a UWB-only mixed MMS packet including RSFs in case of X>0, and FIG. 21(b) represents an example of a UWB-only mixed MMS packet including only RIFs in case of X=0 and Y>0.

When a NB is not used to report timing/frequency synchronization, the following numerology may be applied to a mixed MMS packet for ranging integrity.

As in the examples of FIG. 21, SYNC and SFD may be included in a MMS packet.

Additional RIF-RMARKERs may be defined as the peak of the first pulse and the peak of the last pulse of each RIF.

X may be configured as one value of the set {0, 1, 2, 4, 8}, and Y may be configured as one value of the set {0, 1, 2, 4, 8}. Here, Y=0 may be allowed when ranging integrity is not provided. X=0 and Y=1 may be defined as a default configuration for facilitating interoperability. In case of X>0, an additional 1ms gap between RSFs and RIFs in case of Z=2 may provide an additional time budget before starting to process fragments for integrity verification.

The refinement methods for better interference detection and ranging performance for a NBA-UWB technique and techniques that use only UWB wireless technologies to achieve link budget refinement compared to the existing MMS ranging may be further applied.

NBA-UWB Ranging

First, a NBA-MMS-UWB ranging measurement cycle is described.

In NBA-MMS-UWB ranging, an ERDEV role may be referred to as an initiator or a responder. For example, during a NBA-MMS-UWB ranging cycle, an initiator may operate as a controller, and a responder may operate as a controlee. However, it does not exclude a case in which an initiator is a controlee and a responder is a controller.

In NBA-MMS-UWB ranging, the structure of a ranging block and a ranging round as described in FIGS. 13 and 15 may be applied, and a block-based mode may be applied. A ranging block structure for NBA-MMS-UWB may be set up by specifying a ranging block duration, a ranging round duration and a ranging slot duration.

A time unit for specifying the duration of a ranging block and a ranging round is RSTU. Ranging devices may implement a ranging block structure to ensure that the tolerance of a ranging block duration for a PHY clock is within +100ppm to -100ppm. A ranging round corresponds to the period of a duration enough to complete one complete ranging measurement cycle. An initiator and a responder may use one or a plurality of ranging rounds from the first ranging block of a ranging session, and may repeat the same ranging round use pattern in subsequent ranging blocks. Round hopping may be applied in a NBA-MMS-UWB ranging session, and a transmission offset may not be applied.

As the extension of an existing slot-based ranging mode, MMS multi-consecutive ranging slots may be allocated for single packet transmission. A ranging slot duration, a ranging round duration and a ranging block duration may be selected as an integer multiple of 300 RSTU (i.e., 250us).

A ranging measurement cycle may be uniquely identified by a ranging block index and a ranging round index. In NBA-MMS-UWB ranging, a ranging measurement cycle may include a ranging control phase, a ranging phase and a measurement report phase (in-band/OOB).

Among a ranging control phase, a ranging phase and a measurement report phase included in the ranging round of FIG. 13(b), a ranging control phase and a ranging phase are necessarily required in a NBA-MMS-UWB ranging measurement cycle. A measurement report phase may be optionally supported through an in-band wireless technology (e.g., NB, UWB) or OOB. When provided by in-band, a ranging round length may be configured to include a ranging control phase, a ranging phase and a measurement report phase. When provided by OOB, a ranging round length may be configured to include a ranging control phase and a ranging phase.

A control and report message used in a NBA-MMS-UWB ranging measurement cycle is described.

- A poll message is a NB message transmitted by an initiator in the first slot of a ranging round in order to initiate a ranging measurement cycle within a ranging round.
- A response (RESP) message is a NB message transmitted by a responder at the start of a subsequent ranging slot after the first ranging slot in response to a received poll message.
- A report (RPRT) message is a NB message transmitted by one of an initiator or a responder to report ranging measurement to a peer.
- A NB O-QPSK 250kbps PHY may be applied as a default for transmitting control and report messages. Other NB and UWB PHYs may be optionally supported.

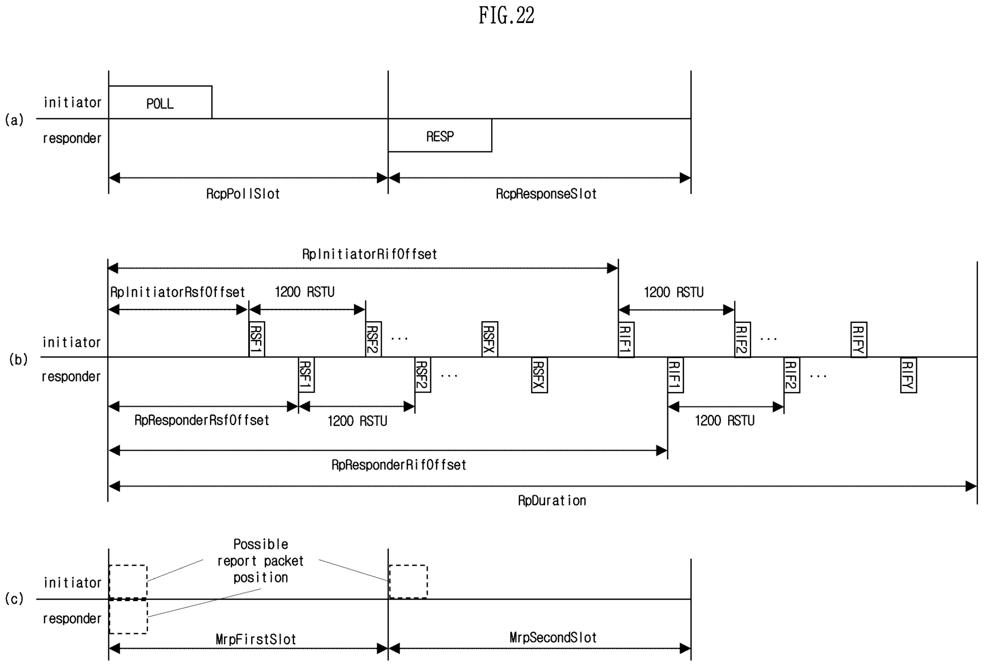

FIG. 22 represents examples of a NBA-MMS-UWB ranging control phase, ranging phase and measurement report phase to which the present disclosure may be applied.

FIG. 22(a) represents an example of a NBA-MMS-UWB ranging control phase.

A NBA-MMS-UWB ranging control phase may be performed at the start of a NBA-MMS-UWB ranging measurement cycle, and may include at least two ranging control slots.

An initiator may start a NBA-MMS-UWB ranging control phase by transmitting a poll message to a responder at the start of the first ranging slot of a ranging round. When LBT is not enabled, or otherwise according to NBA LBT, an initiator may extend the transmission of a poll maximally during the duration of RcpPollSlot. A responder that successfully receives a poll message may transmit a response message to an initiator in a ranging slot after RcpPollSlot from the start of a ranging control phase. When LBT is not enabled, or otherwise according to NBA LBT, a responder may extend the transmission of a response maximally during the duration of RepResponseSlot. A responder that successfully transmits a response message may enter a ranging phase by continuing a NBA-MMS-UWB ranging measurement cycle. An initiator that successfully receives a response message may enter a ranging phase by continuing a NBA-MMS-UWB ranging measurement cycle.

A poll message may provide carrier frequency coherence from an initiator to a responder device. In addition, control information may be transmitted from an initiator to a responder through a poll message. For example, a poll message may include information requesting a responder to report the recommended number of fragments (RNF) in a measurement report phase.

A response message may provide carrier frequency coherence from a responder to an initiator device. In addition, control information may be transmitted from a responder to an initiator through a response message.

When LBT is enabled before transmission in a corresponding operating band, a transmitting device may perform LBT before the start of the expected transmission. When performed LBT does not allow transmission at the start of a ranging slot, a transmitting device may not initiate additional transmission during the remaining period of a ranging round.

An initiator may discontinue a NBA-MMS-UWB ranging measurement cycle when at least one of the following conditions is satisfied:

- When LBT does not allow the transmission of a poll message;
- When an initiator does not receive a response message in an expected ranging slot; or
- When all ERDEVs request to skip ranging for a current ranging block during a ranging control phase.

A responder may discontinue a NBA-MMS-UWB ranging measurement cycle when at least one of the following conditions is satisfied:

- When a poll message is not received at the start of an expected ranging round;
- When LBT does not allow the transmission of a response message; or
- When all ERDEVs request to skip ranging for a current ranging block during a ranging control phase.

When terminated before a ranging measurement cycle is completed, involved ERDEVs may stop NB and UWB transmission until the next ranging measurement cycle.

FIG. 22(b) represents an example of a NBA-MMS-UWB ranging phase.

A NBA-MMS-UWB ranging phase may start when a NBA-MMS-UWB ranging control phase is terminated.

An initiator may enter a ranging phase and start the transmission of the first UWB RSF fragment after RpInitiatorRsfOffset slots. An initiator may continue to transmit up to X UWB RSF fragments at the regular interval of 1200 RSTUs. An initiator may enter a ranging phase and start the transmission of the first UWB RIF fragment after RpInitiatorRifOffset slots. An initiator may continue to transmit up to Y UWB RSF fragments at the regular interval of 1200 RSTUs.

An initiator may enter a ranging phase and start the transmission of the first UWB RSF fragment after RpResponderRsfOffset slots. An initiator may continue to transmit up to X UWB RSF fragments at the regular interval of 1200 RSTUs. An initiator may enter a ranging phase and start the transmission of the first UWB RIF fragment after RpResponderRifOffset slots. An initiator may continue to transmit up to Y UWB RSF fragments at the regular interval of 1200 RSTUs.

The entire duration of a ranging phase may correspond to RpDuration slots.

After an ERDEV, which is one of an initiator or a responder, completes the reception of all UWB fragments during a ranging phase, when corresponding ERDEV is required to transmit a measurement report to a peer, a ranging measurement report may be generated. Accordingly, the value of RpDuration may be set to allow sufficient time until a subsequent measurement report phase.

When an in-band NBA-MMS-UWB measurement report phase is enabled for a ranging measurement cycle, an ERDEV that completes a ranging phase may enter a measurement report phase based on the following conditions:

- When it is required to transmit a measurement report to a peer during a measurement report phase and a measurement report is successfully generated; or
- When it is expected to receive a measurement report from a peer during a measurement report phase.

When a NBA-MMS-UWB measurement report phase is not included in a NBA-MMS-UWB ranging measurement cycle, involved ERDEVs may end a ranging measurement cycle after completing a ranging phase. An ERDEV that is required to transmit a measurement report to a peer may deliver a measurement report to the next higher layer or request the next higher layer to transmit a measurement report to a peer.

FIG. 22(c) represents an example of a NBA-MMS-UWB measurement report phase.

An in-band measurement report may be transmitted during an optional measurement report phase. When enabled, an in-band measurement report phase may start at the time of a ranging phase.

In the following description, an in-band measurement report phase may be referred to as a report phase.

A report phase may include at least one packet slot. The duration of the first slot of a report phase may have the duration of MrpFirstSlot slots. The duration of the second slot of a report phase may have the duration of MrpSecondSlot slots.

When a report phase includes only one packet slot, an initiator or a responder may transmit a measurement report packet in a corresponding slot. Whether a device transmitting a report packet is an initiator or a responder may be configured by a report mode.

When a report phase includes two packet slots, a responder may transmit a report packet in the first slot, and an initiator may transmit a report packet in the second slot.

A measurement report phase may include a unidirectional or bidirectional report exchange. The transmission of a report packet may be scheduled in the first two ranging slots of a measurement report phase according to the following configuration mode:

[Table 10]

| Report Mode | Device transmitting in the first report slot | Device transmitting in the second report slot |
| --- | --- | --- |
| Uni-directional, only responder | Responder | - |
| Uni-directional, only initiator | Initiator | - |
| Bi-directional, initiator first | Responder | Initiator |

For a bidirectional report, the transmission of a report may be performed independently in the first and second slots of a measurement report phase. In particular, a responder may transmit its measurement report in the second slot, independently of whether it received an initiator's report in the first slot.

A report message may mainly provide a ranging measurement result obtained during a ranging phase. In addition, a report message may be used for other purposes. For example, when a responder receives a request for the recommended number of fragments (RNF) from an initiator in a control phase, a report message transmitted by a responder may include a RNF report. An initiator may use a RNF to determine the updated number of fragments used in subsequent rounds.

When an ERDEV does not transmit a measurement report during a slot allocated to it in a measurement report phase, it may defer or retry it by using a higher layer or using an OOB wireless technology operation. When an ERDEV does not receive a measurement report during a slot allocated to it in a measurement report phase, it may request retransmission by using a higher layer or using an OOB wireless technology operation until the start of the next MMS ranging cycle in a subsequent ranging block.

NBA-MMS-UWB Initialization and Setup

A NBA-MMS-UWB ranging session may be configured by a set of parameters for a PHY and MAC. A set of PHY parameters may include NB and UWB channels, modulation, a data rate, etc. used for a control phase, a ranging phase and a measurement report phase. A set of MAC parameters may include a slot, a round and a block configuration for a control phase, a ranging phase and a measurement report phase.

In order to initiate a NBA-MMS-UWB ranging session, a pair of an initiator device and a responder device may be involved in a negotiation for a ranging configuration different from a default parameter set in initialization and setup phases. The OOB communication may be used to set up session parameters or change an initialization channel and modulation, which may be performed even before initialization and setup phases.

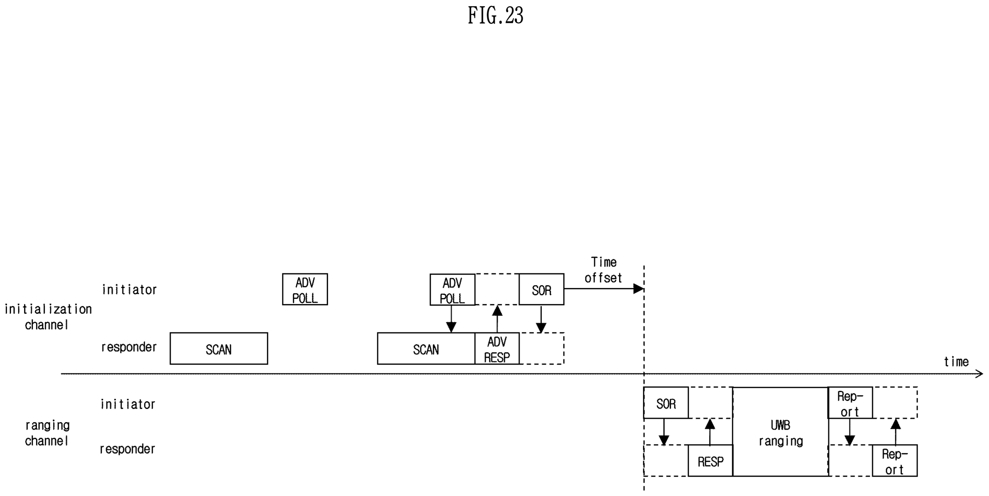

FIG. 23 is a diagram for describing ranging session initialization and setup to which the present disclosure may be applied.

The ranging session initialization is described first.

Before entering a ranging control phase, ERDEVs may be involved in an initialization and setup phase. An initialization and setup phase may provide the time synchronization of the first poll packet to be transmitted by an initiator during an upcoming ranging control phase. In addition, a ranging session configuration may be changed by exchanging a two-way handshake packet between ERDEVs. Unless negotiated in initialization and setup, a default ranging configuration parameter may be used for a ranging session. Alternatively, a ranging session configuration may be set up by the OOB wireless technology.

In order to establish in-band initialization, ERDEVs may opportunistically perform transmission and reception on a dedicated initialization channel and PHY modulation as given by a ranging session configuration. An initiator may opportunistically transmit an advertising poll (ADV-POLL) packet at times and intervals that it deems appropriate, as supported by a higher layer function. Similarly, a responder may opportunistically listen for incoming ADV-POLL packets.

After transmitting an ADV-POLL on an initialization channel, an initiator may listen for an incoming advertising response packet (ADV-RESP) in a subsequent ranging slot. When a responder receives an ADV-POLL, it may transmit an ADV-RESP in a subsequent ranging slot. When a responder transmits an ADV-RESP, it may listen for a start of ranging (SOR) packet in a ranging slot following an ADV-RESP packet. When an initiator receives an ADV-RESP packet, it may transmit a SOR packet in a ranging slot following an ADV-RESP packet.

After transmitting a SOR packet, an initiator may enter a ranging control phase. After an initiator confirms the reception of a RESP from a responder during a ranging control phase, and unless the initialization of additional ERDEVs is required, an initiator may discontinue ranging initialization and stop the transmission of ADV-POLL packets.

For an initialization setup handshake, a responder (or a controlee) may request a ranging session configuration in an ADV-RESP. An initiator (or a controller) may receive a request from a responder through an ADV-RESP, set up a session configuration, and transmit a corresponding session configuration to a responder through SOR.

For a ranging session configuration, before a NBA-MMS-UWB ranging session starts, a ranging block structure and a ranging measurement cycle may be configured. A ranging parameter may not be changed during a ranging setup, or default parameters may be applied to a ranging session configuration by the next higher layer. During a NBA-MMS-UWB ranging session, some parameters for a ranging block structure and a ranging measurement cycle may be updated by the next higher layer. For each parameter update, the next higher layer may indicate the index of a ranging block where a new parameter becomes valid.

An initiator and a responder may use parameters set or updated by each next higher layer as a long-term operating parameter.

An initiator may overwrite the long-term operating parameter of a ranging measurement cycle by indicating a new set of short-term parameters during a ranging control phase. A short-term parameter may be applied validly only for an immediate ranging measurement cycle. A long-term operating parameter may be resumed validly in the next ranging measurement cycle unless overwritten again during a ranging control phase.

A responder may request a short-term operating parameter for the next ranging measurement during a ranging control phase. An initiator may provide or ignore a parameter according to a responder's request in the next ranging cycle.

The general parameters for a NBA-MMS-UWB ranging session may include the range or option of a configurable value and a default value for an initialization channel, the allowance list of control and report channels, an UWB control channel and preamble, a PHY rate, a NB LBT channel, whether round hopping is applied, a channel switching method, etc. Block structure parameters may include the range or option of a configurable value and a default value for a ranging block duration, a ranging round duration, a ranging slot duration, etc. Ranging measurement cycle parameters may include the range or option of a configurable value and a default value for RepPollSlot and RepResponseSlot for a ranging control phase; the number of RSF fragments (X) for a ranging phase, the number of RIF fragments (Y), RpDuration, RpInitiatorRsfOffset, RpResponderRsfOffset, RpInitiatorRifOffset, RpResponderRifOffset, a RSF code index, a RSF complementary set, a RIF fragment length in a 512-chip unit, N_MSR; an in-band report for a measurement report, a report mode, MrpFirstSlot, MrpSecondSlot, etc.

NBA-MMS-UWB Control Channel Message

An existing PSDU format defined for each of a variety of PHYs may be applied to a NBA-MMS-UWB control channel message. When a NB is used for a control message, a report message and an initialization message, a compressed PSDU format may be used.

A compressed PSDU format may be defined as including only a 1-octet header including a message ID. All of the remaining PSDU contents may be determined according to a message ID. Examples of the compressed PSDU format of a message used during an initialization phase, a setup phase, a control phase and a report phase are shown in a table below. A compressed PSDU message may be encapsulated in the header IE of a specific type of data field.

[Table 11]

| Phase | Message | Octet 0 (Message ID) | Octet 1-N |
|---|---|---|---|
| Control | POLL | 0x00 | [...,CRC16] |
| Control | RESP | 0x01 | [...,CRC16] |
| Control | POLL2 | Undetermined | [...,NbaChannelMap, CRC16] |
| Measurement Report | RPRT (from responder) | 0x02 | [...,CRC16] |
| Measurement Report | RPRT (from initiator) | 0x03 | [...,CRC16] |
| Measurement Report | RPRT2 | Undetermined | [...,NbaChannelMap, CRC16] |
| Initialization | ADV-POLL | 0x20 | [...,CRC16] |

26

(continued)

| Phase | Message | Octet 0 (Message ID) | Octet 1-N |
|---|---|---|---|
| Initialization | ADV-RESP | 0x21 | [...,CRC16] |
| Initialization | SOR | 0x22 | [...,CRC16] |

Among the messages of a control phase, a POLL message may correspond to a poll message for qualifying, and a RESP message may correspond to a response message for qualifying. For a POLL2 message, after receiving NbaChannelMap from an initiator, a responder must be able to determine NbaChannelAllowList, and may apply a corresponding list to allocate a NB channel for each ranging. Other various poll messages may be further defined.

Among the messages of a measurement report phase, a RPRT message from a responder and a RPRT message from an initiator are defined to have a distinct message ID, and a RPRT2 message may be a message used in a session control process. Message ID values 0x04 to 0x1f may be reserved for session control and report phases.

Among the messages of an initialization phase, message ID values 0x23 to 0x2f may be reserved for an out-of-session purpose.

Other message ID values 0x7f to 0xff are defined for the vendor-specific message content, and may correspond to a 128x256 PSDU having a 2-byte message ID.

Among the compressed PSDU message fields, a CRC16 field is defined as a 16-bit length, and may correspond to a frame check sequence (FCS) of a 2-octet length. An ADDR field may correspond to an address field. A compressed PSDU message may also further include other various fields.

UWB Channel Use Coordination

In order to reduce mutual interference between adjacent UWB transmitters and support good coexistence, the coordination of UWB channel (CH) use (usage) may be applied. The type of an UWB transceiver may include a NBA-UWB transceiver and an UWB standalone transceiver. For example, the coordination of UWB channel use between NBA UWB transceivers may be performed through a mirroring (or initialization) channel. Hereinafter, an UWB channel use coordination method that may be applied to both a NBA UWB transceiver and an UWB standalone transceiver is described.

Unless otherwise stated in the following description, an UWB transceiver refers to a NBA UWB transceiver, an UWB standalone transceiver or both types. Signaling for UWB channel use coordination may be required to be decoupled from other UWB sessions on a corresponding UWB transceiver. Such UWB channel use coordination may be essentially or optionally supported in an UWB transceiver. For example, transmitting a coordination signal may be essential/optional, and operating based on information received through coordination signaling may also be essential/optional.

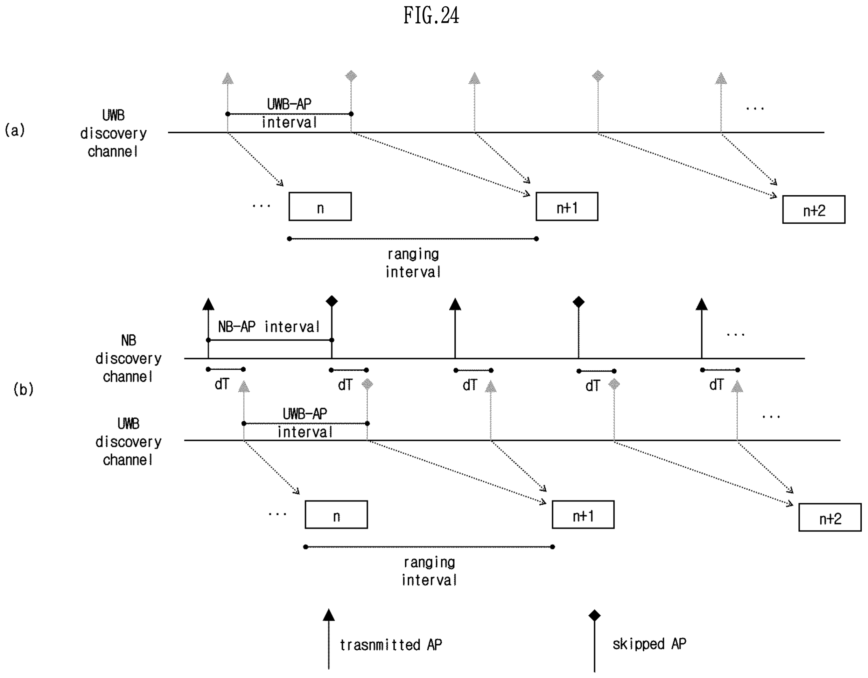

FIG. 24 is a diagram representing an example of AP transmission and reception operations to which the present disclosure may be applied.

As in the example of FIG. 24(a), an initiator, which is an UWB transceiver, may periodically transmit an UWB-acquisition packet (AP) on a predefined UWB discovery channel. An UWB-AP may include information that may be used to determine all future UWB channel use of a corresponding initiator. An UWB transceiver may discover a corresponding initiator by receiving an UWB-AP. An UWB-AP interval may be configured as an appropriate value (e.g., according to a use case). Among the periodically transmitting UWB-APs, some UWB-APs may be skipped due to ranging overlap. In the example of FIG. 24(a), n, n+1, n+2, ... may correspond to a NBA-UWB ranging block index.

As in the example of FIG. 24(b), UWB-AP scanning of an UWB receiver (Rx) for a NBA UWB transceiver may be optimized. A NBA UWB initiator may periodically transmit a NB-AP on a predefined NB discovery channel. A NB-AP may include information that may be used to determine the occurrence of the immediate UWB-AP. A NB-AP may include information that may be used to determine all future UWB channel use of a corresponding initiator. A NB-AP interval may be associated with an UWB-AP interval. For example, a NB-AP interval may be the same as an UWB-AP interval, and a time interval between a NB-AP transmission time and an UWB-AP transmission time may be dT1. Among the periodically transmitting NB-APs, some NB-APs may be skipped due to ranging overlap.

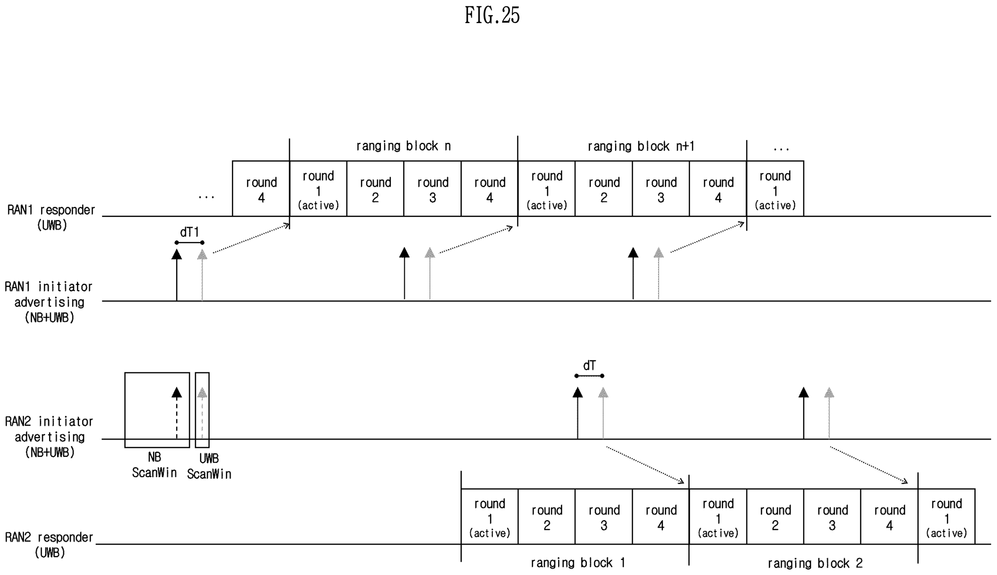

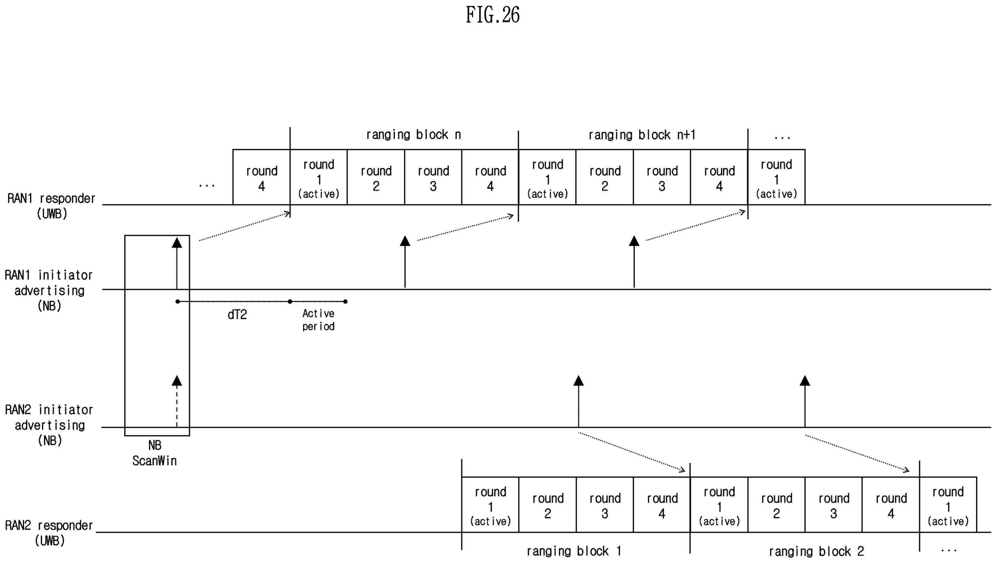

FIGS. 25 and 26 are a diagram representing examples of AP transmission and reception operations in a plurality of RANs to which the present disclosure may be applied.

In the examples of FIGS. 25 and 26, it is assumed that ranging area network (RAN) 1 includes one initiator (RAN1 initiator) and at least one responder (RAN1 responder) and is currently in ranging operation. It is assumed that RAN2 includes one initiator (RAN2 initiator) and at least one responder (RAN2 responder) and is starting up or operating.

In the example of FIG. 25, a RAN1 initiator may periodically transmit a NB-AP and an UWB-AP on a NB discovery channel and an UWB discovery channel. Accordingly, a RAN1 responder may perform a ranging operation by being enabled in the first ranging round of each ranging block on an UWB channel determined based on information included in a NB-AP and an UWB-AP.

A RAN2 initiator may receive a NB-AP and an UWB-AP transmitted by a RAN1 initiator. For example, a RAN2 initiator may receive a NB-AP transmitted by a RAN1 initiator during a NB scanning window (NB ScanWin) and subsequently receive an UWB-AP transmitted by a RAN1 initiator during UWB ScanWin. Accordingly, a RAN2 initiator may obtain/extract RAN1 information (e.g., per-session information). For example, RAN1 information may include information on a ranging block, a round and a slot duration, information on RF channel and preamble usage, information on a synchronization parameter, etc. Based on this RAN1 information, a RAN2 initiator may start its ranging session and advertising session at a time that does not overlap with RAN1. Accordingly, a RAN2 initiator may periodically transmit a NB-AP and an UWB-AP.

In the example of FIG. 26, a RAN1 initiator may periodically transmit a NB-AP on NB discovery. Accordingly, a RAN1 responder may operate a ranging operation by being enabled in the first ranging round of each ranging block on an UWB channel determined based on information contained in a NB-AP.

A RAN2 initiator may receive a NB-AP transmitted by a RAN1 initiator. For example, a RAN2 initiator may receive a NB-AP transmitted by a RAN1 initiator during a NB scanning window (NB ScanWin). Accordingly, a RAN2 initiator may obtain/extract RAN1 information (e.g., information on the active period of a RAN). For example, information on the active period of RAN1 may include information on the remaining time until the start of an active period (or an active round) (e.g., dT2), information on the duration of an active round, etc. Based on this RAN1 information, a RAN2 initiator may select an idle period that does not overlap with the active period of RAN1 to start its new session. Accordingly, a RAN2 initiator may periodically transmit a NB-AP.

A NB-AP format and an UWB-AP format are described below.

Both a NB-AP format and an UWB-AP format may include a SHR field, a PHR field and a PHY payload field (i.e., PSDU) as described by referring to FIG. 2. A PHR field may indicate the length of a PSDU, for example, among the values in a range of 0 to 127 bytes. A PSDU may include a MAC header (MHR) field, a MAC payload field and a MAC footer (MFR) field. O-QPSK may be applied to a NB-AP packet type, and BPRF may be applied to an UWB-AP packet type.

A NB-AP may have the format of a compact frame corresponding to a compressed PSDU. A compact frame may include a 3-bit frame type field, a 5-bit compact frame ID field and a variable-sized compact frame contents field. A compact frame (or acquisition compact frame) format for an AP may include a 3-octet address field, a 1-octet message control field, a variable-sized message contents field, and a 2-octet FCS field.

The MHR field of an AP may include the following information.

[Table 12]

| MHR | | Bit | Byte | Value (Example) | Description |
|---|---|---|---|---|---|
| Frame control | Frame type | 3 | 2 | 1 | Data |
| | Security enabled | 1 | | 0 | Security disabled |
| | Frame pending | 1 | | 0 | No frame to be transmitted additionally |
| | AR | 1 | | 0 | No ACK frame required |
| | PAN ID compression | 1 | | 1 | Whether a personal area network identifier(PAN Id)/an address per frame version exists |
| | RFU | 1 | | 0 | Reserved |
| | Sequence number suppression | 1 | | 1 | Sequence number compression applied |
| | IE Present | 1 | | 0 | No IE |
| | Destination addressing mode | 2 | | 3 | EUI-64(64-bit extended unique identifier) address |
| | Frame | 2 | | 2 | 802.15.4-2020 |
| | version | | | | |
| | Source addressing mode | 2 | | 3 | EUI-64 address |
| Destination address | | 64 | 8 | FF FF FF FF FF FF FF FF | Broadcast address |

(continued)

| MHR | Bit | Byte | Value (Example) | Description |
|---|---|---|---|---|
| Source address | 64 | 8 | Variable | Local MAC address |

The MAC payload field of an UWB-AP may include the following information.

[Table 13]

| MAC payload | | Bit | Byte | Description |
|---|---|---|---|---|
| Common Info field | AP type | 3 | 1 | 0: Coordination UWB-AP<br>1-8: Reserved |
| | RFU | 5 | | Reserved |
| Per-session Info field | Block duration | 24 | 3 | RSTU unit |
| | Session channel | 5 | 1 | UWB channel used by a session |
| | Hop mode | 1 | | 0: No hopping<br>1: Hopping (A hopping sequence does not need to be known to all devices) |
| | RFU | 2 | | Reserved |
| | Preamble code | 8 | 1 | Preamble code used by a session |

A per-session information field may exist in one coordination UWB-AP. The initiator of a newly started RAN may minimize a collision with an existing RAN by selecting at least one parameter of a per-session information field as a different value.

The MAC payload field of a NB-AP may include the following information.

[Table 14]

| MAC payload | | Bit | Byte | Description |
|---|---|---|---|---|
| Common Info | AP type | 3 | 1 | 0: Coordination NB-AP |
| field | | | | 1: Compressed coordination NB-AP<br>2-8: Reserved |
| | UWB-AP present | 1 | | 0: No UWB-AP subsequent to NB-AP<br>1: UWB-AP subsequent to NB-AP |
| | RFU | 4 | | Reserved |
| UWB-AP Info field | Delta T | 16 | 3 | Time remaining until the start of the next UWB-AP based on the start of a current packet (RSTU unit) |
| | UWB channel | 5 | 1 | UWB channel number that UWB-AP is transmitted after Delta T (dT1) |
| | RFU | 3 | | Reserved |
| | Preamble code | 8 | 1 | Preamble code used by an UWB-AP |

A compressed coordination NB-AP packet does not include a per-session information field. A coordination NB-AP may include per-session information field(s). The per-session information field(s) may overlap with coordination UWB-APs. An UWB-AP information field is included in a NB-AP when the value of an UWB-AP present field is 1, and is not included in a NB-AP when its value is 0.

Referring again to FIG. 25, a time length (dT1) from the start of a NB-AP to the start of an UWB-AP may be indicated by the value of the Delta T parameter of the UWB-AP information field of a NB-AP. In addition, an UWB channel on

29

which an UWB-AP is transmitted after the dT1 time may be indicated by the value of the UWB channel parameter of an UWB-AP information field.

An UWB session information field may or may not be included in a NB-AP. Whether an UWB session information field is included in a NB-AP and what information is included in an UWB session information field may be indicated by the UWB per-session information type field of a NB-AP. An UWB session information field may exist in a NB-AP regardless of whether an UWB-AP is transmitted. Four types may be applied to an UWB session information field.

When the value of an UWB per-session information type field is 0, an UWB session information field does not exist in a NB-AP.

When the value of an UWB per-session information type field is 1, an UWB session information field may exist and a minimum of set of session information as below may be included in a NB-AP.

[Table 15]

| MAC payload | | Bit | Byte | Description |
|---|---|---|---|---|
| Per-session Info field | Block duration | 24 | 3 | RSTU unit |
| | Session channel | 5 | 1 | UWB channel used by a session |
| | Hop mode | 1 | | 0: No hopping<br>1: Hopping (A hopping sequence does not need to be known to all devices) |
| | RFU | 2 | | Reserved |
| | Preamble code | 8 | 1 | Preamble code used by session |

When the value of an UWB per-session information type field is 2, an UWB session information field may exist and information on the start time and duration of an active period may be included in a NB-AP.

[Table 16]

| MAC payload | | Bit | Byte | Description |
|---|---|---|---|---|
| Per-session Info field | Delta T | 24 | 3 | Time remaining until the start of an active period (RSTU unit) |
| | UWB channel | 5 | 1 | UWB channel number used by an UWB session |
| | RFU | 3 | | Reserved |
| | Preamble code | 8 | 1 | Preamble code used by an UWB session |
| | Active period duration | 24 | 3 | Duration of the active period of an UWB session |

Referring again to FIG. 25, a time length (dT2) from the start of a NB-AP to the start of an active period may be indicated by the value of the Delta T parameter of the per-session information field of a NB-AP. A duration from the start to the end of an active period may be indicated by the value of the active period duration field of the per-session information field of a NB-AP.

When the value of an UWB per-session information type field is 3, an UWB session information field may exist and information on the start time and duration of active rounds in a block may be included in a NB-AP.

[Table 17]

| MAC payload | | Bit | Byte | Description |
|---|---|---|---|---|
| Per-session Info field | Delta T | 24 | 3 | Time remaining until the start of a block (RSTU unit) |

(continued)

| MAC payload | | Bit | Byte | Description |
|---|---|---|---|---|
| | UWB channel | 5 | 1 | UWB channel number used by a session |
| | Hop mode | 1 | | 0: No hopping<br>1: Hopping (A hopping sequence does not need to be known to all devices) |
| | RFU | 2 | | Reserved |
| | Preamble code | 8 | 1 | Preamble code used by a session |
| | Round duration | 24 | 8 | Round duration of the block of an UWB session |
| | Number of rounds in a block | 8 | 1 | Number of rounds configuring one block |
| | Active rounds | 24 | 3 | Bitmap indicating the index of an active round |

Referring again to FIG. 25, a time length (dT2) from the start of a NB-AP to the start of a block may be indicated by the value of the Delta T parameter of the per-session information field of a NB-AP. In addition, for the position of an active round and the duration of a round, an active round may start after the index of an active round in a bitmap of a length according to the number of rounds included in one block (Number of rounds in a block parameter) is indicated and as many durations (round duration parameters) as the number of inactive rounds (0 in the example of FIG. 25) between the start of a block and the start of an active round elapse.

Initialization Setup and Channel Use Coordination

As described above, NBA-UWB may provide a technology such as a mirroring (or initialization) channel, NBA-MMS-UWB, NBA TDoA, NBA-sensing, etc. NBA-UWB may use a NB (e.g., 2.5MHz bandwidth) channel in a band such as UNII-3, UNII-5, etc. to assist a UWB operation. Specific features for a NB may correspond to an in-band technology defined by the IEEE 802.15.4 series standard.

As described above for NBA-MMS-UWB, a NB channel may be used to improve the link budget of UWB. In a NBA-MMS-UWB ranging round, an in-band measurement report phase (MRP) may be defined as an optional configuration, and accordingly, a ranging round may include a ranging control phase (RCP) and a ranging phase (RP) as a necessary configuration. In addition, a frame/packet and a duration exchanged between devices in RCP, RP and MRP are the same as described by referring to FIG. 22.

As described above by referring to FIG. 23 for NBA-MMS-UWB initialization and setup, the time synchronization information of the first poll packet transmitted by an initiator in a RCP may be provided. In addition, in order to start a NBA-MMS-UWB ranging session, an initiator and a responder are required to perform a discovery (or initialization) and setup process to negotiate a ranging configuration different from a default parameter set.

For an UWB native discovery (or initialization) and setup process, as described above, an initiator may periodically broadcast an ADV-POLL packet on a discovery (or initialization) channel. A discovery (or initialization) channel where ADV-POLL is broadcast may be a NB channel in case of a device having the NBA-UWB capability or may be an UWB channel in case of a device that does not support NBA-UWB.

In addition, for UWB channel use coordination described by referring to FIGS. 24 to 26, similar to a NBA-MMS-UWB discovery (or initialization) and setup process, an AP (acquisition packet) including the scheduling information of a network may be periodically broadcast on a discovery (or initialization) channel.

As described in the example of FIGS. 24 and 25, an UWB-AP may be advertised after a NB-AP including an UWB Info field is transmitted. An UWB Info field may include information such as an UWB channel where an UWB-AP operates, delta T (i.e., the remaining time until the next UWB-AP advertisement based on a current packet), a preamble code used by an UWB-AP, etc. An UWB-AP may also include a per-session information field (e.g., UWB channel use coordination information) to be notified to other controllers.

Unlike the example of FIGS. 24 and 25 for UWB channel use coordination using an UWB-AP, an UWB-AP is not broadcast in the example of FIG. 26 which does not use an UWB-AP but uses only a NB-AP, so a NB-AP does not include an UWB-AP Info field but may include a per-session info field (e.g., UWB channel use coordination information) to be notified to other controllers.

An ADV-POLL used in the above-described discovery (or initialization) and setup and an AP used in channel use coordination have a different purpose, but are commonly broadcast on a discovery (or initialization) channel. Since the number of NB discovery (or initialization) channels and/or UWB discovery (or initialization) channels is limited (e.g., 1 or 2), a broadcast packet may be more likely to collide as more UWB devices perform discovery (or initialization) and setup operations and a channel use coordination operation at the same time. When it is not properly delivered to a required receiving device due to the collision of broadcast packets, the performance of discovery (or initialization) and setup operations and/or a channel use coordination operation may deteriorate. A new method is required to prevent this performance degradation.

Various examples of the present disclosure that optimize discovery (or initialization) and setup operations and a channel use coordination operation are described below.

In some embodiments of the present disclosure, a new response message (e.g., an ADV-RESP message) that supports the request of channel use information (CUI) in discovery (or initialization) and setup processes may be defined. A new response message may correspond to a response to an advertising message (e.g., an ADV-POLL message).

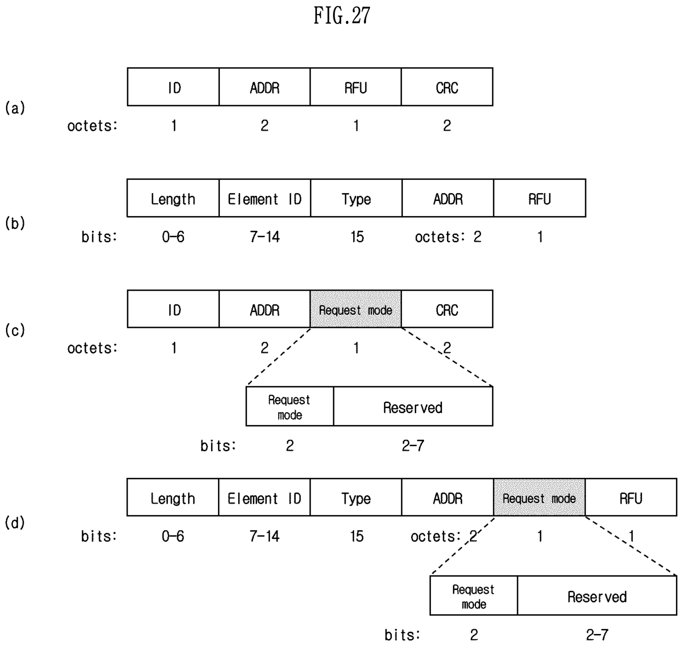

FIG. 27 is a diagram representing examples of an advertising message format and a response message format according to the present disclosure.

FIG. 27(a) represents an example of an ADV-POLL payload (PSDU) packet format (e.g., a NB O-QPSK case). An ADV-POLL packet format may include a 1-octet ID field (e.g., ID=0x20 (see Table 11)), a 2-octet address (ADDR) field, a 1-octet RFU (i.e., reserved) field, and a 2-octet CRC field. An ADV-POLL message may include an address (ADDR) field to show the presence of a device broadcasting it. When the address information of a device transmitting an ADV-POLL is included in a header, an ADDR field may be omitted from a PSDU, and accordingly, an ADV-POLL size may be reduced.

FIG. 27(b) represents an example of an ADV-POLL IE format (e.g., an UWB case). An UWB header IE packet format may include a 7-bit length field, a 8-bit element ID field, a 1-bit type field, a 2-octet ADDR field, and a 1-octet RFU field. For example, an element ID may be set as a value corresponding to an ADV-POLL (e.g., one of 0x80 to 0xFF, e.g., 0x80). A type field may be set as 0.

An ADV-POLL message/packet in this discovery/initialization and setup may be broadcast on a NB discovery/initialization channel or may be broadcast on an UWB discovery/initialization channel. In addition, an acquisition packet (AP) in channel use coordination may also be broadcast on a NB/UWB discovery/initialization channel. An AP message/packet may be broadcast to inform other controllers of the scheduling information of a RAN to which an initiator belongs, and may include fields as in Tables 13 to 17 described above.

Due to channel congestion and collision for a case in which an ADV-POLL and an AP are broadcast on the same NB/UWB discovery/initialization channel, performance degradation is expected in a channel use coordination process as well as discovery/initialization and setup processes. In order to prevent this problem, the refinement of an UWB advertising packet that supports concurrent ranging session initiation and channel use coordination may be considered. In this regard, examples in which a response message (e.g., ADV-RESP) to an advertising message is refined are described below.

By receiving an ADV-POLL broadcast by an initiator in discovery (or initialization) and setup processes, a responder may know the presence of an initiator. After a responder receives an ADV-POLL, a two-way handshake process may be performed. A responder may transmit an ADV-RESP to an ADV-POLL, an initiator that receives an ADV-RESP may transmit SOR, and a responder may participate in a ranging session. By utilizing this two-way handshake process, an advertising packet is not limited to discovery (or initialization) and setup, but may also be used for channel use coordination. For example, the initialization of a ranging session may be performed or channel use information may be requested according to information included in an ADV-RESP transmitted by a responder.

FIG. 27(c) represents an example of an ADV-RESP payload (PSDU) packet format (e.g., a NB O-QPSK case). An ADV-RESP packet format may include a 1-octet ID field (e.g., ID=0x21 (see Table 11)), a 2-octet address (ADDR) field, a 1-octet request mode field, and a 2-octet CRC field. An ADDR field may be set as the address value of a responder. When the address information of a device transmitting an ADV-RESP is included in a header, an ADDR field may be omitted from a PSDU, and accordingly, an ADV-RESP size may be reduced. Here, unlike an existing ADV-RESP format where 1 octet is reserved (RFU) between an ADDR field and a CRC field, an ADV-RESP format according to the present disclosure includes a new request mode field.

FIG. 27(d) represents an example of an ADV-RESP IE format (e.g., an UWB case). An UWB header IE packet format may include a 7-bit length field, a 8-bit element ID field, a 1-bit type field, a 2-octet ADDR field, a 1-octet request mode field, and a 1-octet RFU field. For example, an element ID may be set as a value corresponding to an ADV-RESP (e.g., one of 0x80 to 0xFF, e.g., 0x81). A type field may be set as 0. Here, unlike an existing ADV-RESP format where 2 octets subsequent to an ADDR field are reserved (i.e., RFU), an ADV-RESP format according to the present disclosure includes a new request mode field.

A request mode field included in the above-described ADV-RESP may include information representing whether a responder requests a ranging session setup or information for channel use coordination. An initiator (i.e., an advertising device) receiving an ADV-RESP including this request mode field may transmit SOR or CUI based on the value of a request mode field, and a subsequent frame exchange sequence may be performed.

For example, a request mode field may be defined as having a size of 2 bits. When a request mode field is set as the first value (e.g., 00), it may represent that a ranging session is requested. When a request mode field is set as the second value (e.g., 01), it may represent that channel use coordination information (CUI) is requested. The third value (e.g., 10) and the fourth value (e.g., 11) of a request mode field may be defined or reserved for other purposes.

Alternatively, a request mode field may be defined as having a size of 1 bit. When a request mode field is set as the first value (e.g., 0), it may represent that a ranging session is requested. When a request mode field is set as the second value (e.g., 1), it may represent that channel use coordination information (CUI) is requested.

In some embodiments of the present disclosure, a message exchange between an initiator and a responder based on a response message including a request mode field may be defined.

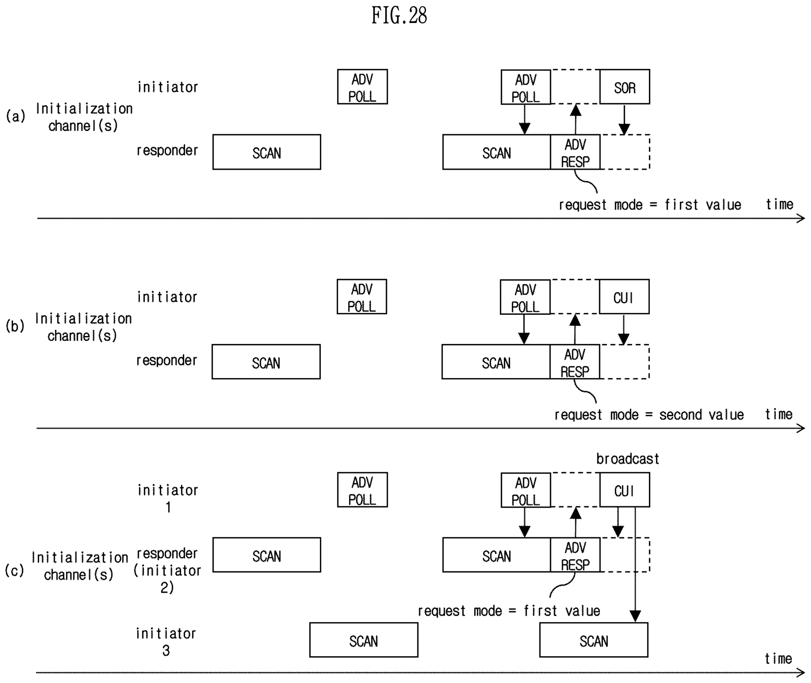

FIG. 28 is a diagram representing examples of message exchange between an initiator and a responder according to the present disclosure.

FIG. 28(a) represents an example of a two-way handshake procedure when the value of a request mode field included in an ADV-RESP transmitted by a responder in response to an ADV-POLL transmitted by an initiator is the first value. When a request mode is the first value, it represents that a responder requests a ranging session setup, so an initiator may transmit a SOR message. An operation on a subsequent ranging channel may be performed as described by referring to FIG. 23.

FIG. 28(b) represents an example of a two-way handshake procedure when the value of a request mode field included in an ADV-RESP transmitted by a responder in response to an ADV-POLL transmitted by an initiator is the second value. When a request mode is the second value, it represents that the channel use information (CUI) of an initiator is requested, so an initiator may transmit a CUI message. For example, a CUI message may include a part/all of the information illustrated in Tables 13 to 17 described above.

Here, a responder may belong to the same RAN as an initiator, or may belong to a different RAN from a RAN to which an initiator belongs. For example, an initiator in FIG. 28(b) may correspond to Initiator 1 of RAN1, and a responder in FIG. 28(b) may correspond to Initiator 2 of RAN2. A responder (or Initiator 2 of RAN2) may request channel use information from an initiator (e.g., Initiator 1 of RAN1) for collision avoidance.

FIG. 28(c) represents an example in which an initiator broadcasts a CUI message. For example, an initiator may broadcast a CUI message by considering its status (e.g., resource status, etc.), channel status, etc. to allow other neighboring devices to obtain its channel use information. Other devices obtaining CUI may be the initiator of another RAN. For example, CUI related to RAN1 broadcast by Initiator 1 belonging to RAN1 may be obtained by a device (e.g., Initiator 2 belonging to RAN2 and/or Initiator 3 belonging to RAN3) belonging to another RAN (or starting up or operating another RAN) and may be utilized for the RAN configuration of another device.

For example, when the value of a request mode field included in an ADV-RESP transmitted by a responder (or Initiator 2 of another RAN) in response to an ADV-POLL transmitted by Initiator 1 is the second value, Initiator 1 may broadcast CUI. Accordingly, other neighboring devices (i.e., initiator 3) as well as a responder transmitting a response message may also obtain the CUI of Initiator 1. Specifically, Initiator 3 may opportunistically scan a CUI message from Initiator 1. In this way, even without performing a two-way handshake procedure through receiving an ADV-POLL and responding to an ADV-RESP, Initiator 3 may obtain CUI information related to another initiator (or another RAN) and utilize it to change the channel of RAN3 that is starting up or operating RAN3. For example, Initiator 3 may select/determine a channel related to RAN3 by avoiding (i.e., avoiding overlapping) a channel related to Initiator 1 (or RAN1).

For example, Initiator 2 and Initiator 3 may obtain the same CUI of Initiator 1 and utilize it to select/determine a channel related to their RAN (or by avoiding a channel related to Initiator 1/RAN1). In this case, when Initiator 2 and Initiator 3 do not know information on each other's channel, they may attempt to access the same UWB medium at the same time. Such a collision problem may be avoided or reduced through a backoff timer, a random delay timer, etc. For example, a device attempting to access a channel selected based on (or by avoiding) CUI broadcast by another device may select a backoff/random delay timer based on a predetermined rule and perform access to a corresponding channel at the expiration of a timer.

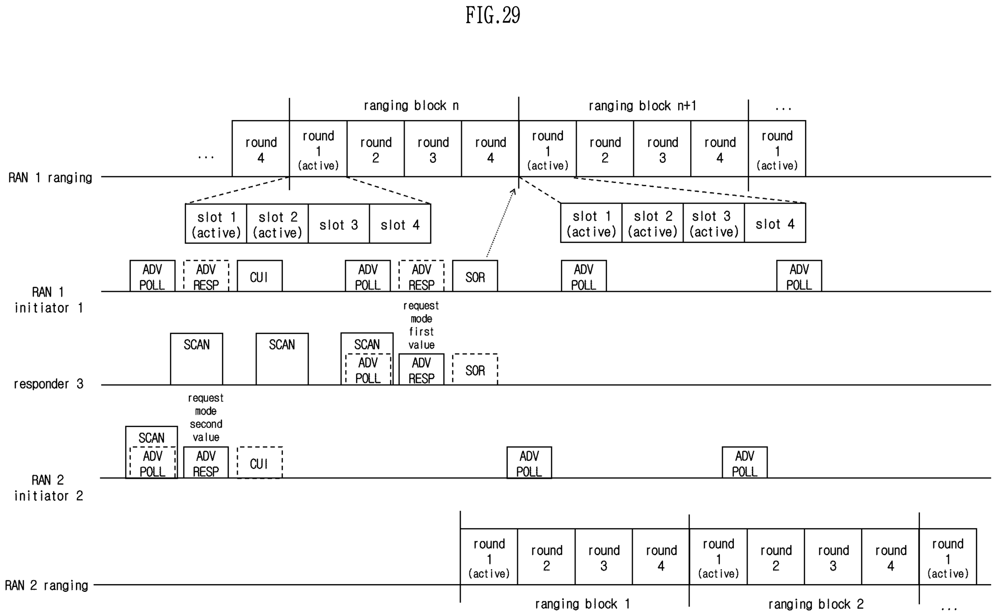

FIG. 29 represents an example of exchange of channel use coordination information and ranging session concurrent between devices belonging to a different RAN according to the present disclosure.

In the example of FIG. 29, it is assumed that Initiator 1, Responder 1 and Responder 2 belonging to RAN1 are in a ranging operation and Responder 3 is performing UWB scanning. In addition, it is assumed that Initiator 2 that is starting up or operating another RAN (e.g., RAN2) exists.

Initiator 1 belonging to RAN1 is conducting a ranging session with Responder 1 and Responder 2 (on a ranging channel) and may periodically broadcast an ADV-POLL message on a discovery (or initialization) channel.

Responder 3 may perform scanning on a discovery (or initialization) channel to participate in the ranging session of RAN1. Responder 3 discovering/receiving an ADV-POLL transmitted from Initiator 1 in a scanning process may transmit an ADV-RESP to Initiator 1. Here, the value of a request mode field included in an ADV-RESP transmitted by Responder 3 may be set as the first value (i.e., a ranging session is requested). When Initiator 1 receives an ADV-RESP from Responder 3 and a request mode field represents the first value (i.e., a ranging session is requested), SOR may be transmitted to Responder 3 in response thereto. Responder 3 receiving SOR may participate in a ranging session in the next ranging block. For example, Responder 3 may know that ranging round 1 is an active round in ranging block n+1 based on time offset, ranging channel information, etc. included in SOR and may start to participate in RAN1 in slot 3 among the active slots 1, 2 and 3 within an active ranging round.

Initiator 2 which is starting up or operating RAN2 may scan a discovery (or initialization) channel for channel use coordination. Initiator 2 discovering/receiving an ADV-POLL transmitted by Initiator 1 through scanning may transmit an ADV-RESP to Initiator 1. Here, the value of a request mode field included in an ADV-RESP transmitted by Initiator 2 may be set as the second value (i.e., channel use information (CUI) is requested). When Initiator 1 receives an ADV-RESP from Initiator 2 and a request mode field represents the second value (i.e., CUI is requested), CUI may be transmitted to Initiator 2 in response thereto. Initiator 2 receiving CUI may schedule/configure the ranging session and ranging channel of RAN2 to avoid overlapping with RAN1 and start RAN2. For example, Initiator 2 may obtain the scheduling information of RAN1 (e.g., a ranging round duration, the number of rounds, an active round, etc.). Initiator 2 may configure its (or RAN2's) channel to avoid overlapping with a channel related to Initiator 1 (or RAN1). In addition, Initiator 2 may periodically broadcast its ADV-POLL to avoid overlapping with Initiator 1 on a discovery (or initialization) channel.

Unlike the existing UWB system in which the channel information of a RAN may not be shared with other devices in discovery (or initialization) and setup processes, but is provided only through a channel use coordination procedure through a NB-AP or an UWB-AP, in the present disclosure, a ranging session request or a channel use information request may be simultaneously performed through a response message to an advertising message (e.g., ADV-POLL) and other devices that do not transmit a response message may also obtain the channel use information of an advertising device, so ranging session participation and/or channel use information sharing may be supported more quickly and efficiently and accordingly, a new effect of reducing a collision through channel avoidance between devices belonging to a different RAN may be achieved.

Discovery/Initialization and Setup Based on Various Advertising-Related Packet Formats

Hereinafter, advertising based on various packet formats that may be applied to native discovery/initialization and setup for NBA-MMS-UWB is described.

As described above, for discovery/initialization, an initiator may perform advertising to introduce itself, and a responder may perform scanning to discover it. A responder may perform ranging session setup based on advertising information obtained. For various use cases for this discovery/initialization and session setup, various options may be considered, such as a case in which advertising that supports the privacy of a device (i.e., private advertising) is needed and a case in which public advertising is needed. Accordingly, discovery/initialization and setup may be supported on in-band (i.e., a NB channel/an UWB channel) (i.e., without exchanging information through OOB).

To this end, it is necessary to define a private advertising message or a public advertising message (e.g., an advertising poll frame, an advertising response frame, an SOR frame, etc.). Various examples of the present disclosure for performing discovery/initialization and setup processes based on such various advertisings are described below.

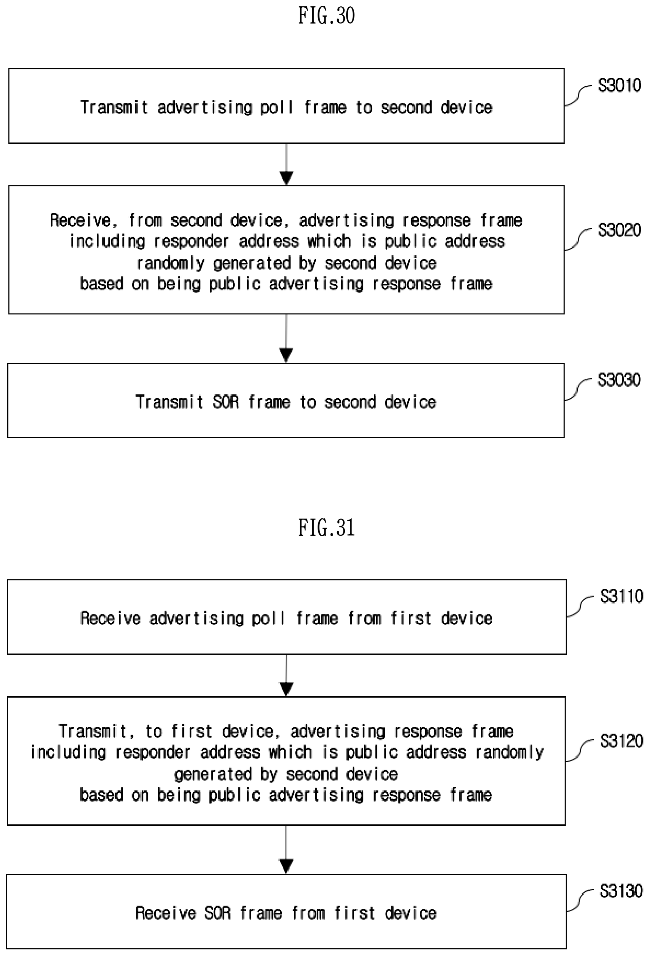

FIG. 30 is a diagram for describing the operation of the first device according to the present disclosure.

In the example of FIGS. 30 and 31, the first device may correspond to an initiator or a controller, and the second device may correspond to a responder or a controlee.

In S3010, the first device may transmit an advertising poll frame to the second device.

In S3020, the first device may receive an advertising response frame from the second device. For example, when an advertising response frame is a public advertising response frame, a public advertising response frame may include a responder address which is a public address randomly generated by the second device. For example, a public address randomly generated by the second device may be a 2-octet short address, an 8-octet extended address or an address having a length distinct from 2 octets and 8 octets (e.g., 3-octet).

For example, when an advertising poll frame is a public advertising poll frame that includes an advertiser address, for a public advertising response frame, by the second device, an advertiser address may be used as a destination address and a responder address may be used as a source address. For example, an advertiser address may be a public address randomly generated by the first device. Here, a public address randomly generated by the first device may be a 2-octet short address, an 8-octet extended address or an address having a length distinct from 2 octets and 8 octets (e.g., 3-octet).

For example, an advertiser address included in a public advertising response frame may be the same as an advertiser address included in a public advertising poll frame.

In S3030, the first device may transmit an SOR frame to the second device.

For example, when an SOR frame is a public SOR frame, for a public SOR frame, by the first device, a responder address may be used as a destination address and a advertiser address may be used as a source address.

For example, an advertiser address included in a public SOR frame may be the same as an advertiser address included in a public advertising poll frame, and may be the same as an advertiser address included in a public advertising response frame. In addition, a responder address included in a public SOR frame may be the same as a responder address included in a public advertising response frame.

Although not shown in FIG. 30, an advertising confirmation frame may be transmitted from the first device to the second device before transmitting an SOR frame after receiving an advertising response frame. For example, when an advertising confirmation frame is a public advertising confirmation frame, an advertiser address included in a public advertising confirmation frame may be the same as an advertiser address included in a public advertising poll frame, may be the same as an advertiser address included in a public advertising response frame, and may be the same as an advertiser address included in a public SOR frame.

The public addresses described through the example of FIG. 30 (e.g., a public address randomly generated by the first device and a public address randomly generated by the second device) may not be changed for a public advertising poll frame, a public advertising response frame and a public SOR frame (and a public advertising confirmation frame) while the first device and the second device are within a ranging session.

In addition, for each of at least one of an advertising poll frame, an advertising response frame, an SOR frame and an advertising confirmation frame described through the example of FIG. 30, a plurality of frame formats (or packet formats) may be defined regarding whether a public address is used. Furthermore, for each of at least one of a poll frame, a response frame and a report frame transmitted or received in a ranging session, a plurality of frame formats (or packet formats) may be defined regarding whether a public address is used. In other words, a frame format that uses a public address and a frame format that does not use a public address (or uses a private address) may be defined. These frame formats distinguished according to whether a public address is used may be distinguished by a message ID (or a frame identifier), may be distinguished by an address type or may be distinguished by the same message ID (or frame identifier) and a distinct subtype (or an extended identifier).

For example, when distinguished by a frame identifier, a frame format may be distinguished as follows. For example, when a plurality of advertising poll frames are defined regarding whether a public address is used, a frame identifier field included in an advertising poll frame may be set as a different value for a plurality of advertising poll frames. For example, when a plurality of advertising response frames are defined regarding whether a public address is used, a frame identifier field included in an advertising response frame may be set as a different value for a plurality of advertising response frames. For example, when a plurality of SOR frames are defined regarding whether a public address is used, a frame identifier field included in an SOR frame may be set as a different value for a plurality of SOR frames. For example, when a plurality of advertising confirmation frames are defined regarding whether a public address is used, a frame identifier field included in an advertising confirmation frame may be set as a different value for a plurality of advertising confirmation frames.

An advertising poll frame, an advertising response frame, an SOR frame and an advertising confirmation frame described through the example of FIG. 30 may be transmitted or received on a narrowband (NB) channel or a UWB channel. Furthermore, a poll frame, a response frame and a report frame in a ranging session may be transmitted or received on an NB channel or a UWB channel.

A (public) advertising poll frame, a (public) advertising response frame, a (public) advertising confirmation frame, a (public) SOR frame, a (public) poll frame in a ranging session, a (public) response frame in a ranging session and a (public) report frame in a ranging session according to various examples of the present disclosure may be included in a UWB PPDU (e.g., a PPDU including SHR, PHR and PHY payloads described by referring to FIGS. 2 and 3). Alternatively, a (public) advertising poll frame, a (public) advertising response frame, a (public) advertising confirmation frame, a (public) SOR frame, a (public) poll frame in a ranging session, a (public) response frame in a ranging session and a (public) report frame in a ranging session according to various examples of the present disclosure may be included in an O-QPSK-based PPDU in an NB (e.g., a PPDU including the above-described preamble, SFD, PHR and payload). For example, a (public) advertising poll frame, a (public) advertising response frame, a (public) advertising confirmation frame, a (public) SOR frame, a (public) poll frame in a ranging session, a (public) response frame in a ranging session and a (public) report frame in a ranging session may be included in the PHY payload of a UWB/NB PPDU.

As a specific example for the operation of the first device, broadcasting of an advertising packet may be started according to the command of a higher layer such as the MAC layer of the first device. The first device (i.e., an advertiser) may generate a secured/private advertising packet or generate an unsecured/public advertising packet according to the security-related information of a higher layer (e.g., a security level, a security mode, etc.). The first device may broadcast a generated advertising packet at a predetermined time interval. If broadcasting is commanded to stop by a higher layer, an advertising packet transmission operation may be terminated.

A method described in the example of FIG. 30 may be performed by the first device 100 in FIG. 1. For example, at least one processor 102 of the first device 100 in FIG. 1 may be configured to generate an advertising poll frame including a frame identifier field and transmit an advertising poll frame to at least one second device through at least one transceiver 106. Here, based on a plurality of advertising poll frames being defined in relation to whether a public address is used for session initialization, a frame identifier field may be set as a different value for the plurality of advertising poll frames. For example, a processor 102 may generate various packets/messages (e.g., Advertising Poll Compact frame) such as ADV-POLL, ADV-POLL2, etc. described below based on information stored in a memory 104. Furthermore, at least one memory 104 of the first device 100 may store instructions for performing a method described in the example of FIG. 30 or examples described below when executed by at least one processor 102.

FIG. 31 is a diagram for describing the operation of the second device according to the present disclosure.

In S3110, the second device may receive an advertising poll frame from the first device.

In S3120, the second device may transmit an advertising response frame to the first device.

In S3130, the second device may receive an SOR frame from the first device.

In the example of FIG. 31, since a detailed description related to a (public) advertising poll frame, a (public) advertising response frame, a (public) advertising confirmation frame, a (public) SOR frame, a (public) poll frame in a ranging session, a (public) response frame in a ranging session and a (public) report frame in a ranging session is the same as described by referring to FIG. 30, an overlapping description is omitted.

As a specific example for the operation of the second device, the second device may start a scanning operation according to the command of a higher layer. The second device (i.e., a scanner) may periodically scan a discovery/initialization channel to discover an advertising packet broadcast from the first device (i.e., an advertiser). When it is confirmed that an advertising packet is included within a PPDU discovered through scanning, a postprocessing step for processing according to a security level/a security mode may be performed based on security-related information included in a corresponding advertising packet (e.g., a security level, a security mode, etc.). In a postprocessing step, an operation that interprets/parses the security area of a secured/private advertising poll frame may be performed according to a security level/a security mode. When a scanner possesses information for interpreting/parsing a security area, necessary information within a security area (e.g., a private address) may be obtained and a two-way handshake operation for ranging session setup (e.g., advertising response frame transmission) may be performed. When necessary information is not obtained, a received advertising poll frame may not be used, and a scanning operation may continue until a command to stop scanning is provided by a higher layer. When a discovered/received advertising packet corresponds to an unsecured/public advertising poll frame, a scanner may interpret/parse a corresponding frame to perform a two-way handshake operation for ranging session setup.

A method described in the example of FIG. 31 may be performed by the second device 200 of FIG. 1. For example, at least one processor 202 of the second device 200 in FIG. 1 may be configured to receive an advertising poll frame including a frame identifier field from the first device through at least one transceiver 206 and perform a session initialization process based on information included in an advertising poll frame. Here, based on a plurality of advertising poll frames being defined in relation to whether a public address is used for session initialization, a frame identifier field may be set as a different value for the plurality of advertising poll frames. A message/a packet received through a transceiver 206 may be stored in a memory 204. A processor 202 may perform decoding on a message/a packet stored in a memory 204. A processor 202 may obtain control information included in a message/a packet and store obtained control information in a memory 204. A processor 202 may remove noise and interference through amplification and filtering and convert a signal into binary data through sampling, demodulation and decoding processes. For example, in a decoding process, a BPSK or O-QPSK demodulator may be used, and a process of mapping a chip to a symbol, convolution, Reed-Solomon decoding, etc. may be performed. The reconstructed data may be used to extract original information transmitted by a transmitting end. This process may include various error correction and data recovery techniques to check if transmitted data is correctly received. In addition, a processor 202 may decode the data field of a packet received through a transceiver 206. In addition, a processor 202 may process decoded data. For example, a processor 202 may transmit information on a decoded data field to a higher layer (e.g., a MAC layer) and, when the generation of a signal is indicated from a higher layer to a PHY layer in response thereto, perform a subsequent operation. Furthermore, at least one memory 204 of a second device 200 may store instructions for performing a method described in the example of FIG. 31 or examples described below when executed by at least one processor 202.

The examples of FIGS. 30 and 31 may correspond to some of the various examples of the present disclosure. Hereinafter, various examples of the present disclosure including the example of FIGS. 30 and 31 will be described in more detail.

An advertising poll packet format, an advertising response packet format and an SOR packet format for NBA-MMS-UWB proposed in the present disclosure may be defined as shown in the following examples.

Embodiment 1

This embodiment relates to a method for defining an advertising poll packet format, an advertising response packet format and an SOR packet format related to private advertising.

For clarity of description, a poll packet format related to private advertising is referred to as an ADV-POLL packet format, a response packet format related to private advertising is referred to as an ADV-RESP packet format (e.g., Advertising Response Compact frame) and an SOR packet format related to private advertising is referred to as an SOR packet format.

A static address in a message header may enable an unintended user to track a mobile device.

To protect against such tracking, for private advertising, an address for privacy protection (i.e., a privacy protected address) may be used.

For example, a resolveable private address (RPA) may be used for private advertising. A public address may be information that only an initiator and responder(s) must know.

In this regard, an advertiser (advertise) that broadcasts an advertising packet and a scanner that scans it may have a pre-defined resolving list. A pre-defined resolving list may be used before mutual communication between an advertiser and a scanner (e.g., two-way handshake, communication after link establishment, etc.) is performed. Accordingly, a method for mutually exchanging it through an implementation-typed method may be provided. As an example, a table for an advertiser address resolving list may be defined in advance, and a common distribution method may be used.

After at least two devices perform discovery through an advertising process and a scanning process, address verification on whether it is the same as a discovery result may be performed in a session setup phase, etc. A random address may be changed periodically by an advertiser, and a changed value may be generated based on a key pair in a resolving list.

A private address may consist of a private address and a private salt (e.g., AES-128-ECB(key=PublicAddress, data=(padding || PrivateSalt)). For example, a POLL packet format or an ADV-POLL packet format may be configured by including a 3-octet private address field (PrivAddr) and a 3-octet private salt (PrivSalt), and another narrowband (NB) packet format may be configured by including a 3-octet private address field.

(Embodiment 1-1. ADV-POLL Packet Format)

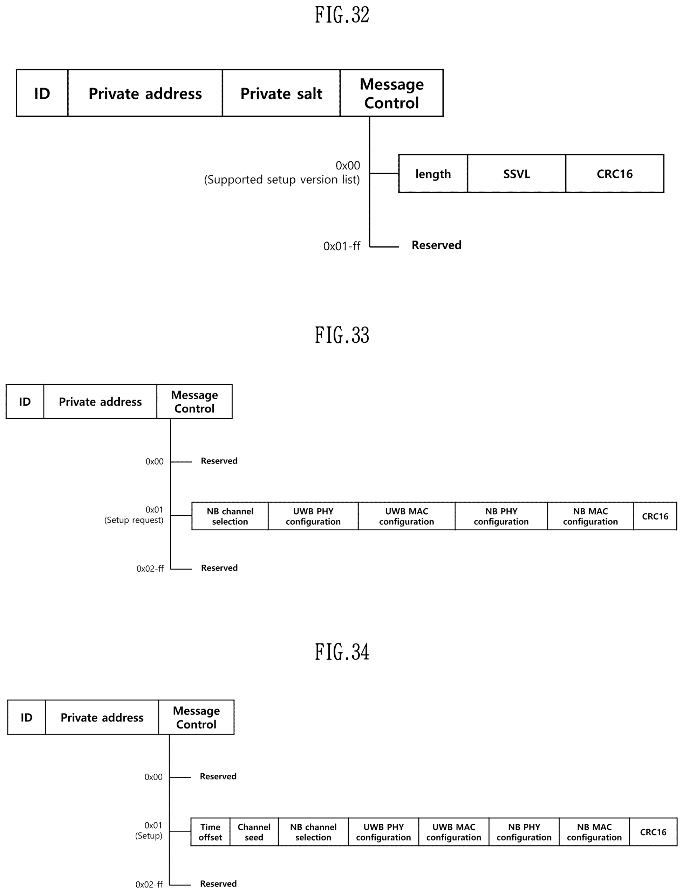

FIG. 32 represents an example of a private address-based advertising poll packet format according to the present disclosure.

Referring to FIG. 32, a private address-based ADV-POLL packet format may include a message ID field, a private address (e.g., RPA Hash) field, a private salt (e.g., RPA Prand) field, a message control field and a message content field.

For example, a message ID field may indicate that a corresponding packet has an ADV-POLL packet format.

Regarding a private address field and a private salt field, an advertiser broadcasting an advertising packet and a scanner scanning it may have a pre-defined resolving list. A pre-defined resolving list may consist of local and peer resolving key pairs. A resolving list may be used before mutual communication between an advertiser and a scanner (e.g., two-way handshake, communication after link establishment, etc.) is performed. Accordingly, a method for mutually exchanging it through an implementation-typed method may be provided. As an example, a table for an advertiser address resolving list may be defined in advance, and a common distribution method may be used.

After at least two devices perform discovery through an advertising process and a scanning process, address verification on whether it is the same as a discovery result may be performed in a session setup phase, etc. A random address may be changed periodically by an advertiser, and a changed value may be generated based on a key pair in a resolving list.

A message control field may be defined to set the message content placed later. Each field of the message content divided by a message control field may be included or omitted, respectively.

For example, a message content format corresponding to "0x00" indicated by a message control field may consist of the length field of a supported setup version list (SSVL) (e.g., Supported Message Control, SMC) and a supported setup version list field. For a corresponding format, a CRC field (e.g., CRC16) may be added. In this regard, other values indicated by a message control field (e.g., values "0x01 to ff") may be defined as being reserved.

(Embodiment 1-2. ADV-RESP Packet Format)

FIG. 33 represents an example of a private address-based advertising response packet format according to the present disclosure.

Referring to FIG. 33, a private address-based ADV-RESP packet format may include a message ID field, a private address (e.g., RPA Hash) field, a message control field and a message content field. In this regard, information about a private salt (e.g., RPA Prand) may be obtained through an ADV-POLL packet format.

For example, a message ID field may indicate that a corresponding packet has an ADV-RESP packet format (e.g., value "0x21").

Regarding a private address field, an advertiser broadcasting an advertising packet and a scanner scanning it may have a pre-defined resolving list. A pre-defined resolving list may consist of local and peer resolving key pairs. A resolving list may be used before mutual communication between an advertiser and a scanner (e.g., two-way handshake, communication after link establishment, etc.) is performed. Accordingly, a method for mutually exchanging it through an implementation-typed method may be provided. As an example, a table for an advertiser address resolving list may be defined in advance, and a common distribution method may be used.

After at least two devices perform discovery through an advertising process and a scanning process, address verification on whether it is the same as a discovery result may be performed in a session setup phase, etc. A random address may be changed periodically by an advertiser, and a changed value may be generated based on a key pair in a resolving list.

A message control field may be defined to set the message content placed later. Each field of the message content divided by a message control field may be included or omitted, respectively.

A message content format corresponding to "0x01" indicated by a message control field (e.g., a setup request) may consist of an NB channel selection field, a UWB PHY configuration field, a UWB MAC configuration field, an NB PHY configuration field and an NB MAC configuration field. For a corresponding format, a CRC field (e.g., CRC16) may be added. In this regard, other values indicated by a message control field (e.g., value "0x00", values "0x02 to ff") may be defined as being reserved.

For example, an NB channel selection field may be defined based on Table 18.

[Table 18]

| Field | Bit Length | Description |
|---|---|---|
| NB Channel Selection | 16 | Bits 0-1: UNII-3 border channel exclusion {0, 1, 3, 7} |
| | | Bits 2-4: UNII-5 low-side channel excusion {0, 1, 3, 7, 15, 31, 63, 127} |
| | | Bits 5-7: UNII-5 high-side channel excusion {0, 1, 3, 7, 15, 31, 63, 127} |
| | | Bits 8-12: low-side channel start offset {0-31} |
| | | Bits 13-15: Channel skip length {0, 1, 3, 7, 15, 31, 63, 127} |

For example, a UWB PHY configuration field may be defined based on Table 19.

[Table 19]

| Field | Bit Length | Description |
|---|---|---|
| UWB PHY Configuration | 16 | Bits 0-3: RSF Code Index {33, ..., 48} |
| | | Bits 4-10: RSF complementary set zeros Code Index {0, ..., 64} |
| | | Bits 11-13: N_MSR {32, 40, 48, 64, 128, 256} |
| | | Bits 14-15: STS Segment Length x512 {32, 64, 128, 256} |

For example, a UWB MAC configuration field may be defined based on Table 20.

[Table 20]

| Field | Bit Length | Description |
|---|---|---|
| UWB MAC Configuration | 8 | Bits 0-2: {0, 1, 2, 4, 8, 16} X RSFs |
| | | Bits 3-5: {0, 1, 2, 4, 8} Y RIFs |
| | | Bit 6: {1ms/2ms} Z RSF-to-RIF gap |
| | | Bit 7: Reserved |

For example, an NB PHY configuration field may be defined based on Table 21.

[Table 21]

| Field | Bit Length | Description |
|---|---|---|
| NB PHY Configuration | 8 | Set O-QPSK PHY #1-#10 in section 1.2.3 {#1: 250k uncoded, ..., #10} |
| | | Bits 0-3: NB Control Phase |
| | | Bits 4-7: NB Report Phase |

For example, an NB MAC configuration field may be defined based on Table 22.

[Table 22]

| Field | Bit Length | Description |
| --- | --- | --- |
| NB MAC Configuration | 64 | Bits 0-4: UWB Channel {1, ..., 32} |
| | | Bits 5-7: Ranging Slot Duration {300, 600, ..., 2400} RSTUs |
| | | Bits 8-15: Ranging Round Duration 0-255 ranging slots |
| | | Bits 16-23: Ranging Block Duration 0-255 ranging rounds |
| | | Bit 24: Channel Switching: 0 = Disabled, 1 = Blockwise |
| | | Bit 25: Measurement Report Request: |
| | | 0 = No, 1 = Yes |
| | | Bits 26-31: Reserved |
| | | Bits 32-35: RcpPollSlots = 0-15 |
| | | Bits 36-39: RcpResponseSlots = 0-15 |
| | | Bits 40-51: RpDuration = 0-4095 |
| | | Bits 52-55: RpOffset = 0-15 |
| | | Bits 56-59: MrpFirstSlots = 0-15 |
| | | Bits 60-63: MrpSecondSlots = 0-15 |

(Embodiment 1-3. SOR Packet Format) FIG. 34 represents an example of a private address-based ranging start packet format according to the present disclosure (e.g., Start of Ranging Compact Frame).

Referring to FIG. 34, a private address-based SOR packet format may include a message ID field, a private address field, a message control field and a message content field. In this regard, information about a private salt may be obtained through an ADV-POLL packet format.

For example, a message ID field may indicate that a corresponding packet has an SOR packet format (e.g., value "0x22").

Regarding a private address field, an advertiser broadcasting an advertising packet and a scanner scanning it may have a pre-defined resolving list. A pre-defined resolving list may consist of local and peer resolving key pairs. A resolving list may be used before mutual communication between an advertiser and a scanner (e.g., two-way handshake, communication after link establishment, etc.) is performed. Accordingly, a method for mutually exchanging it through an implementation-typed method may be provided. As an example, a table for an advertiser address resolving list may be defined in advance, and a common distribution method may be used.

After at least two devices perform discovery through an advertising process and a scanning process, address verification on whether it is the same as a discovery result may be performed in a session setup phase, etc. A random address may be changed periodically by an advertiser, and a changed value may be generated based on a key pair in a resolving list.

A message control field may be defined to set the message content placed later. Each field of the message content divided by a message control field may be included or omitted, respectively.

A message content format (e.g., setup) corresponding to "0x01" indicated by a message control field includes an NB channel selection field, a UWB PHY configuration field, a UWB MAC configuration field, an NB PHY configuration field and an NB MAC configuration field like the above-described ADV-RESP packet format (e.g., a format in FIG. 33), and a time offset field and a channel seed field may be added to the front of a corresponding format. Here, a time offset field indicates the time between an SOR packet and the poll packet of the first ranging block, and may be allocated within the range of 0-65535us. A channel seed field may be defined to initialize a channel switching function. For a corresponding format, a CRC field (e.g., CRC16) may be added. In this regard, other values indicated by a message control field (e.g., value "0x00", values "0x02 to ff") may be defined as being reserved.

Based on the above-described description, an ADV-POLL packet format, an ADV-RESP packet format and an SOR packet format for private advertising may be defined.

In this regard, a private address and a private salt may be controlled at the start time point of each ranging block to prevent an initiator from tracking device(s) through a PSDU header address. As an example, a device MAC address (e.g., an IEEE 802.15.4-based device MAC address), a PAN ID, a source short address and a destination short address may be used to generate a private address. Additionally, a message control field may define various message content formats to activate a sub-function (e.g., future-proof handshaking) for each message. Additionally, a handshake setup protocol may enable an in-band NBA-MMS-UWB configuration and the start of a ranging session.

Embodiment 2

This embodiment relates to a method for defining an advertising poll packet format, an advertising response packet format and an SOR packet format related to public advertising.

An advertising poll (ADV_POLL) may be broadcast on a discovery/initialization channel. In a use case where privacy must be guaranteed, it is necessary to advertise securely to a single device or a device group confirmed through a procedure such as authentication, etc. in advance. Alternatively, in a use case where it is required/allowed to establish a ranging session with an unspecified number of persons, a public(i.e., non-privacy)/unsecured advertising method is necessary to allow an arbitrary device to interpret an advertising packet such as an advertising poll.

A new ID, i.e., a new message/packet ID may be allocated/defined to support a packet format for advertising such as unsecured/public described above.

For clarity of description, a poll packet format related to public advertising is referred to as an ADV-POLL2 packet format, a response packet format related to public advertising is referred to as an ADV-RESP2 packet format and an SOR packet format related to public advertising is referred to as an SOR2 packet format.

(Embodiment 2-1. ADV-POLL2 Packet Format)

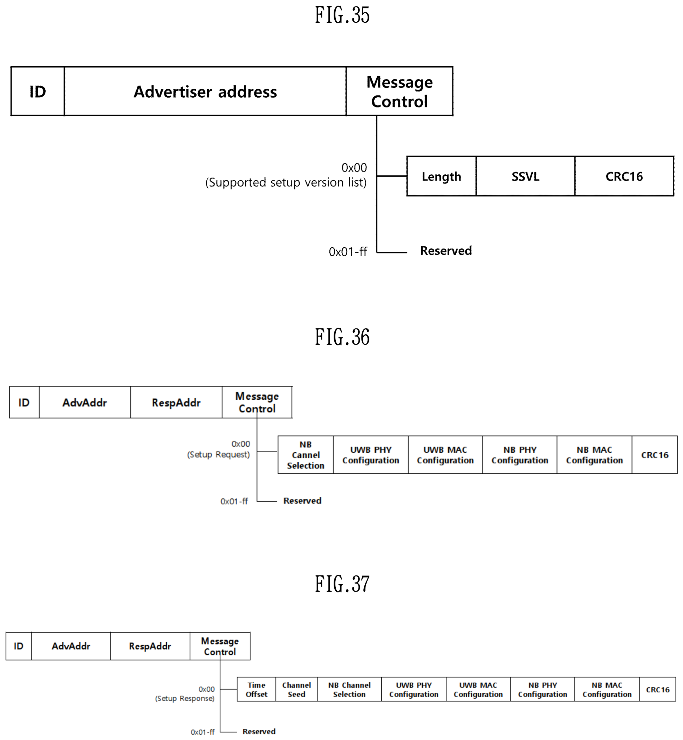

FIG. 35 represents an example of a poll packet format for public advertising according to the present disclosure (e.g., Advertising Poll Compact frame).

Referring to FIG. 35, an ADV-POLL2 packet format for public advertising may include a message ID field, an advertiser address field, a message control field and a message content field.

For example, a message ID field may indicate that a corresponding packet has an ADV-POLL2 packet format (e.g., value "0x23").

An advertiser address field indicates the address of an advertiser, and when a corresponding address is specified/included in a header, an advertiser address field may be omitted.

A public address or a random address may be used as an advertiser address. A public address corresponds to an address allocated to a device and may be based on a short address or an extended address. A random address may correspond to an address arbitrarily generated by an advertiser to prevent a public address from being directly exposed, and a rule for generating a random address may be as follows.

For example, when an advertiser is a controller, a random address may be generated as an arbitrary short address, an arbitrary extended address or another form of address. In this case, a controller may select a unique value among the addresses used within a ranging area network (RAN).

When a random address is used, tracking by an unspecified device may be prevented by periodically changing it (e.g., every 5 minutes). After discovery between devices is performed through an advertising/scanning process, an advertiser corresponding to a controller manages a random address, and may also temporarily manage a session. In this case, when a session ends, the value of an address obtained when a scanner discovers an advertiser may be changed, so a corresponding address may not be used any more. Additionally, a resolving list such as IRK may be exchanged according to a trusted device verification procedure (e.g., mutual verification during two-way handshake). In this case, resolving key pairs within a resolving list may be used to extract/store information such as a resolvable private address.

A message control field may be defined to set the message content placed later. Each field of the message content divided by a message control field may be included or omitted, respectively.

For example, a message content format corresponding to "0x00" indicated by a message control field may consist of the length field of a supported setup version list (SSVL) and a supported setup version list field. For a corresponding format, a CRC field (e.g., CRC16) may be added. In this regard, other values indicated by a message control field (e.g., values "0x01 to ff") may be defined as being reserved.

Additionally, messages used in two-way handshake with ADV-POLL2 for public (non-private) advertising may be defined as an ADV-RESP2 packet and an SOR2 packet.

(Embodiment 2-2. ADV-RESP2 Packet Format)

FIG. 36 represents an example of a response packet format for public advertising according to the present disclosure (e.g., Advertising Response Compact frame).

Referring to FIG. 36, an ADV-RESP2 packet format for public advertising may include a message ID field, an advertiser address field, a message control field and a message content field.

For example, a message ID field may indicate that a corresponding packet has an ADV-RESP2 packet format (e.g., value "0x24").

An advertiser address included in an advertiser address field may be abbreviated as AdvAddr, or an initiator address included in an advertiser address field may be abbreviated as InitiatorAddr. In addition, a responder address included in a responder address (or scanner address) field may be abbreviated as RespAddr, or a scanner address included in a responder address field may be abbreviated as ScannerAddr. In the present disclosure, an advertiser/initiator address is primarily referred to as the abbreviation AdvAddr, but the scope of the present disclosure is not limited thereto and may be substituted with other abbreviations. In addition, in the present disclosure, a responder/scanner address is primarily referred to as the abbreviation RespAddr, but the scope of the present disclosure is not limited thereto and may be substituted with other abbreviations.

The AdvAddr field of an ADV-RESP2 frame may be set as the same value as an address obtained from ADV-POLL2 (or a public advertising poll frame, or a public advertising poll compact frame) (i.e., the value of an advertiser address field included in an ADV-POLL2 frame). In addition, the AdvAddr field of an ADV-RESP2 frame may be the destination address of an ADV-RESP2 frame. If a destination address is specified/included in a header, an AdvAddr field may be omitted.

The RespAddr field of an ADV-RESP2 frame may indicate the address of a responder/a scanner, and when a corresponding address is specified/included in a header, an RespAddr field may be omitted. A public address or a random address may be used as a responder address. A public address corresponds to an address allocated to a device and may be based on a short address or an extended address. A random address may correspond to an address arbitrarily generated by an advertiser to prevent a public address from being directly exposed, and a rule for generating a random address may be as follows.

For example, when an advertiser is a controller, a random address may be generated as an arbitrary short address, an arbitrary extended address or another form of address. In this case, a controller may select a unique value among the addresses used within a ranging area network (RAN).

When a random address is used, tracking by an unspecified device may be prevented by periodically changing it (e.g., every 5 minutes). After discovery between devices is performed through an advertising/scanning process, an advertiser corresponding to a controller manages a random address, and may also temporarily manage a session. In this case, when a session ends, the value of an address obtained when a scanner discovers an advertiser may be changed, so a corresponding address may not be used any more. Additionally, a resolving list such as IRK may be exchanged according to a trusted device verification procedure (e.g., mutual verification during two-way handshake). In this case, resolving key pairs within a resolving list may be used to extract/store information such as a resolvable private address.

A responder address may be the source address of an ADV-RESP2 frame. If a source address is specified/included in a header, an RespAddr field may be omitted. Specifically, a responder address included in RespAddr may be generated by a responder. That is, a responder may generate RespAddr (e.g., a public address randomly generated by a responder) to be included in the responder address field of an ADV-RESP2 frame. RespAddr may be generated as a 2-octet short address or an 8-octet address as described above, or may be generated as an address having a different length (e.g., 3-octet) distinct from 2-octet and 8-octet as described below. The generated RespAddr may also be configured as a source address. When a source address is included in an MAC header (MHR), an RespAddr field may be omitted.

A message control field may be defined to set the message content placed later. Each field of the message content divided by a message control field may be included or omitted, respectively.

A message content format configuration in an ADV-RESP2 packet format may be the same as/similar to a message content format configuration in the above-described ADV-RESP packet format (e.g., see FIG. 33).

For example, a message content format corresponding to "0x00" indicated by a message control field (e.g., a setup request) may consist of an NB channel selection field, a UWB PHY configuration field, a UWB MAC configuration field, an NB PHY configuration field and an NB MAC configuration field. For a corresponding format, a CRC field (e.g., CRC 16) may be added. In this regard, other values indicated by a message control field (e.g., values "0x01 to ff") may be defined as being reserved.

(Embodiment 2-3. SOR2 Packet Format)

FIG. 37 represents an example of a ranging start packet format for public advertising according to the present disclosure (e.g., Start of Ranging Compact Frame).

Referring to FIG. 37, an SOR packet format for public advertising may include a message ID field, an advertiser address field, a message control field and a message content field.

For example, a message ID field may indicate that a corresponding packet has an SOR2 packet format (e.g., value "0x25").

The advertiser address (AdvAddr) field of an SOR2 frame may be set as the same value as an address obtained from ADV-RESP2 (i.e., the value of the AdvAddr field of an ADV-RESP2 frame). In addition, when an advertiser uses a random/public address, the same value as a value included as an advertiser address in an ADV-POLL2 frame which is the start of the initial two-way handshake may be used as the value of the AdvAddr field of an SOR2 frame. AdvAddr may be the source address of an SOR2 frame.

The responder/scanner address (RespAddr) field of an SOR2 frame may be set as the same value as an address obtained from ADV-RESP2 (i.e., the value of the RespAddr field of an ADV-RESP2 frame). RespAddr may be the destination address of an SOR2 frame. When a destination address is included in a header, an RespAddr field may be omitted. If the responder address of ADV-RESP2 overlaps on a network, an SOR2 frame may not be transmitted.

A message control field may be defined to set the message content placed later. Each field of the message content divided by a message control field may be included or omitted, respectively.

A message content format configuration in an SOR2 packet format may be the same as/similar to a message content format configuration in the above-described SOR packet format (e.g., see FIG. 34).

For example, a message content format (e.g., setup) corresponding to "0x00" indicated by a message control field includes an NB channel selection field, a UWB PHY configuration field, a UWB MAC configuration field, an NB PHY configuration field and an NB MAC configuration field like the above-described ADV-RESP packet format (e.g., a format in FIG. 33), and a time offset field and a channel seed field may be added to the front of a corresponding format. Here, a time offset field indicates the time between an SOR packet and the poll packet of the first ranging block, and may be allocated within the range of 0-65535us. A channel seed field may be defined to initialize a channel switching function. For a corresponding format, a CRC field (e.g., CRC16) may be added. In this regard, other values indicated by a message control field (e.g., values "0x01 to ff") may be defined as being reserved.

In examples described above, when session initialization is completed, the pair of an advertiser address (AdvAddr) and a responder address (RespAddr) may be stored identically in an advertiser and a responder/a scanner and may be used without change while maintaining a session.

(Embodiment 2-4. Additional Example 1 of ADV-POLL2 Packet Format)

Additionally, in an ADV-POLL2 packet format in Embodiment 2-1 described above (i.e., an ADV-POLL2 packet format illustrated in FIG. 35), an advertiser address may be defined to use a public address or a random address.

In this regard, an advertiser may determine the form/type of an address (e.g., a public address or a random address) and broadcast an advertising packet based thereon. In this case, a scanner receiving a corresponding packet may need a method for knowing the form/type of an address.

To provide information about an address type, an ADV-POLL2 packet format may be defined that additionally considers message control, i.e., the value of a message control field (i.e., a new message content format).

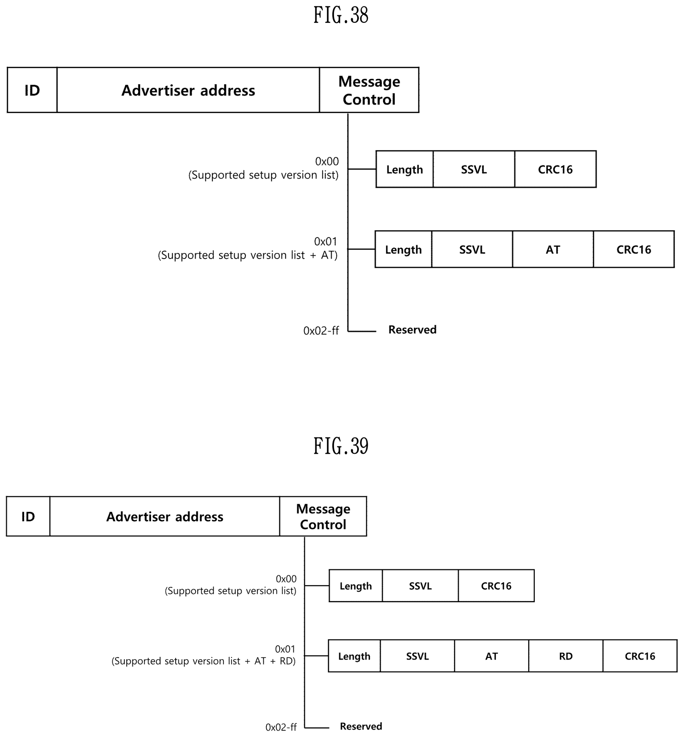

FIG. 38 represents another example of a poll packet format for public advertising according to the present disclosure.

Referring to FIG. 38, an ADV-POLL2 packet format for public advertising may include a message ID field, an advertiser address field, a message control field and a message content field.

In this case, other fields are the same as an ADV-POLL2 packet format in FIG. 35, and the message content that may be indicated by a message control field may be added to indicate information about an address type (AT).

A message control field may be defined to set the message content placed later. Each field of the message content divided by a message control field may be included or omitted, respectively.

For example, a message content format corresponding to "0x00" indicated by a message control field may consist of the length field of a supported setup version list (SSVL) and a supported setup version list field. Additionally, a message content format corresponding to "0x01" indicated by a message control field may consist of the length field of a supported setup version list (SSVL), a supported setup version list field and an address type (AT) field.

Here, an address type field indicates an address type applied to an advertising address, and the value of a corresponding field may be defined as shown in Table 23.

[Table 23]

| Address Type | Description |
| --- | --- |
| Bit: 0 | 0 = Public Address, 1 = Random Address |
| Bits: 1-7 | Reserved |

(Embodiment 2-5. Additional Example 2 of ADV-POLL2 Packet Format) For an ADV-POLL2 packet for public advertising, a collision is highly likely to occur when a scanner requests/transmits an ADV-RESP2 packet (i.e., an ADV-RESP2 packet in a two-way handshake process for an ADC-POLL2 packet) to an advertiser in an environment where an advertiser and multiple scanners are congested. Accordingly, a method for avoiding a corresponding collision may be necessary.

To avoid such a collision, a random delay (RD) field may be defined and utilized.

A random delay field may be used by an advertiser to transmit an advertising packet such as an ADV-POLL2 packet and by a responder receiving an advertising packet such as a corresponding ADV-POLL2 packet in a two-way handshake process to determine the response time of an advertising packet such as an ADV-RESP2 packet. In other words, a random delay field may be related to the response time of an advertising packet such as an ADV-POLL2 packet and an advertising response packet such as an ADV-RESP2 packet in a two-way handshake process.

When the value of a random delay field is 0, a responder may transmit a response packet immediately after receiving an advertising packet. When the value of a random delay field is not 0, a responder may defer and transmit a response packet (e.g., an ADV_RESP2 packet) through a method such as random delay backoff, etc. within a range based on a corresponding value. For example, in a public advertising method, a random delay may be applied to avoid the collision of a response packet in a congested environment with lots of potential responders. The value of a random delay field may be determined by a higher layer. For example, the unit of the value of a random delay field may be a ranging scheduling time unit (RSTU), or may be set as a value optimized for a requirement from an application.

Regarding the provision/delivery of a random delay field described above, an ADV-POLL2 packet format may be defined that additionally considers message control, i.e., the value of a message control field (i.e., a new message content format).

FIG. 39 represents another example of a poll packet format for public advertising according to the present disclosure.

Referring to FIG. 39, an ADV-POLL2 packet format for public advertising may include a message ID field, an advertiser address field, a message control field and a message content field.

In this case, other fields are the same as an ADV-POLL2 packet format in FIG. 38, and a field for indicating random delay (RD) information may be added to the specific message content.

A message control field may be defined to set the message content placed later. Each field of the message content divided by a message control field may be included or omitted, respectively.

For example, a message content format corresponding to "0x00" indicated by a message control field may consist of the length field of a supported setup version list (SSVL) and a supported setup version list field. Additionally, a message content format corresponding to "0x01" indicated by a message control field may consist of the length field of a supported setup version list (SSVL), a supported setup version list field, an address type (AT) field and a random delay (RD) field.

As described above, a corresponding random delay field may be used to determine the response time of an advertising packet such as ADV-POLL2 and an advertising response packet such as ADV-RESP2 in a two-way handshake process. When the value of a random delay field is 0, a responder may transmit a response packet immediately after receiving an advertising packet. When the value of a random delay field is not 0, a responder may defer and transmit a response packet (e.g., an ADV_RESP2 packet) by giving a random delay (e.g., through a method such as random delay backoff, etc.) within a range based on a corresponding value.

For example, in a public advertising method, a random delay may be applied to avoid the collision of a response packet in a congested environment with lots of potential responders. The value of a random delay field may be determined by a higher layer. For example, the unit of the value of a random delay field may be a ranging scheduling time unit (RSTU), or may be set as a value optimized for a requirement from an application.

(Embodiment 2-6. Additional Example 3 of ADV-POLL2 Packet Format)

For an ADV-POLL2 packet for public advertising, since it is broadcast to an unspecified number of persons in a channel for discovery/initialization, a corresponding packet may need to include information about the purpose of an ADV-POLL2 packet, etc.

Corresponding information may be referred to as advertising data (ADV Data, AdvData). When there are multiple advertisers around, a scanner receiving an ADV-POLL2 packet has a technical effect of selecting an advertising packet that it needs through corresponding information.

Regarding the provision/delivery of advertising data described above, an ADV-POLL2 packet format may be defined that additionally considers message control, i.e., the value of a message control field (i.e., a new message content format).

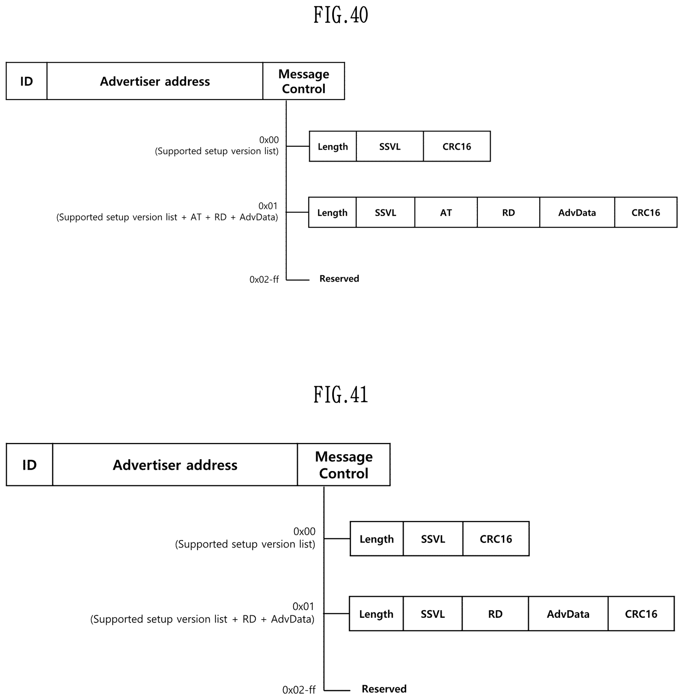

FIG. 40 represents another example of a poll packet format for public advertising according to the present disclosure.

Referring to FIG. 40, an ADV-POLL2 packet format for public advertising may include a message ID field, an advertiser address field, a message control field and a message content field.

In this case, other fields are the same as an ADV-POLL2 packet format in FIG. 39, and a field for indicating advertising data (AdvData) may be added to the specific message content.

A message control field may be defined to set the message content placed later. Each field of the message content divided by a message control field may be included or omitted, respectively.

For example, a message content format corresponding to "0x00" indicated by a message control field may consist of the length field of a supported setup version list (SSVL) and a supported setup version list field. Additionally, a message content format corresponding to "0x01" indicated by a message control field may consist of the length field of a supported setup version list (SSVL), a supported setup version list field, an address type (AT) field, a random delay (RD) field and an advertising data (AdvData) field.

An advertising data field may include information that an advertiser wants to announce. For example, a corresponding field may include the list of services supported by an advertiser, and this information may be defined in various forms. As an example, a method for defining/expressing in a form such as UUID to uniquely express a service may be applied. Additionally or alternatively, a corresponding field may include the friendly name of an advertiser, the type of a device, scheduling information such as an advertising interval and vendor-specific data wanted by an advertiser.

As described above, an advertising data field/format may be recursively configured based on a length-type-value form to include various types of information. As an example, an advertising data format may be configured in the order of a Length field, the first type field, the first value field, ..., a Length field, the Nth type field and the Nth value field. Alternatively, an advertising data field/format may be configured based on a type-length-value form. As an example, an advertising data format may be configured in the order of the first type field, a Length field, the first value field, ..., the Nth type field, a Length field and the Nth value field. Alternatively, an advertising data format may be configured in a form (e.g., a length + advertising data (length + AdvData) form) other than a length-type-value form or a type-length-value form.

Additionally, when it is assumed that the packet air-time of a narrowband (NB) is 1ms, an advertising data field/format may not exceed the remaining size obtained by excluding other fields (e.g., SSVL, AT, RD, etc.) from 24-bytes, the maximum size of a PDSU.

(Embodiment 2-7. Additional Example 4 of ADV-POLL2 Packet Format)

In an ADV-POLL2 packet format described in Embodiment 2-6 described above, an advertiser address may be defined to use only a random address to prevent tracking by an unwanted user by using a public address. In this case, an address type (AT) field included in the message content may be omitted. Additionally or alternatively, even when it is defined that only a public address is used, an address type (AT) field may be omitted.

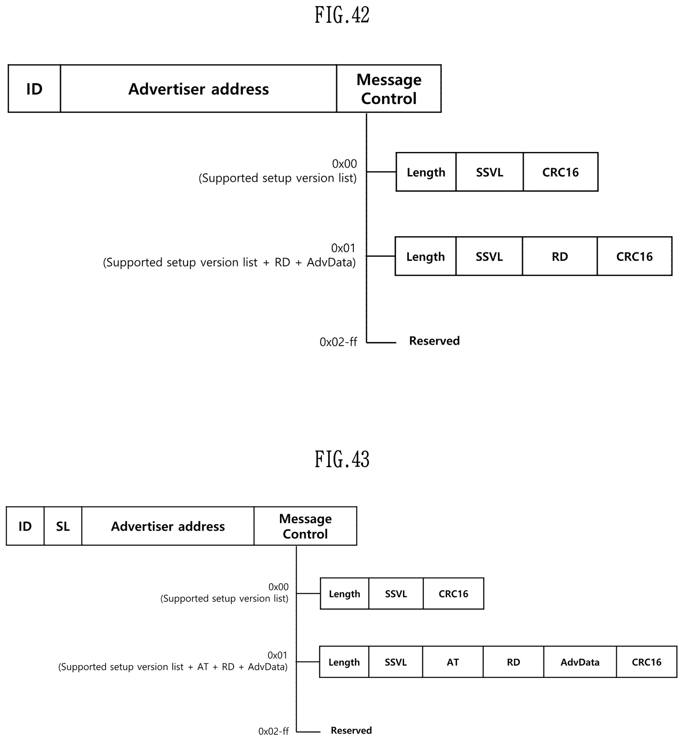

A corresponding method may be applied equally to other embodiments of the present disclosure (e.g., an ADV-POLL2 field format in FIG. 35 of Embodiment 2-1, an ADV-POLL2 field format in FIG. 38 of Embodiment 2-4, an ADV-POLL2 field format in FIG. 39 of Embodiment 2-5 and an ADV-POLL2 field format in FIG. 42 of Embodiment 2-8).

FIG. 41 represents another example of a poll packet format for public advertising according to the present disclosure.

Referring to FIG. 41, an ADV-POLL2 packet format for public advertising may include a message ID field, an advertiser address field, a message control field and a message content field.

For example, a message ID field may indicate that a corresponding packet has an ADV-POLL2 packet format (e.g., value "0x23").

An advertiser address field indicates the address of an advertiser, and when a corresponding address is specified/included in a header, an advertiser address field may be omitted.

As an advertiser address, a random address may be used. A random address may correspond to an address arbitrarily generated by an advertiser to prevent a public address from being directly exposed, and a rule for generating a random address may be as follows.

For example, when an advertiser is a controller, a random address may be generated as an arbitrary short address, an arbitrary extended address or another form of address. In this case, a controller may select a unique value among the addresses used within a ranging area network (RAN).

When a random address is used, tracking by an unspecified device may be prevented by periodically changing it (e.g., every 5 minutes). After discovery between devices is performed through an advertising/scanning process, an advertiser corresponding to a controller manages a random address, and may also temporarily manage a session. In this case, when a session ends, the value of an address obtained when a scanner discovers an advertiser may be changed, so a corresponding address may not be used any more. Additionally, a resolving list such as IRK may be exchanged according to a trusted device verification procedure (e.g., mutual verification during two-way handshake). In this case, resolving key pairs within a resolving list may be used to extract/store information such as a resolvable private address.

A message control field may be defined to set the message content placed later. Each field of the message content divided by a message control field may be included or omitted, respectively.

For example, a message content format corresponding to "0x00" indicated by a message control field may consist of the length field of a supported setup version list (SSVL) and a supported setup version list field. Additionally, a message content format corresponding to "0x01" indicated by a message control field may consist of the length field of a supported setup version list (SSVL), a supported setup version list field, a random delay (RD) field and an advertising data (AdvData) field.

A random delay field may be used by an advertiser to transmit an advertising packet such as an ADV-POLL2 packet and by a responder receiving an advertising packet such as a corresponding ADV-POLL2 packet in a two-way handshake process to determine the response time of an advertising packet such as an ADV-RESP2 packet. In other words, a random delay field may be related to the response time of an advertising packet such as an ADV-POLL2 packet and an advertising response packet such as an ADV-RESP2 packet in a two-way handshake process.

When the value of a random delay field is 0, a responder may transmit a response packet immediately after receiving an advertising packet. When the value of a random delay field is not 0, a responder may defer and transmit a response packet (e.g., an ADV_RESP2 packet) by giving a random delay (e.g., through a method such as random delay backoff, etc.) within a range based on a corresponding value. For example, in a public advertising method, a random delay may be applied to avoid the collision of a response packet in a congested environment with lots of potential responders. The value of a random delay field may be determined by a higher layer. For example, the unit of the value of a random delay field may be a ranging scheduling time unit (RSTU), or may be set as a value optimized for a requirement from an application.

An advertising data field may include information that an advertiser wants to announce. For example, a corresponding field may include the list of services supported by an advertiser, and this information may be defined in various forms. As an example, a method for defining/expressing in a form such as UUID to uniquely express a service may be applied. Additionally or alternatively, a corresponding field may include the friendly name of an advertiser, the type of a device, scheduling information such as an advertising interval and vendor-specific data wanted by an advertiser.

As described above, an advertising data field/format may be recursively configured based on a length-type-value form to include various types of information. As an example, an advertising data format may be configured in the order of a Length field, the first type field, the first value field, ..., a Length field, the Nth type field and the Nth value field. Alternatively, an advertising data field/format may be configured based on a type-length-value form. As an example, an advertising data format may be configured in the order of the first type field, a Length field, the first value field, ..., the Nth type field, a Length field and the Nth value field. Alternatively, an advertising data format may be configured in a form (e.g., a length + advertising data (length + AdvData) form) other than a length-type-value form or a type-length-value form.

Additionally, when it is assumed that the packet air-time of a narrowband (NB) is 1ms, an advertising data field/format may not exceed the remaining size obtained by excluding other fields (e.g., SSVL, RD, etc.) from 24-bytes, the maximum size of a PDSU.

Additionally or alternatively, it may also be considered that a random delay field is omitted from an ADV-POLL2 packet format illustrated in FIG. 41. In this case, a message content format corresponding to "0x01" may consist of the length field of a supported setup version list (SSVL), a supported setup version list field and an advertising data (AdvData) field.

(Embodiment 2-8. Additional Example 5 of ADV-POLL2 Packet Format)

For an ADV-POLL2 packet for public advertising, a collision is highly likely to occur when a scanner requests/transmits an ADV-RESP2 packet (i.e., an ADV-RESP2 packet in a two-way handshake process for an ADC-POLL2 packet) to an advertiser in an environment where an advertiser and multiple scanners are congested. Accordingly, a method for avoiding a corresponding collision may be necessary.

To avoid such a collision, a random delay (RD) field may be defined and utilized.

A random delay field may be used by an advertiser to transmit an advertising packet such as an ADV-POLL2 packet and by a responder receiving an advertising packet such as a corresponding ADV-POLL2 packet in a two-way handshake process to determine the response time of an advertising packet such as an ADV-RESP2 packet. In other words, a random delay field may be related to the response time of an advertising packet such as an ADV-POLL2 packet and an advertising response packet such as an ADV-RESP2 packet in a two-way handshake process.

When the value of a random delay field is 0, a responder may transmit a response packet immediately after receiving an advertising packet. When the value of a random delay field is not 0, a responder may defer and transmit a response packet (e.g., an ADV_RESP2 packet) through a method such as random delay backoff, etc. within a range based on a corresponding value. For example, in a public advertising method, a random delay may be applied to avoid the collision of a response packet in a congested environment with lots of potential responders. The value of a random delay field may be determined by a higher layer. For example, the unit of the value of a random delay field may be a ranging scheduling time unit (RSTU), or may be set as a value optimized for a requirement from an application.

Regarding the provision/delivery of a random delay field described above, an ADV-POLL2 packet format may be defined that additionally considers message control, i.e., the value of a message control field (i.e., a new message content format).

FIG. 42 represents another example of a poll packet format for public advertising according to the present disclosure.

Referring to FIG. 42, an ADV-POLL2 packet format for public advertising may include a message ID field, an advertiser address field, a message control field and a message content field.

For example, a message ID field may indicate that a corresponding packet has an ADV-POLL2 packet format (e.g., value "0x23").

An advertiser address field indicates the address of an advertiser, and when a corresponding address is specified/included in a header, an advertiser address field may be omitted.

An advertiser address field indicates the address of an advertiser, and when a corresponding address is specified/included in a header, an advertiser address field may be omitted.

A public address or a random address may be used as an advertiser address. A public address corresponds to an address allocated to a device and may be based on a short address or an extended address. A random address may correspond to an address arbitrarily generated by an advertiser to prevent a public address from being directly exposed, and a rule for generating a random address may be as follows.

For example, when an advertiser is a controller, a random address may be generated as an arbitrary short address, an arbitrary extended address or another form of address. In this case, a controller may select a unique value among the addresses used within a ranging area network (RAN).

When a random address is used, tracking by an unspecified device may be prevented by periodically changing it (e.g., every 5 minutes). After discovery between devices is performed through an advertising/scanning process, an advertiser corresponding to a controller manages a random address, and may also temporarily manage a session. In this case, when a session ends, the value of an address obtained when a scanner discovers an advertiser may be changed, so a corresponding address may not be used any more. Additionally, a resolving list such as IRK may be exchanged according to a trusted device verification procedure (e.g., mutual verification during two-way handshake). In this case, resolving key pairs within a resolving list may be used to extract/store information such as a resolvable private address.

A message control field may be defined to set the message content placed later. Each field of the message content divided by a message control field may be included or omitted, respectively.

For example, a message content format corresponding to "0x00" indicated by a message control field may consist of the length field of a supported setup version list (SSVL) and a supported setup version list field. Additionally, a message content format corresponding to "0x01" indicated by a message control field may consist of the length field of a supported setup version list (SSVL), a supported setup version list field and a random delay (RD) field.

A random delay field may be used by an advertiser to transmit an advertising packet such as an ADV-POLL2 packet and by a responder receiving an advertising packet such as a corresponding ADV-POLL2 packet in a two-way handshake process to determine the response time of an advertising packet such as an ADV-RESP2 packet. In other words, a random delay field may be related to the response time of an advertising packet such as an ADV-POLL2 packet and an advertising response packet such as an ADV-RESP2 packet in a two-way handshake process.

When the value of a random delay field is 0, a responder may transmit a response packet immediately after receiving an advertising packet. When the value of a random delay field is not 0, a responder may defer and transmit a response packet (e.g., an ADV_RESP2 packet) by giving a random delay (e.g., through a method such as random delay backoff, etc.) within a range based on a corresponding value. For example, in a public advertising method, a random delay may be applied to avoid the collision of a response packet in a congested environment with lots of potential responders. The value of a random delay field may be determined by a higher layer. For example, the unit of the value of a random delay field may be a ranging scheduling time unit (RSTU), or may be set as a value optimized for a requirement from an application.

A variety of packet formats described above in the present disclosure (i.e., packet formats illustrated in FIGS. 35, 38, 39, 40, 41 and 42) may be defined as a packet format, respectively. Additionally or alternatively, a variety of packet formats described above in the present disclosure (i.e., packet formats illustrated in FIGS. 35, 38, 39, 40, 41 and 42) may also be defined by adding a message control ID to one packet format and configuring the message content for each message control ID.

Embodiment 3

An advertising poll packet may be broadcast on a discovery/initialization channel by distinguishing between private advertising and public (non-private) advertising based on a message/packet ID (e.g., ADV-POLL, ADV-POLL2).

With this regard, in a use case where privacy must be guaranteed, it is necessary to advertise securely to a single device or a device group confirmed through a procedure such as authentication, etc. in advance. Alternatively, in a use case where it is required/allowed to establish a ranging session with an unspecified number of persons, a public/unsecured advertising method is necessary to allow an arbitrary device to interpret an advertising packet such as an advertising poll.

Embodiment 3-1

In order to support various secured/private or unsecured/public advertising messages described above, a security level-based advertising packet may be configured and a scanner operation may be defined accordingly.

A security level may be defined as follows.

Level 1: No Security
Level 2: Use of association with one device (peer-to-peer)
Level 3: Use of association with a device group

Level 1 may correspond to a case where ADV_POLL is advertised to many and unspecified persons. In a use case such as access control in a public space, payment for public transportation, etc., ADV_POLL is required to support ranging session setup effectively because it is easily delivered and interpreted by many and unspecified persons instead of supporting privacy. In this case, ADV_POLL may be unencrypted, and an arbitrary scanner/responder may obtain corresponding ADV_POLL and perform ranging session setup through a two-way handshake operation.

Level 2 may correspond to a case where ADV_POLL is encrypted and advertised to be obtained only from one device. For example, a use case such as finding a smartphone family accessory device through ranging session setup between a personal smartphone and a smartphone family accessory device confirmed by a method such as pre-authentication may be considered. In this case, since privacy needs to be sufficiently guaranteed, a method is required to ensure that advertising is performed in a secured manner and ranging session setup is performed based thereon. In this case, an address included in ADV_POLL (i.e., the address of an advertiser) may be configured in a form such as a private MAC address. In addition, ADV_POLL (or some areas within ADV_POLL) may be encrypted in a specific manner, and through a key provisioning or key exchange algorithm such as public key infrastructure (PKI), only a promised advertiser and scanner may be supported to transmit and receive ADV_POLL while securing privacy.

Level 3 may correspond to a case where ADV_POLL is encrypted and advertised to ensure that ADV_POLL is obtained only from the devices of a specific group. A use case may be considered that measures the location and distance of peripheral devices based on the distance measurement of a plurality of devices and configures a device map between a personal smartphone and a plurality of smartphone family accessory devices confirmed by a method such as pre-authentication or through ranging session setup with a personal smartphone and home appliance devices confirmed by a method such as pre-authentication. In this case, since privacy needs to be sufficiently guaranteed, an address included in ADV_POLL (i.e., the address of an advertiser) may be configured in a form such as a private MAC address to ensure that advertising is performed in a secured manner and ranging session setup is performed based thereon. In addition, ADV_POLL (or some areas within ADV_POLL) may be encrypted in a specific manner, and through a key provisioning or key exchange algorithm such as public key infrastructure (PKI), only a promised advertiser and scanner(s) may be supported to transmit and receive ADV_POLL while securing privacy.

An ADV-POLL packet format used for the above-described discovery/initialization may be defined by applying a security level (SL) as shown in FIG. 43.

FIG. 43 illustrates a poll packet format for private/public advertising based on a security level according to the present disclosure.

Referring to FIG. 43, an ADV-POLL2 packet format for public advertising may include a message ID field, a security level (SL) field, an advertiser address field, a message control field and a message content field.

For example, a message ID field may indicate that a corresponding packet has an ADV-POLL packet format (e.g., value "0x20", value "0x21") or an ADV-POLL2 packet format (e.g., value "0x23").

A security level field may be defined to indicate a security level as shown in Table 24 below.

[Table 24]

| Security Level | Description |
|---|---|
| Bit: 0 | No Security |
| Bit: 1 | Use of association with one device (peer-to-peer) |
| Bit: 2 | Use of association with a device group |
| Bit: 3 | Reserved |

An advertiser address field indicates the address of an advertiser, and when a corresponding address is specified/included in a header, an advertiser address field may be omitted.

When a value indicated by a security level field is 1 or 2 (i.e., Level 2 or 3 described above), a private address may be used as an advertiser address. In other words, an advertiser address field may consist of private address information and private salt information

In this regard, an advertiser (advertise) that broadcasts an advertising packet and a scanner that scans it may have a pre-defined resolving list. A pre-defined resolving list may be used before mutual communication between an advertiser and a scanner (e.g., two-way handshake, communication after link establishment, etc.) is performed. Accordingly, a method for mutually exchanging it through an implementation-typed method may be provided. As an example, a table for an advertiser address resolving list may be defined in advance, and a common distribution method may be used.

After at least two devices perform discovery through an advertising process and a scanning process, address verification on whether it is the same as a discovery result may be performed in a session setup phase, etc. A random address may be changed periodically by an advertiser, and a changed value may be generated based on a key pair in a resolving list. A private address may consist of a private address and a private salt (e.g., AES-128-ECB(key=PublicAddress, data=(padding || PrivateSalt)).

In contrast, when a value indicated by a security level field is 0 (i.e., level 1 described above), a public address or a random address may be used as an advertiser address. A public address corresponds to an address allocated to a device and may be based on a short address or an extended address. A random address may correspond to an address arbitrarily generated by an advertiser to prevent a public address from being directly exposed, and a rule for generating a random address may be as follows.

For example, when an advertiser is a controller, a random address may be generated as an arbitrary short address, an arbitrary extended address or another form of address. In this case, a controller may select a unique value among the addresses used within a ranging area network (RAN).

When a random address is used, tracking by an unspecified device may be prevented by periodically changing it (e.g., every 5 minutes). After discovery between devices is performed through an advertising/scanning process, an advertiser corresponding to a controller manages a random address, and may also temporarily manage a session. In this case, when a session ends, the value of an address obtained when a scanner discovers an advertiser may be changed, so a corresponding address may not be used any more. Additionally, a resolving list such as IRK may be exchanged according to a trusted device verification procedure (e.g., mutual verification during two-way handshake). In this case, resolving key pairs within a resolving list may be used to extract/store information such as a resolvable private address.

A message control field may be defined to set the message content placed later. Each field of the message content divided by a message control field may be included or omitted, respectively.

For example, a message content format corresponding to "0x00" indicated by a message control field may consist of the length field of a supported setup version list (SSVL) and a supported setup version list field. Additionally, a message content format corresponding to "0x01" indicated by a message control field may consist of the length field of a supported setup version list (SSVL), a supported setup version list field, an address type (AT) field, a random delay (RD) field and an advertising data (AdvData) field.

An address type field indicates an address type applied to an advertising address, and may be defined based on Table 23 described above.

A random delay field may be used by an advertiser to transmit an advertising packet such as an ADV-POLL2 packet and by a responder receiving an advertising packet such as a corresponding ADV-POLL2 packet in a two-way handshake process to determine the response time of an advertising packet such as an ADV-RESP2 packet. In other words, a random delay field may be related to the response time of an advertising packet such as an ADV-POLL2 packet and an advertising response packet such as an ADV-RESP2 packet in a two-way handshake process.

When the value of a random delay field is 0, a responder may transmit a response packet immediately after receiving an advertising packet. When the value of a random delay field is not 0, a responder may defer and transmit a response packet (e.g., an ADV_RESP2 packet) by giving a random delay (e.g., through a method such as random delay backoff, etc.) within a range based on a corresponding value. For example, in a public advertising method, a random delay may be applied to avoid the collision of a response packet in a congested environment with lots of potential responders. The value of a random delay field may be determined by a higher layer. For example, the unit of the value of a random delay field may be a ranging scheduling time unit (RSTU), or may be set as a value optimized for a requirement from an application.

An advertising data field may include information that an advertiser wants to announce. For example, a corresponding field may include the list of services supported by an advertiser, and this information may be defined in various forms. As an example, a method for defining/expressing in a form such as UUID to uniquely express a service may be applied. Additionally or alternatively, a corresponding field may include the friendly name of an advertiser, the type of a device, scheduling information such as an advertising interval and vendor-specific data wanted by an advertiser.

As described above, an advertising data field/format may be recursively configured based on a length-type-value form to include various types of information. As an example, an advertising data format may be configured in the order of a Length field, the first type field, the first value field, ..., a Length field, the Nth type field and the Nth value field. Alternatively, an advertising data field/format may be configured based on a type-length-value form. As an example, an advertising data format may be configured in the order of the first type field, a Length field, the first value field, ..., the Nth type field, a Length field and the Nth value field. Alternatively, an advertising data format may be configured in a form (e.g., a length + advertising data (length + AdvData) form) other than a length-type-value form or a type-length-value form.

Additionally, when it is assumed that the packet air-time of a narrowband (NB) is 1ms, an advertising data field/format may not exceed the remaining size obtained by excluding other fields (e.g., SSVL, AT, RD, etc.) from 24-bytes, the maximum size of a PDSU.

Embodiment 3-2

In order to support various secured/private or unsecured/public advertising messages described above, a security mode-based advertising packet may be configured and a scanner operation may be defined accordingly.

A security mode may be defined as follows.

Mode 0: No Security
Mode 1: Use of association with one device (peer-to-peer) or device group

Mode 0 may correspond to a case where ADV_POLL is advertised to many and unspecified persons in a similar way to Level 1 in Embodiment 1-1. In a use case such as access control in a public space, payment for public transportation, etc., ADV_POLL is required to support ranging session setup effectively because it is easily delivered and interpreted by many and unspecified persons instead of supporting privacy. In this case, ADV_POLL may be unencrypted, and an arbitrary scanner/responder may obtain corresponding ADV_POLL and perform ranging session setup through a two-way handshake operation.

Mode 1 may correspond to a case where ADV_POLL is encrypted and advertised to ensure that it is obtained only from one device/device group in a similar way to Level 2 and/or Level 3 in Embodiment 1-1. For example, a use case may be considered that measures the location and distance of peripheral device(s) based on the distance measurement of (a plurality of) devices and configures a device map between a personal smartphone and smartphone family accessory device(s) confirmed by a method such as pre-authentication or through ranging session setup with a smartphone and home appliance device(s) confirmed by a method such as pre-authentication. In this case, since privacy needs to be sufficiently guaranteed, an address included in ADV_POLL (i.e., the address of an advertiser) may be configured in a form such as a private MAC address to ensure that advertising is performed in a secured manner and ranging session setup is performed based thereon. An address included in ADV_POLL (i.e., the address of an advertiser) may be configured in a form such as a private MAC address. In addition, ADV_POLL (or some areas within ADV_POLL) may be encrypted in a specific manner, and through a key provisioning or key exchange algorithm such as public key infrastructure (PKI), only a promised advertiser and scanner(s) may be supported to transmit and receive ADV_POLL while securing privacy.

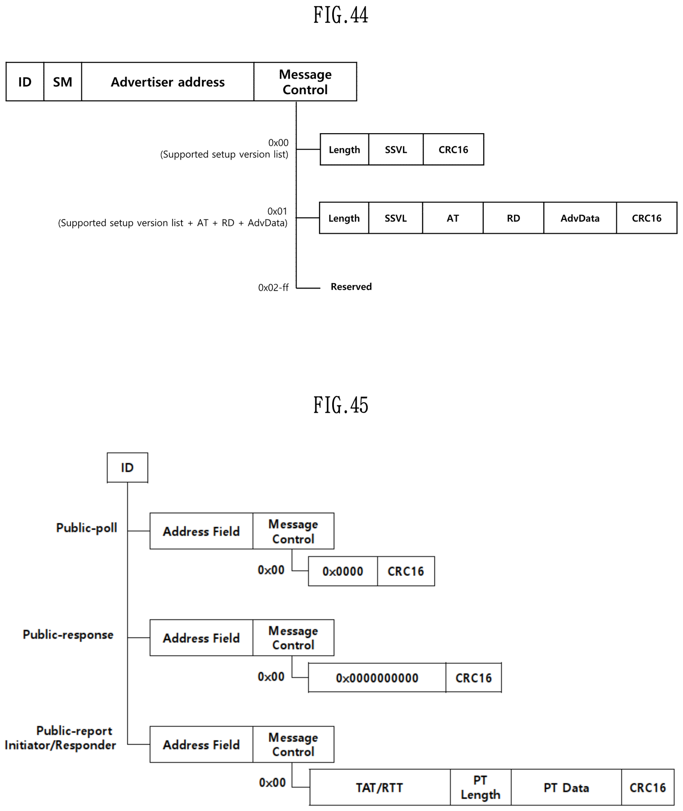

An ADV-POLL packet format used for the above-described discovery/initialization may be defined by applying a security mode (SM) as shown in FIG. 44.

FIG. 44 illustrates a poll packet format for private/public advertising based on a security mode according to the present disclosure.

Referring to FIG. 44, an ADV-POLL2 packet format for public advertising may include a message ID field, a security mode (SM) field, an advertiser address field, a message control field and a message content field.

Since other fields excluding a security mode field and an advertiser address field are the same as in a packet format illustrated in FIG. 43, the detailed description of a corresponding field is omitted in the description of FIG. 44.

A security mode field may be defined to indicate a security mode as shown in Table 25 below.

[Table 25]

| Security Mode | Description |
|---|---|
| 0 | No Security |
| 1 | Use of association with one device (peer-to-peer) or device group |

An advertiser address field indicates the address of an advertiser, and when a corresponding address is specified/included in a header, an advertiser address field may be omitted.

When a security mode is 1, a private address may be used as an advertiser address. In other words, an advertiser address field may consist of private address information and private salt information.

In this regard, an advertiser (advertise) that broadcasts an advertising packet and a scanner that scans it may have a pre-defined resolving list. A pre-defined resolving list may be used before mutual communication between an advertiser and a scanner (e.g., two-way handshake, communication after link establishment, etc.) is performed. Accordingly, a method for mutually exchanging it through an implementation-typed method may be provided. As an example, a table for an advertiser address resolving list may be defined in advance, and a common distribution method may be used.

After at least two devices perform discovery through an advertising process and a scanning process, address verification on whether it is the same as a discovery result may be performed in a session setup phase, etc. A random address may be changed periodically by an advertiser, and a changed value may be generated based on a key pair in a resolving list. A private address may consist of a private address and a private salt (e.g., AES-128-ECB(key=PublicAddress, data=(padding ∥ PrivateSalt)).

In contrast, when a security mode is 0, a public address or a random address may be used as an advertiser address. A public address corresponds to an address allocated to a device and may be based on a short address or an extended address. A random address may correspond to an address arbitrarily generated by an advertiser to prevent a public address from being directly exposed, and a rule for generating a random address may be as follows.

For example, when an advertiser is a controller, a random address may be generated as an arbitrary short address, an arbitrary extended address or another form of address. In this case, a controller may select a unique value among the addresses used within a ranging area network (RAN).

When a random address is used, tracking by an unspecified device may be prevented by periodically changing it (e.g., every 5 minutes). After discovery between devices is performed through an advertising/scanning process, an advertiser corresponding to a controller manages a random address, and may also temporarily manage a session. In this case, when a session ends, the value of an address obtained when a scanner discovers an advertiser may be changed, so a corresponding address may not be used any more. Additionally, a resolving list such as IRK may be exchanged according to a trusted device verification procedure (e.g., mutual verification during two-way handshake). In this case, resolving key pairs within a resolving list may be used to extract/store information such as a resolvable private address.

A security level (SL) and a security mode (SM) in this embodiment may also be applied to an advertising poll packet in various formats described above in the present disclosure (i.e., formats in FIGS. 35, 38, 39, 40, 41 and 42).

Additionally, instead of distinguishing a security type by including a security level field or a security mode field within the same message, the format of an advertising poll packet may be given/applied according to a security level or a security mode.

For example, for security levels 1, 2 and 3 (i.e., security level field values 0, 1 and 2), an ADV-POLL packet format (e.g., a format in FIG. 32), an ADV-POLL2 packet format (e.g., a format in FIGS. 35, 38, 39, 40, 41 and 42) and an ADV-POLL2 packet format (e.g., a format in FIGS. 35, 38, 39, 40, 41 and 42) may be given. Alternatively, an ADV-POLL packet format (e.g., a format in FIG. 32) may be given for security level 1 (i.e., security level field value 0), and an ADV-POLL2 packet format (e.g., a format in FIGS. 35, 38, 39, 40, 41 and 42) may be given for security level 2 or 3 (i.e., security level field value 1 or 2). In addition, for security modes 0 and 1, an ADV-POLL packet format (e.g., a format in FIG. 32) and an ADV-POLL2 packet format (e.g., a format in FIGS. 35, 38, 39, 40, 41 and 42) may be given.

A security level or a security mode may be designated/allocated through an application, etc. and a controller may determine whether to perform private advertising or public advertising according to a security level or security mode value. In this regard, a scanner receiving an advertising packet may select an appropriate packet (i.e., a packet in a manner deemed appropriate between private advertising or public advertising) according to a security level or security mode value.

Additionally, in examples described in the present disclosure, each field included in the message content may be omitted or included.

Embodiment 4

This embodiment relates to various frame formats (or packet formats) according to whether a public address is used for a poll frame, a response frame and a report frame transmitted or received in an MMS ranging operation (i.e., a ranging session after initialization/session setup through an advertising operation).

Whether a public address or a private address is used may be distinguished by a message ID (or a frame identifier), may be distinguished by an address type, or may be distinguished by the same message ID (or frame identifier) and a subtype (or an extended ID).

Embodiment 4-1

This embodiment relates to a method for distinguishing between a frame format using a public address and a frame format using a private address by a message ID (or a frame identifier).

For example, after an advertiser and a scanner/a responder establish a session during an MMS initialization and session setup step (e.g., after the exchange step of a public advertising poll frame, a public advertising response frame and a public SOR frame is completed), during a step for performing an operation such as ranging, etc., an initiator and a responder may exchange a public-poll frame, a public-response frame and a public-report initiator/responder frame.

FIG. 45 is a diagram representing an example of a frame differentiation method by an ID in a ranging operation according to the present disclosure. For example, messages/frames in FIG. 45 may correspond to SS-TWR NBA-UWB MMS public messages/frames, and the value of a message control field may be set as 0x00 (e.g., correspond to unencrypted SS-TWR NBA-UWB MMS, version 0). For example, a public-poll frame and a non-public (e.g., private) poll frame may correspond to a different message ID (frame identifier) value. For example, a public-response frame and a non-public (e.g., private) response frame may correspond to a different message ID (frame identifier) value. For example, a public-report initiator/responder frame and a non-public (e.g., private) report initiator/responder frame may correspond to a different message ID (frame identifier) value.

An address field may include the address and address type of an advertiser. An address field may be divided into a source address and a destination address. A source address and a destination address may be the address pair of the peer's address and its address exchanged during a two-way handshake process between an advertiser/an initiator and a scanner/a responder during an MMS initialization and setup process. An address pair may be temporarily managed by an initiator. An address size may be a short address (i.e., 2 octets), an extended address (i.e., 8 octets) or a different size/shape of address (e.g., 3 octets).

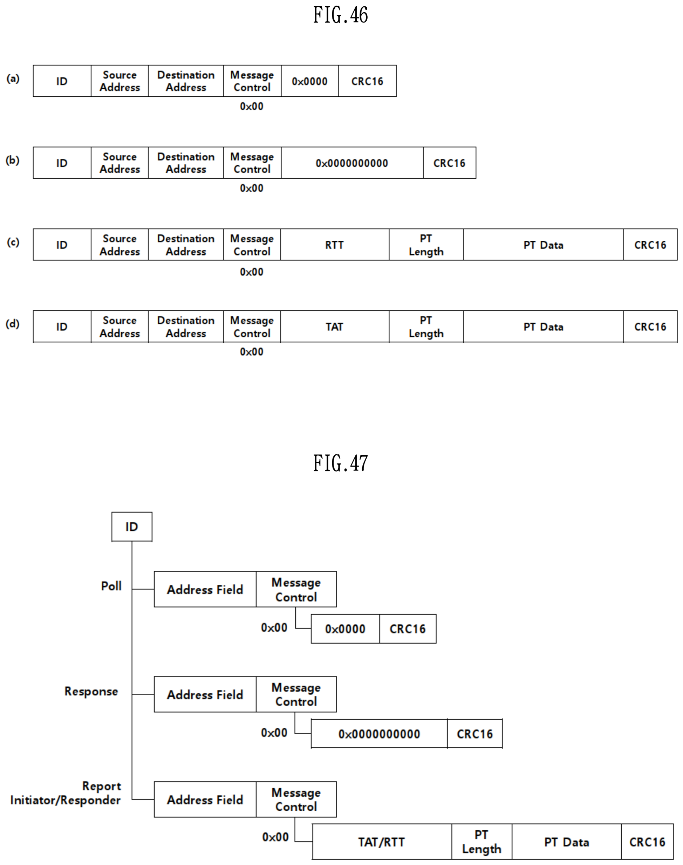

FIG. 46 is a diagram representing exemplary formats of a public-poll frame, a public-response frame and a public-report frame according to the present disclosure.

FIG. 46(a) represents an example of the packet format of a public-poll frame (e.g., message control = 0x00).

A message ID (or frame identifier) field has a 1-octet size, and may be set as a value representing a public-poll frame.

A source address (SrcAddr) field may be set as the address value of an initiator. When a source address is specified in a header, a source address field may be omitted in the example of a frame format.

A destination address (DestAddr) field may be set as the address value of a responder. When a destination address is specified in a header, a destination address field may be omitted in the example of a frame format.

A source address and a destination address may be composed of address pairs established between an advertiser/an initiator and a scanner/a responder during a session setup process. A source address and a destination address may also be managed by an initiator. An address size may be a short address (i.e., 2 octets), an extended address (i.e., 8 octets) or a different size/shape of address (e.g., 3 octets).

A message control field may be set as a value indicating the subsequent message content.

For example, a field to be included or omitted in the message content may be distinguished according to the value of a message control field. For example, when the value of a message control field is 0x00, a message content field may include two bytes of 0x00 and 0x00 for CFO removal.

A CRC16 field may have a size of 2 bytes.

All of the fields described in the format of a public-poll frame described above may be included or some may be omitted according to the usage.

FIG. 46(b) represents an example of the packet format of a public-response frame (e.g., message control = 0x00).

A message ID (or frame identifier) field has a 1-octet size, and may be set as a value representing a public-response frame.

A source address (SrcAddr) field may be set as the address value of a responder. When a source address is specified in a header, a source address field may be omitted in the example of a frame format.

A destination address (DestAddr) field may be set as the address value of an initiator. When a destination address is specified in a header, a destination address field may be omitted in the example of a frame format.

A source address and a destination address may be composed of address pairs determined between an advertiser/an initiator and a scanner/a responder during a session setup process. A source address and a destination address may also be managed by an initiator. An address size may be a short address (i.e., 2 octets), an extended address (i.e., 8 octets) or a different size/shape of address (e.g., 3 octets).

A message control field may be set as a value indicating the subsequent message content.

For example, a field to be included or omitted in the message content may be distinguished according to the value of a message control field. For example, when the value of a message control field is 0x00, a message content field may include five bytes of 0x00, 0x00, 0x00, 0x00 and 0x00 for CFO removal.

A CRC16 field may have a 2-octet size.

All of the fields described in the format of a public-response frame described above may be included or some may be omitted according to the usage.

FIG. 46(c) represents an example of the packet format of a public-report initiator frame (e.g., message control = 0x00).

A message ID (or frame identifier) field has a 1-octet size, and may be set as a value representing a public-report initiator frame.

A source address (SrcAddr) field may be set as the address value of an initiator. When a source address is specified in a header, a source address field may be omitted in the example of a frame format.

A destination address (DestAddr) field may be set as the address value of a responder. When a destination address is specified in a header, a destination address field may be omitted in the example of a frame format.

A source address and a destination address may be composed of address pairs determined between an advertiser/an initiator and a scanner/a responder during a session setup process. A source address and a destination address may also be managed by an initiator. An address size may be a short address (i.e., 2 octets), an extended address (i.e., 8 octets) or a different size/shape of address (e.g., 3 octets).

A message control field may be set as a value indicating the subsequent message content.

For example, a field to be included or omitted in the message content may be distinguished according to the value of a message control field. For example, when the value of a message control field is 0x00, a message content field may include a 5-byte round trip time (RTT) field, a 1-byte pass-through (PT) length field and a PT data field of a length corresponding to the value of a PT length field. Data may be stored in a PT length field and a PT data field through a piggyback method.

A CRC16 field may have a size of 2 bytes.

All of the fields described in the format of a public-report initiator frame described above may be included or some may be omitted according to the usage.

FIG. 46(d) represents an example of the packet format of a public-report responder frame (e.g., message control = 0x00).

A message ID (or frame identifier) field has a 1-octet size, and may be set as a value representing a public-report responder frame.

A source address (SrcAddr) field may be set as the address value of a responder. When a source address is specified in a header, a source address field may be omitted in the example of a frame format.

A destination address (DestAddr) field may be set as the address value of an initiator. When a destination address is specified in a header, a destination address field may be omitted in the example of a frame format.

A source address and a destination address may be composed of address pairs determined between an advertiser/an initiator and a scanner/a responder during a session setup process. A source address and a destination address may also be managed by an initiator. An address size may be a short address (i.e., 2 octets), an extended address (i.e., 8 octets) or a different size/shape of address (e.g., 3 octets).

A message control field may be set as a value indicating the subsequent message content.

For example, a field to be included or omitted in the message content may be distinguished according to the value of a message control field. For example, when the value of a message control field is 0x00, a message content field may include a 5-byte turn-around time (TAT) field, a 1-byte pass-through (PT) length field and a PT data field of a length corresponding to the value of a PT length field. Data may be stored in a PT length field and a PT data field through a piggyback method.

A CRC16 field may have a size of 2 bytes.

All of the fields described in the format of a public-report responder frame described above may be included or some may be omitted according to the usage.

Embodiment 4-2

This embodiment relates to a method for distinguishing between a frame format using a public address and a frame format using a private address by applying an address type for each message ID (or frame identifier).

For example, after an advertiser and a scanner/a responder establish a session during an MMS initialization and session setup step (e.g., after the exchange step of an advertising poll frame, an advertising response frame and an SOR frame is completed), during a step for performing an operation such as ranging, etc., an initiator and a responder may exchange a poll frame, a response frame and a report initiator/responder frame.

FIG. 47 is a diagram representing an example of a method for distinguishing frames by an address type in a ranging operation according to the present disclosure. For example, messages/frames in FIG. 47 may correspond to SS-TWR NBA-UWB MMS messages/frames, and the value of a message control field may be set as 0x00 (e.g., correspond to unencrypted SS-TWR NBA-UWB MMS, version 0). For example, a public-poll frame and a non-public (e.g., private) poll frame may correspond to the same message ID (frame identifier) value. For example, a public-response frame and a non-public (e.g., private) response frame may correspond to the same message ID (frame identifier) value. For example, a public-report initiator/responder frame and a non-public (e.g., private) report initiator/responder frame may correspond to the same message ID (frame identifier) value.

An address field may include the address and address type of an advertiser. When an address type is included, information distinguishing between a privacy protected address, a public address, a random address, etc. may be included. When it is a privacy protected address, an RPA may be used, and for a poll frame, a pseudo random (Prand) field may also be included in an address field. When it is a privacy protected address, the address pair of a peer's address and its address exchanged between an advertiser/an initiator and a scanner/a responder during an MMS initialization and setup process may be included as a source address and a destination address. An address size may be a short address (i.e., 2 octets), an extended address (i.e., 8 octets) or a different size/shape of address (e.g., 3 octets).

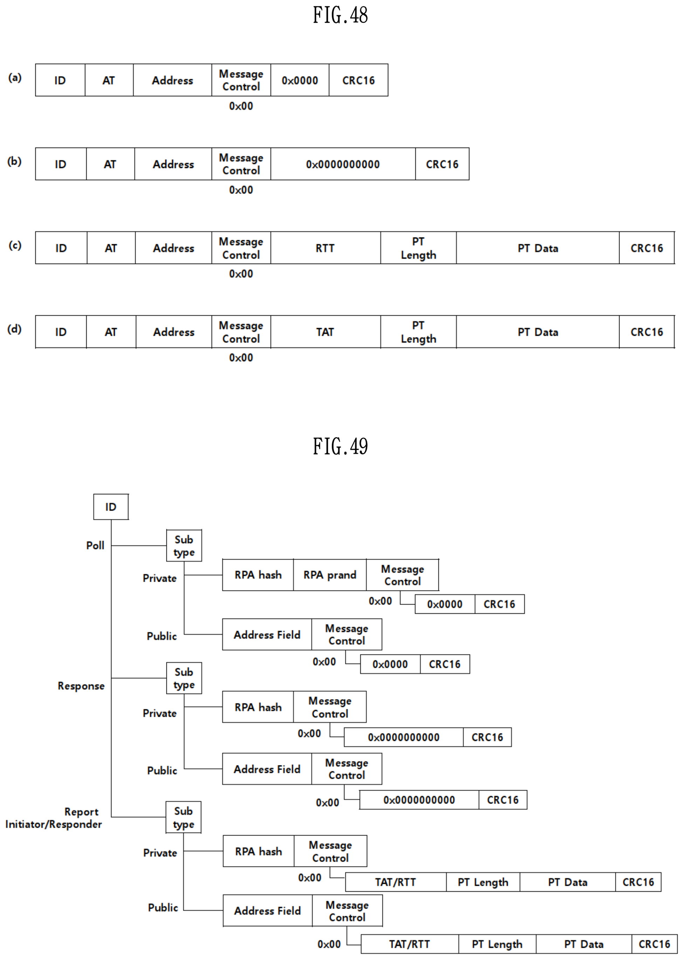

FIG. 48 is a diagram representing exemplary formats of a poll frame, a response frame and a report frame according to the present disclosure.

FIG. 48(a) represents an example of the packet format of a poll frame (e.g., message control = 0x00).

A message ID (or frame identifier) field has a 1-octet size, and may be set as a value representing a poll frame.

An address type (AT) field has a 1-octet size, and may be set as a value for distinguishing an address type such as a privacy protected address, a public address, a random address, etc. An address type may indicate a privacy protected address when the value of bits 0-1 is 0, may indicate a public address when the value is 1 and may indicate a random address when the value is 2, and bits 2-7 may be reserved. The scope of the present disclosure is not limited to these examples, and an address type may be defined in other ways. Two bits among 1 octet of an AT field may be used to indicate an address type and the remaining bits may be used for other purposes such as content control.

An address field may include the address of an advertiser/an initiator. When an address type is a privacy protected address, a RPA and a PRAND may be included together in an address field. When an address type is not a privacy protected address, a source address and a destination address may be included in an address field. In this case, a source address may be set as an initiator's address and a destination address may be set as a responder's address. A source address and a destination address may be composed of address pairs determined between an advertiser/an initiator and a scanner/a responder during a session setup process. A source address and a destination address may also be managed by an initiator. An address size may be a short address (i.e., 2 octets), an extended address (i.e., 8 octets) or a different size/shape of address (e.g., 3 octets).

A message control field, a message content field and a CRC16 field may be set to be the same as corresponding fields in FIG. 46(a).

All of the fields described in the format of a poll frame described above may be included or some may be omitted according to the usage.

FIG. 48(b) represents an example of the packet format of a response frame (e.g., message control = 0x00).

A message ID (or frame identifier) field has a 1-octet size, and may be set as a value representing a response frame.

An address type (AT) field may be the same as described for an AT field in FIG. 48(a).

An address field may include the address of an advertiser/an initiator. When an address type is a privacy protected address, a RPA may be used for an address field. When an address type is not a privacy protected address, a source address and a destination address may be included in an address field. In this case, a source address may be set as a responder's address and a destination address may be set as an initiator's address. A source address and a destination address may be composed of address pairs determined between an advertiser/an initiator and a scanner/a responder during a session setup process. A source address and a destination address may also be managed by an initiator. An address size may be a short address (i.e., 2 octets), an extended address (i.e., 8 octets) or a different size/shape of address (e.g., 3 octets).

A message control field, a message content field and a CRC16 field may be set to be the same as corresponding fields in FIG. 46(b).

All of the fields described in the format of a response frame described above may be included or some may be omitted according to the usage.

FIG. 48(c) represents an example of the packet format of a report initiator frame (e.g., message control = 0x00).

A message ID (or frame identifier) field has a 1-octet size, and may be set as a value representing a report initiator frame.

An address type (AT) field may be the same as described for an AT field in FIG. 48(a).

An address field may include the address of an advertiser/an initiator. When an address type is a privacy protected address, a RPA may be used for an address field. When an address type is not a privacy protected address, a source address and a destination address may be included in an address field. In this case, a source address may be set as an initiator's address and a destination address may be set as a responder's address. A source address and a destination address may be composed of address pairs determined between an advertiser/an initiator and a scanner/a responder during a session setup process. A source address and a destination address may also be managed by an initiator. An address size may be a short address (i.e., 2 octets), an extended address (i.e., 8 octets) or a different size/shape of address (e.g., 3 octets).

A message control field, a message content field and a CRC16 field may be set to be the same as corresponding fields in FIG. 46(c).

All of the fields described in the format of a report initiator frame described above may be included or some may be omitted according to the usage.

FIG. 48(d) represents an example of the packet format of a report responder frame (e.g., message control = 0x00).

A message ID (or frame identifier) field has a 1-octet size, and may be set as a value representing a report responder frame.

An address type (AT) field may be the same as described for an AT field in FIG. 48(a).

An address field may include the address of an advertiser/an initiator. When an address type is a privacy protected address, a RPA may be used for an address field. When an address type is not a privacy protected address, a source address and a destination address may be included in an address field. In this case, a source address may be set as a responder's address and a destination address may be set as an initiator's address. A source address and a destination address may be composed of address pairs determined between an advertiser/an initiator and a scanner/a responder during a session setup process. A source address and a destination address may also be managed by an initiator. An address size may be a short address (i.e., 2 octets), an extended address (i.e., 8 octets) or a different size/shape of address (e.g., 3 octets).

A message control field, a message content field and a CRC16 field may be set to be the same as corresponding fields in FIG. 46(d).

All of the fields described in the format of a report responder frame described above may be included or some may be omitted according to the usage.

Embodiment 4-3

This embodiment relates to a method for distinguishing between a frame format using a public address and a frame format using a private address by a subtype (or an extended ID) for each message ID (or frame identifier).

For example, a public-poll frame and a non-public (e.g., private) poll frame may correspond to the same message ID (frame identifier) value, and may correspond to a different subtype (or extended ID) value. For example, a public-response frame and a non-public (e.g., private) response frame may correspond to the same message ID (frame identifier) value, and may correspond to a different subtype (or extended ID) value. For example, a public-report initiator/responder frame and a non-public (e.g., private) report initiator/responder frame may correspond to the same message ID (frame identifier) value, and may correspond to a different subtype (or extended ID) value.

FIG. 49 is a diagram representing an example of a method for distinguishing frames by a sub-type according to the present disclosure. For example, messages/frames in FIG. 49 may correspond to SS-TWR NBA-UWB MMS messages/frames, and the value of a message control field may be set as 0x00 (e.g., correspond to unencrypted SS-TWR NBA-UWB MMS, version 0).

A message ID (or frame identifier) field has a 1-octet size, and may be set as a value representing a poll frame, a response frame or a report initiator/responder frame.

A subtype (or extended ID) field has a 1-octet size, and may be set as a value representing a private type or a public type.

The description of corresponding fields in the above-described examples may be applied to the fields of a poll frame, a response frame and a report initiator/responder frame corresponding to a private subtype or a public subtype.

Embodiment 4-4

In examples described above, for an advertising poll frame, an advertising response frame, an SOR frame, a poll frame in a ranging session, a response frame in a ranging session, a report initiator frame in a ranging session and a report responder frame in a ranging session, as a method for defining and distinguishing between a public usage/type or a non-public (e.g., private) usage/type, examples distinguished by a message ID (or a frame identifier), by an address type or by a subtype (or an extended ID) are described.

These examples may be applied not only to the above-described message/frame, but also to other messages using a privacy protected address related to NBA-UWB MMS for the use of a public address. For example, even for advertising confirmation (ADV-CONF), short-term parameters for next ranging cycle (POLL-SPN), RESP-SPN, one-to-many POLL, one-to-many RESP, REPORT-SPN from a responder, REPORT on one-to-many ranging from a responder, REPORT on one-to-many ranging from an initiator, etc. (and, a message newly defined for public initiation/session setup and a session operation for messages using a privacy protected address defined regarding NBA-UWB MMS in the future), as a method for defining and distinguishing between a private format/type and a public format/type, the above-described examples distinguished by a message ID (or a frame identifier), by an address type or by a subtype (or an extended ID) may be applied equally.

For example, an advertising confirmation (ADV-CONF) message may be defined and used to defer SOR transmission. Specifically, when coordination is enabled, an initiator may determine a ranging session configuration based on UWB channel usage information that may be confirmed from acquisition packets (APs) from other initiators. For coordination, an initiator may scan an NB initialization channel and a UWB default channel before transmitting an SOR. To perform scanning for coordination, it is necessary to defer SOR transmission, and for this purpose, an initiator may transmit ADV-CONF after receiving ADV-RESP, and information about a time offset between an ADV-CONF packet and the start of an SOR packet may be included in ADV-CONF.

This ADV-CONF frame may be defined as a public ADV-CONF frame (e.g., a public advertising confirmation compact frames) and a non-public (i.e., private) ADV-CONF frame (e.g., an advertising confirmation compact frame).

For example, a public ADV-CONF frame and a non-public (i.e., private) ADV-CONF frame may correspond to a different message ID (frame identifier) value. For example, an ADV-CONF frame having a public ADV-CONF frame identifier value may include an advertiser address field that is set as a public address value randomly generated by an advertiser. For example, an ADV-CONF frame having a non-public ADV-CONF frame identifier value may include an RPA hash field.

Alternatively, a public ADV-CONF frame and a non-public (i.e., private) ADV-CONF frame may correspond to the same message ID (frame identifier) value and include an address type field. For example, when an address type field indicates a private address, an ADV-CONF frame may include an RPA hash field. For example, when an address type field indicates a public address, an ADV-CONF frame may include an advertiser address field that is set as a public address value randomly generated by an advertiser.

Alternatively, a public ADV-CONF frame and a non-public (i.e., private) ADV-CONF frame may correspond to the same message ID (frame identifier) value and correspond to a different subtype (or extended ID). For example, when a subtype field indicates a private type, an ADV-CONF frame may include an RPA hash field. For example, when a subtype field indicates a public type, an ADV-CONF frame may include an advertiser address field that is set as a public address value randomly generated by an advertiser.

Embodiment 5

This embodiment describes examples of discovery/initialization and setup operations based on a secured/private advertising packet or an unsecured/public advertising packet and a ranging operation after session setup defined in Embodiments 1 to 4.

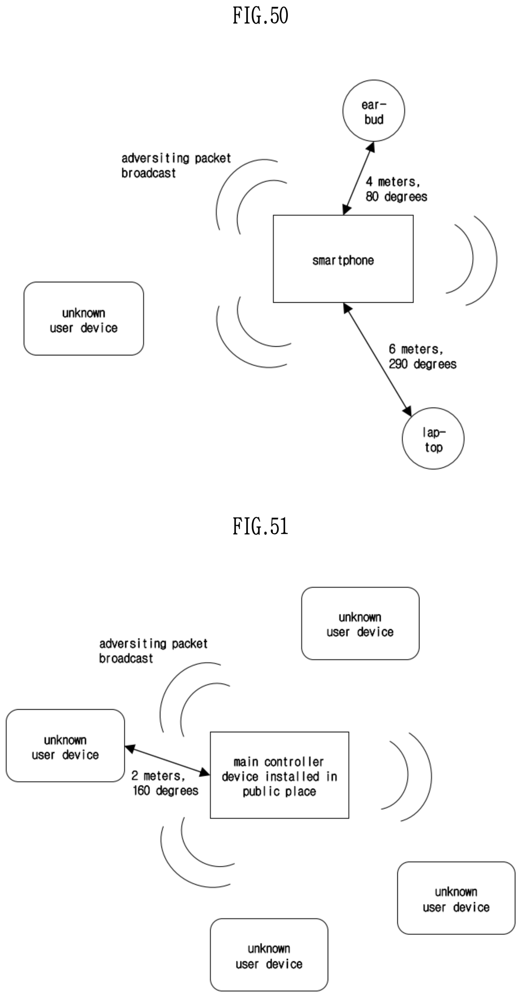

FIG. 50 represents an example of finding a peripheral device based on secured advertising according to the present disclosure.

Since it is required to protect personal information when finding a personal device and a peripheral device owned by an individual or when broadcasting an advertising packet in a process of finding my friend, secured advertising may be applied. In this case, when many and unspecified persons may receive and interpret an advertising packet, a MAC address, session configuration information, etc. which may be considered as the fingerprint information of a personal device may be exposed, so protected advertising may be applied to prevent this.

The example of FIG. 50 corresponds to an example of a procedure for finding a smartphone and a peripheral device or finding a nearby friend by using secured advertising.

Referring to FIG. 50, a user device (e.g., a smartphone), known private device 1 (e.g., an earbud) and known private device 2 (e.g., a laptop) are illustrated.

A smartphone may broadcast a secured advertising packet on a NB/UWB discovery channel.

An earbud may scan a NB/UWB discovery channel, receive an advertising packet and interpret an advertising packet by using IRK and prand to establish a ranging session. Accordingly, ranging (e.g., distance) and direction between a smartphone and an earbud may be measured.

A laptop may scan a NB/UWB discovery channel, receive an advertising packet and interpret an advertising packet by using IRK and prand to establish a ranging session. Accordingly, ranging (e.g., distance) and direction between a smartphone and a laptop may be measured.

In other words, as described above, a laptop and an earbud which are a known private device may scan a NB/UWB discovery channel, discover a secured advertising packet and interpret a private MAC address by using information such as IRK and prand, respectively.

Accordingly, a known peripheral device may perform ranging session setup according to a two-way handshake procedure after discovering an advertising packet, measure ranging and the angle of arrival (AOA), etc. to determine a distance and a direction and inform a user of the location of a smartphone and a peripheral device.

An unknown user device attempts to perform scanning on a NB/UWB channel, but may not find a valid address in an advertising packet, so it may not establish a ranging session with a smartphone.

In the example of FIG. 50, an advertising packet broadcast by a smartphone may include the following information.

[Table 26]

| Field | Contents | Description |
|---|---|---|
| Frame ID | ADV-POLL | Represent that it is an advertising packet |
| Protocol Version | IEEE 802.15.4ab-2024 | A protocol version is 4ab. |

(continued)

| Field | Contents | Description |
|---|---|---|
| Security Mode | 1 | Use of association with one device (peer-to-peer) or device group |
| RDP | 0 | No random delay applied |
| Secured Information | Information related to Secured Advertising | Private MAC Address (generated by using IRK and prand) |
| CRC | CRC | - |

FIG. 51 represents an example of access control of multiple devices based on unsecured advertising according to the present disclosure.

The example of FIG. 51 corresponds to an example of a procedure for controlling the access of many and unspecified customers visiting a public place (e.g., a hospital, a bus fare payment location, etc.) by using unsecured advertising.

A device installed in a public place (e.g., a main controller device installed in a hospital) may broadcast an unsecured advertising packet including a public MAC address on a NB/UWB discovery channel.

Among many and unspecified unknown user devices, when one user (e.g., Mr. LEE) enters a hospital with a smartphone, the smartphone of a corresponding customer may scan a NB/UWB discovery channel. A customer's smartphone may discover an unsecured advertising packet on a NB/UWB discovery channel and establish a ranging session with the main controller device of a hospital.

Accordingly, according to ranging and AOA measurement results between the main controller device of a hospital and the smartphone of a customer, the main controller device of a hospital may check additional information on a customer possessing a corresponding smartphone and based thereon, may know that a corresponding customer (i.e., Mr. Lee) entered a hospital.

To this end, an advertising packet broadcast by the main controller device may include the following information.

[Table 27]

| Field | Contents | Description |
|---|---|---|
| Frame ID | ADV-POLL | Represent that it is an advertising packet |
| Protocol Version | IEEE 802.15.4ab-2024 | A protocol version is 4ab. |
| Security Mode | 0 | No Security |
| RDP | 1 | Apply random delay |
| Random Delay | 500 | Apply a random value of 500 RSTU or less as the response time for an advertising packet |
| ADV Data | Advertising Data | Service ID (e.g., access control for public places) |
| CRC | CRC | - |

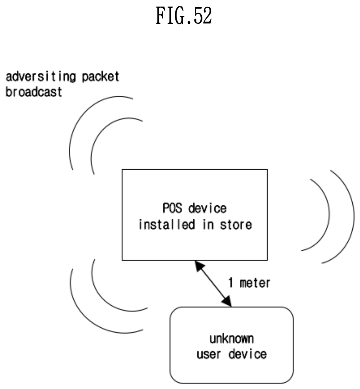

FIG. 52 represents an example of a purchase process through an arbitrary device based on unsecured advertising according to the present disclosure.

The example of FIG. 52 corresponds to an example of a process for the mobile payment (e.g., payment for products at a store) of many and unspecified customers by using unsecured advertising.

A point of sale (POS) device installed in a store may broadcast an unsecured advertising packet on a NB/UWB discovery channel.

One of many and unspecified customers may run a payment app on his/her smartphone, a smartphone may discover an advertising packet by performing scanning through a corresponding app and ranging session setup between a POS device and a corresponding smartphone may be performed. Accordingly, the payment may be performed when ranging is measured and its resulting distance is less than or equal to 1 meter. In other words, when a distance between a customer's device and a POS device is less than or equal to 1 meter, the payment information of a product recognized by a POS device may be transmitted to a payment app on a customer's smartphone. Accordingly, when a customer confirms payment information and finally confirms the payment, the payment may proceed.

To this end, an advertising packet broadcast by a POS device may include the following information.

[Table 28]

| Field | Contents | Description |
|---|---|---|
| Frame ID | ADV-POLL | Represent that it is an advertising packet |
| Protocol Version | IEEE 802.15.4ab-2024 | A protocol version is 4ab. |
| Security Mode | 0 | No Security |
| RDP | 1 | Apply random delay |
| Random Delay | 200 | Apply a random value of 200 RSTU or less as the response time for an advertising packet |
| ADV Data | Advertising Data | Service ID (e.g., mobile payment) |
| CRC | CRC | - |

Examples in Tables 26 to 28 represent a case in which the frame ID of an advertising poll frame is set as ADV-POLL and it is indicated that it is a private or public advertising packet through a security mode field, but a frame ID field in Table 26 may be set as ADV-POLL (i.e., a value indicating that it is a private advertising packet) and a frame ID field in Tables 27 and 28 may be set as ADV-POLL2 (i.e., a value indicating that it is a public advertising packet).

In various examples of the present disclosure described above, for native discovery/initialization and setup procedures for NBA-MMS-UWB, a secured/private or unsecured/public advertising method related to a security level/mode may be defined and applied. In other words, according to the present disclosure, in relation to an advertising process for an advertiser to announce itself for discovery/initialization, a scanning process for a scanner to discover an advertiser and a procedure for establishing a ranging session setup after discovery, privacy-securing advertising or public advertising may be appropriately applied to a situation, so efficient discovery/initialization and setup may be supported only with in-band UWB.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

[Industrial Applicability]

A method proposed in the present disclosure is described based on an example applied to an IEEE 802.15.4-based system, but it may be applied to various UWB wireless network or wireless communication systems other than an IEEE 802.15.4-based system.

**Claims**

1. A method performed by a first device in an ultra-wideband (UWB) wireless network system, the method comprising:

   transmitting an advertising poll frame to a second device;
   receiving an advertising response frame from the second device; and
   transmitting a start-of-ranging (SOR) frame to the second device,
   wherein based on the advertising response frame being a public advertising response frame, the public advertising response frame includes a responder address which is a public address randomly generated by the second device.

2. The method of Claim 1, wherein based on the advertising poll frame being a public advertising poll frame including an advertiser address:
   for the public advertising response frame, by the second device, the advertiser address is used as a destination address, and the responder address is used as a source address.

3. The method of Claim 2, wherein:
   the advertiser address included in the public advertising response frame is equal to the advertiser address included in the public advertising poll frame.

4. The method of Claim 2, wherein based on the SOR frame being a public SOR frame:
   for the public SOR frame, by the first device, the responder address is used as the destination address, and the advertiser address is used as the source address.

5. The method of Claim 4, wherein:

   the advertiser address included in the public SOR frame is equal to the advertiser address included in the public advertising poll frame, and is equal to the advertiser address included in the public advertising response frame, and
   the responder address included in the public SOR frame is equal to the responder address included in the public advertising response frame.

6. The method of Claim 4, wherein:

   an advertising confirmation frame is transmitted from the first device to the second device before transmitting the SOR frame after receiving the advertising response frame, and
   based on the advertising confirmation frame being a public advertising confirmation frame, the advertiser address included in the public advertising confirmation frame is equal to the advertiser address included in the public advertising poll frame, is equal to the advertiser address included in the public advertising response frame, and is equal to the advertiser address included in the public SOR frame.

7. The method of Claim 1, wherein:
   the public address randomly generated by the second device is a 2-octet short address, an 8-octet extended address, or an address having a length distinct from 2 octets and 8 octets.

8. The method of Claim 2, wherein:

   the advertiser address is a public address randomly generated by the first device, and
   the public address randomly generated by the first device is a 2-octet short address, an 8-octet extended address, or an address having a length distinct from 2 octets and 8 octets.

9. The method of Claim 8, wherein:
the public address randomly generated by the first device and the public address randomly generated by the second device are not changed for the public advertising poll frame, the public advertising response frame, and the public SOR frame while the first device and the second device are within a ranging session.

10. The method of Claim 1, wherein:
based on a plurality of advertising poll frames being defined regarding whether a public address is used, a frame identifier field included in the advertising poll frame is set as a different value for the plurality of advertising poll frames.

11. The method of Claim 1, wherein:
based on a plurality of advertising response frames being defined regarding whether a public address is used, a frame identifier field included in the advertising response frame is set as a different value for the plurality of advertising response frames.

12. The method of Claim 1, wherein:
based on a plurality of SOR frames being defined regarding whether a public address is used, a frame identifier field included in the SOR frame is set as a different value for the plurality of SOR frames.

13. The method of Claim 6, wherein:
based on a plurality of advertising confirmation frames being defined regarding whether a public address is used, a frame identifier field included in the advertising confirmation frame is set as a different value for the plurality of advertising confirmation frames.

14. The method of Claim 1, wherein:

the first device is an initiator or a controller, and
the second device is a responder or a controlee.

15. The method of Claim 1, wherein:
the advertising poll frame, the advertising response frame, and the SOR frame are transmitted on a narrowband (NB) channel or a UWB channel.

16. A first device apparatus in an ultra-wideband(UWB) wireless network system, the apparatus comprising:

at least one transceiver; and
at least one processor connected to the at least one transceiver,
wherein the at least one processor is configured to:

transmit, through the at least one transceiver, an advertising poll frame to a second device;
receive, through the at least one transceiver, an advertising response frame from the second device; and
transmit, through the at least one transceiver, a start-of-ranging (SOR) frame to the second device,

wherein based on the advertising response frame being a public advertising response frame, the public advertising response frame includes a responder address which is a public address randomly generated by the second device.

17. A method performed by a second device in an ultra-wideband (UWB) wireless network system, the method comprising:

receiving an advertising poll frame from a first device;
transmitting an advertising response frame to the first device; and
receiving a start-of-ranging (SOR) frame from the first device,
wherein based on the advertising response frame being a public advertising response frame, the public advertising response frame includes a responder address which is a public address randomly generated by the second device.

18. A second device apparatus in an ultra-wideband(UWB) wireless network system, the apparatus comprising:

at least one transceiver; and
at least one processor connected to the at least one transceiver,
wherein the at least one processor is configured to:

receive, through the at least one transceiver, an advertising poll frame from a first device;
transmit, through the at least one transceiver, an advertising response frame to the first device; and
receive, through the at least one transceiver, a start-of-ranging (SOR) frame from the first device,

wherein based on the advertising response frame being a public advertising response frame, the public advertising response frame includes a responder address which is a public address randomly generated by the second device.

19. A processing apparatus configured to control a device in an ultra-wideband(UWB) wireless network system, the processing apparatus comprising:

at least one processor; and
at least one computer memory operably connected to the at least one processor, and based on being executed by the at least one processor, storing instructions for performing a method according to any one of Claim 1 to Claim 15.

20. At least one non-transitory computer-readable medium storing at least one instruction, wherein:
the at least one instruction controls a device to perform a method according to any one of Claim 1 to Claim 15 in an ultra-wideband (UWB) wireless network system by being executed by at least one processor.

FIG.1

EP 4 716 261 A1

FIG.2

(a) | PSDU |

(b) | PHY payload field (non-spread, before convolution encoding) |

(c) | PHR | PHY payload field (non-spread, before convolution encoding) |

(d) | PHR | PHY payload field (after coding, before spreading) |

(e) | PHR | PHY payload field |

(f) | SHR | PHR | PHY payload field |

(g) | SHR | PHR | PHY payload field |

| SYNC | SFD | | data rate | frame legnth | ranging | reserved | preamble duration | SECDED |

OR

| A1 | A0 | PHY payload length | ranging | SECDED |

# FIG.3

(a)

| SYNC | SFD | PHR | PHY payload field |
|------|-----|-----|-------------------|

(b)

| SYNC | SFD | STS | PHR | PHY payload field |
|------|-----|-----|-----|-------------------|

(c)

| SYNC | SFD | PHR | PHY payload field | STS |
|------|-----|-----|-------------------|-----|

(d)

| SYNC | SFD | STS |
|------|-----|-----|

# FIG.4

# FIG.5

(a)

| bits: 0 | 1 | 2 | 3 | 4 | 5 | 6-7 | 8 | 9-15 | octets: variable |
|---|---|---|---|---|---|---|---|---|---|
| reply time present | round-trip time present | TOF present | AOA azimuth present | AOA elevation present | AOA FOM present | address size specifier | deferred mode | RMI list legnth | RMI list |

| octets: 0/4 | 0/4 | 0/4 | 0/2 | 0/1 | 0/2 | 0/1 | 0/2/8 |
|---|---|---|---|---|---|---|---|
| RX-to-TX reply time | TX-to-RX round-trip time | TOF | AOA azimuth | AOA azimuth FOM | AOA elevation | AOA elevation FOM | address |

(b)

| bits: 0 | 1 | 2 | 3-7 | octets: 0/4 | 0/3 | 0/1 | 0/1 | 0/2 |
|---|---|---|---|---|---|---|---|---|
| CCIP | DDP | PSP | channel number | CCI | DPS duration | TX preamble code | RX preamble code | PSR |

(c)

| bits: 0 | 1 | 2 | 3 | 4 | 5-6 | 7 | octets: 0/1 | variable |
|---|---|---|---|---|---|---|---|---|
| reply time request | round-trip time request | TOF request | AOA azimuth request | AOA elevation request | ranging control informati on | address size | RRMC address list legnth | RRMC Djemfpt list |

(d)

| bits: 0-1 | 2-7 | octets: variable |
|---|---|---|
| address size specifier | RRTI list legnth | RRTI list |

| octets: 4 | 0/2/8 |
|---|---|
| RX-to-TX reply time | address |

EP 4 716 261 A1

# FIG.6

| initiator<br>next higher layer | initiator<br>MAC | responder<br>MAC | responder<br>next higher layer |
|---|---|---|---|

MCPS-DATA.request

{AckTx, Ranging,<br>RRMC IE(0) to<br>request reply time}

MAC data (AR=1)

{Ranging, RRMC IE}

ACK

{Ranging}

MCPS-DATA.indication

{local values of<br>RxRangingCounter and<br>TxRangingCounter, and<br>RRMC IE}

MCPS-DATA.confirm

{local values of<br>TxRangingCounter and<br>RxRangingCounter}

MCPS-DATA.request

{RMI IE including reply time}

MAC data

{RMI IE}

MCPS-DATA.indication

{RMI IE}

# FIG.7

| initiator<br>next higher layer | initiator<br>MAC | responder<br>MAC | responder<br>next higher layer |
|---|---|---|---|

MCPS-DATA.request

{RRTN IE}

MAC data

{RPRT IE}

MCPS-DATA.indication

{RRTN IE}

MCPS-DATA.request

{Ranging,<br>RRMC IE(0) to<br>request reply time}

MAC data

{Ranging, RRMC IE}

MCPS-DATA.indication

{reporting local value of<br>RxRangingCounter<br>and RRMC IE}

MCPS-DATA.confirm

{local value of<br>TxRangingCounter}

MCPS-DATA.request

{Ranging, RequestRrtiTx<br>set to insert RRTI IE}

MAC data

{RRTI IE}

MCPS-DATA.indication

{local value of<br>TxRangingCounter,<br>RRMC IE and RRTI IE}

MCPS-DATA.confirm

{reporting local value of<br>RxRangingCounter}

## FIG.8

| initiator<br>next higher layer | initiator<br>MAC | responder<br>MAC | responder<br>next higher layer |
|---|---|---|---|

MCPS-DATA.request
{IEs for coordinating configuration}

MAC data

MCPS-DATA.indication

MLME-STS.request

MLME-STS.request

MCPS-DATA.request

SP3 packet

MCPS-DATA.indication

MCPS-DATA.confirm
{local value of TxRangingCounter}

MCPS-DATA.request

SP3 packet

MCPS-DATA.indication
{local value of TxRangingCounter}

MCPS-DATA.confirm

MLME-STS.request

MLME-SET.request

## FIG.9

| initiator<br>next higher layer | initiator<br>MAC | responder<br>MAC | responder<br>next higher layer |
|---|---|---|---|

MCPS-DATA.request
{AckTx, Ranging, RRMC IE(2)}

MAC data (including AR)
{Ranging, RRMC IE}

ACK
{Ranging}

MCPS-DATA.indication

MCPS-DATA.confirm
{TxRangingCounter and RxRangingCounter}

{RxRangingCounter, TxRangingCounter, and RRMC IE}

MCPS-DATA.request
{AckTx, Ranging, RRMC IE(3) to request reply time and round-trip time}

MAC data (including AR)
{RRMC IE}

ACK
{Ranging}

MCPS-DATA.confirm
{TxRangingCounter and RxRangingCounter}

MCPS-DATA.indication
{RRMC IE}

MCPS-DATA.request
{RMI IE including reply time and round-trip time}

MAC data
{RMI IE}

MCPS-DATA.indication
{RMI IE}

MCPS-DATA.request
{RMI IE including reply time}

MAC data
{RMI IE}

MCPS-DATA.indication
{RMI IE}

# FIG.10

FIG.11

# FIG.12

(a)

| bits: 0-1 | 2-3 | 4-5 | 6 | 7 | 8 | 9-14 | 15 | octets: 1 | 0/3 | 0/1 | 0/2 | 0/4 |
|---|---|---|---|---|---|---|---|---|---|---|---|---|
| multi-node mode | ranging round usage | STS packet config | schedule mode | deferred mode | time structure indicator | RCM validity round | MMRCR | content control | RBD | RRD | RSD | SID |

(b)

| bits: 0 | 1 | 2-7 | octets: variable |
|---|---|---|---|
| SIU | address size | RDM list legnth | RDM list |

| bits: 0 | 1-7 | octets: 2/8 |
|---|---|---|
| ranging role | ranging slot index | address |

(c)

| octets: 1 | 3 | 1/0 | 2/0 |
|---|---|---|---|
| relative ranging block index | update block duration | update ranging round duration | update slot duration |

(d)

| octets: 2 | bits: 0 | 1-15 | octets: 2 |
|---|---|---|---|
| ranging block index | hopping mode | round index | transmission offset |

(e)

| bits: 0-1 | 2-3 | 4 | 5 | 6 | 7 | octets: 0/2/8 | 0/2/8 |
|---|---|---|---|---|---|---|---|
| requestor address size specifier | provider address size specifier | RAOA | RRT | RRTT | RTOF | requestor address | provider address |

EP 4 716 261 A1

FIG.13

(a)

ranging block

| ranging round 0 | ranging round 1 | ranging round 2 | ranging round 3 | . . . | ranging round N-1 |

| ranging slot 0 | ranging slot 1 | ranging slot 2 | . . . | ranging slot M-1 |

(b)

ranging round

| ranging slot | ranging slot | | . . . | | | | . . . | |

ranging control phase

ranging phase

measurement report phase

FIG.14

| | | | |
|---|---|---|---|
| RCM | RCM sent by contoller | MR | measurement report sent by contoller |
| $I_m$ | ranging initiation message from initiator m | $MR_n$ | measurement report sent by responder n |
| $R_n$ | ranging response message from responder n | $MR_m$ | measurement report from initiator m |
| $F_m$ | ranging final message from initiator m | RCUM | RCUM sent by controller |

(a) RCM $R_1$ $R_2$ ... $R_N$ MR RCUM
slot · RCP · RIP · RRP · MRP · RCUP
ranging round

(b) RCM $I_1$ $R_1$ $R_2$ ... $R_N$ $MR_1$ RCUM
RCP · RIP · RRP · MRP · RCUP

(c) RCM & $I_1$ $R_1$ $R_2$ ... $R_N$ $MR_1$ RCUM
RCP/RIP · RRP · MRP · RCUP

(d) RCM $I_1$ $R_2$ ... $R_N$ $F_1$ $MR_1$ $MR_2$ ... $MR_N$ RCUM
RCP · RIP · RRP · RFP · MRP · RCUP

(e) RCM $I_1$ $I_2$ ... $I_M$ $R_1$ $R_2$ ... $R_N$ $MR_1$ $MR_2$ ... $MR_M$ RCUM
RCP · RIP · RRP · MRP · RCUP

(f) RCM $I_1$ $I_2$ ... $I_M$ $R_1$ $R_2$ ... $R_N$ $F_1$ $F_2$ ... $F_M$ $MR_1$ $MR_2$ ... $MR_N$ RCUM
RCP · RIP · RRP · RFP · MRP · RCUP

FIG.15

FIG.16

# FIG.17

EP 4 716 261 A1

FIG.18

EP 4 716 261 A1

FIG.19

# FIG.20

(a)

Narrow Band — NB

1~2 ms | 1 ms | (X-2) ms

UWB — RSF 1 | RSF 2 | ... | RSF X

RSF-RMARKER

(b)

Narrow Band — NB

1~2 ms | 1 ms | (X-2) ms | Z=1 or 2 ms | 1 ms | (Y-2) ms

UWB — RSF 1 | RSF 2 | ... | RSF X | RIF 1 | RIF 2 | ... | RIF Y

RSF-RMARKER

RIF-RMARKER 1    RIF-RMARKER Y

RIF-RMARKER 1'    RIF-RMARKER Y'

# FIG.21

FIG.22

**(a)**

initiator — POLL

responder — RESP

RcpPollSlot — RcpResponseSlot

**(b)**

RpInitiatorRifOffset

RpInitiatorRsfOffset — 1200 RSTU — 1200 RSTU

initiator — RSF1 RSF2 ... RSFX RIF1 RIF2 ... RIFY

responder — RSF1 RSF2 ... RSFX RIF1 RIF2 ... RIFY

RpResponderRsfOffset — 1200 RSTU — 1200 RSTU

RpResponderRifOffset

RpDuration

**(c)**

Possible report packet position

initiator

responder

MrpFirstSlot — MrpSecondSlot

EP 4 716 261 A1

FIG.23

# FIG.24

(a)

UWB discovery channel

UWB-AP interval

... n | n+1 | n+2

ranging interval

(b)

NB discovery channel

NB-AP interval

UWB discovery channel

dT | dT | dT | dT | dT

UWB-AP interval

... n | n+1 | n+2

ranging interval

↑ trasnmitted AP          ◆ skipped AP

EP 4 716 261 A1

FIG.25

# FIG.26

EP 4 716 261 A1

FIG.27

(a)

| ID | ADDR | RFU | CRC |
|---|---|---|---|

octets:  1   2   1   2

(b)

| Length | Element ID | Type | ADDR | RFU |
|---|---|---|---|---|

bits:  0–6   7–14   15   octets: 2   1

(c)

| ID | ADDR | Request mode | CRC |
|---|---|---|---|

octets:  1   2   1   2

| Request mode | Reserved |
|---|---|

bits:  2   2–7

(d)

| Length | Element ID | Type | ADDR | Request mode | RFU |
|---|---|---|---|---|---|

bits:  0–6   7–14   15   octets: 2   1   1

| Request mode | Reserved |
|---|---|

bits:  2   2–7

# FIG.28

(a) Initialization channel(s)

initiator

responder

ADV POLL

SCAN

ADV POLL

SCAN    ADV RESP

SOR

request mode = first value    time

(b) Initialization channel(s)

initiator

responder

ADV POLL

SCAN

ADV POLL

SCAN    ADV RESP

CUI

request mode = second value    time

(c) Initialization channel(s)

initiator 1

responder (initiator 2)

initiator 3

ADV POLL

SCAN

SCAN

broadcast

ADV POLL

SCAN    ADV RESP

SCAN

CUI

request mode = first value

time

EP 4 716 261 A1

# FIG.29

FIG.30

| | |
|---|---|
| Transmit advertising poll frame to second device | S3010 |

| | |
|---|---|
| Receive, from second device, advertising response frame including responder address which is public address randomly generated by second device based on being public advertising response frame | S3020 |

| | |
|---|---|
| Transmit SOR frame to second device | S3030 |

FIG.31

| | |
|---|---|
| Receive advertising poll frame from first device | S3110 |

| | |
|---|---|
| Transmit, to first device, advertising response frame including responder address which is public address randomly generated by second device based on being public advertising response frame | S3120 |

| | |
|---|---|
| Receive SOR frame from first device | S3130 |

## FIG.32

| ID | Private address | Private salt | Message Control |
|----|-----------------|--------------|-----------------|

0x00
(Supported setup version list)

| length | SSVL | CRC16 |
|--------|------|-------|

0x01-ff ——— **Reserved**

## FIG.33

| ID | Private address | Message Control |
|----|-----------------|-----------------|

0x00 ——— **Reserved**

0x01
(Setup request)

| NB channel selection | UWB PHY configuration | UWB MAC configuration | NB PHY configuration | NB MAC configuration | CRC16 |
|----------------------|-----------------------|-----------------------|----------------------|----------------------|-------|

0x02-ff ——— **Reserved**

## FIG.34

| ID | Private address | Message Control |
|----|-----------------|-----------------|

0x00 ——— **Reserved**

0x01
(Setup)

| Time offset | Channel seed | NB channel selection | UWB PHY configuration | UWB MAC configuration | NB PHY configuration | NB MAC configuration | CRC16 |
|-------------|--------------|----------------------|-----------------------|-----------------------|----------------------|----------------------|-------|

0x02-ff ——— **Reserved**

FIG.35

| ID | Advertiser address | Message Control |
|---|---|---|

0x00
(Supported setup version list)

| Length | SSVL | CRC16 |
|---|---|---|

0x01-ff — **Reserved**

FIG.36

| ID | AdvAddr | RespAddr | Message Control |
|---|---|---|---|

0x00
(Setup Request)

| NB Cannel Selection | UWB PHY Configuration | UWB MAC Configuration | NB PHY Configuration | NB MAC Configuration | CRC16 |
|---|---|---|---|---|---|

0x01-ff — **Reserved**

FIG.37

| ID | AdvAddr | RespAddr | Message Control |
|---|---|---|---|

0x00
(Setup Response)

| Time Offset | Channel Seed | NB Channel Selection | UWB PHY Configuration | UWB MAC Configuration | NB PHY Configuration | NB MAC Configuration | CRC16 |
|---|---|---|---|---|---|---|---|

0x01-ff — **Reserved**

FIG.38

| ID | Advertiser address | Message Control |
|---|---|---|

0x00
(Supported setup version list)

| Length | SSVL | CRC16 |
|---|---|---|

0x01
(Supported setup version list + AT)

| Length | SSVL | AT | CRC16 |
|---|---|---|---|

0x02-ff    Reserved

FIG.39

| ID | Advertiser address | Message Control |
|---|---|---|

0x00
(Supported setup version list)

| Length | SSVL | CRC16 |
|---|---|---|

0x01
(Supported setup version list + AT + RD)

| Length | SSVL | AT | RD | CRC16 |
|---|---|---|---|---|

0x02-ff    Reserved

FIG.40

| ID | Advertiser address | Message Control |
|---|---|---|

0x00
(Supported setup version list)

| Length | SSVL | CRC16 |
|---|---|---|

0x01
(Supported setup version list + AT + RD + AdvData)

| Length | SSVL | AT | RD | AdvData | CRC16 |
|---|---|---|---|---|---|

0x02-ff    **Reserved**

FIG.41

| ID | Advertiser address | Message Control |
|---|---|---|

0x00
(Supported setup version list)

| Length | SSVL | CRC16 |
|---|---|---|

0x01
(Supported setup version list + RD + AdvData)

| Length | SSVL | RD | AdvData | CRC16 |
|---|---|---|---|---|

0x02-ff    **Reserved**

FIG.42

| ID | Advertiser address | Message Control |
|----|--------------------|-----------------|

0x00
(Supported setup version list)

| Length | SSVL | CRC16 |
|--------|------|-------|

0x01
(Supported setup version list + RD + AdvData)

| Length | SSVL | RD | CRC16 |
|--------|------|----|-------|

0x02-ff —— **Reserved**

FIG.43

| ID | SL | Advertiser address | Message Control |
|----|----|--------------------|-----------------|

0x00
(Supported setup version list)

| Length | SSVL | CRC16 |
|--------|------|-------|

0x01
(Supported setup version list + AT + RD + AdvData)

| Length | SSVL | AT | RD | AdvData | CRC16 |
|--------|------|----|----|---------|-------|

0x02-ff —— **Reserved**

## FIG.44

| ID | SM | Advertiser address | Message Control |
|---|---|---|---|

0x00
(Supported setup version list)

| Length | SSVL | CRC16 |
|---|---|---|

0x01
(Supported setup version list + AT + RD + AdvData)

| Length | SSVL | AT | RD | AdvData | CRC16 |
|---|---|---|---|---|---|

0x02-ff — **Reserved**

## FIG.45

| ID |
|---|

**Public-poll**

| Address Field | Message Control |
|---|---|

0x00

| 0x0000 | CRC16 |
|---|---|

**Public-response**

| Address Field | Message Control |
|---|---|

0x00

| 0x0000000000 | CRC16 |
|---|---|

**Public-report Initiator/Responder**

| Address Field | Message Control |
|---|---|

0x00

| TAT/RTT | PT Length | PT Data | CRC16 |
|---|---|---|---|

FIG.46

(a)

| ID | Source Address | Destination Address | Message Control | 0x0000 | CRC16 |
|---|---|---|---|---|---|

0x00

(b)

| ID | Source Address | Destination Address | Message Control | 0x0000000000 | CRC16 |
|---|---|---|---|---|---|

0x00

(c)

| ID | Source Address | Destination Address | Message Control | RTT | PT Length | PT Data | CRC16 |
|---|---|---|---|---|---|---|---|

0x00

(d)

| ID | Source Address | Destination Address | Message Control | TAT | PT Length | PT Data | CRC16 |
|---|---|---|---|---|---|---|---|

0x00

FIG.47

## FIG.48

(a)

| ID | AT | Address | Message Control | 0x0000 | CRC16 |
|----|----|---------|-----------------|--------|-------|

0x00

(b)

| ID | AT | Address | Message Control | 0x0000000000 | CRC16 |
|----|----|---------|-----------------|--------------|-------|

0x00

(c)

| ID | AT | Address | Message Control | RTT | PT Length | PT Data | CRC16 |
|----|----|---------|-----------------|-----|-----------|---------|-------|

0x00

(d)

| ID | AT | Address | Message Control | TAT | PT Length | PT Data | CRC16 |
|----|----|---------|-----------------|-----|-----------|---------|-------|

0x00

## FIG.49

## FIG.50

## FIG.51

FIG.52

adversiting packet broadcast

POS device installed in store

1 meter

unknown user device

## INTERNATIONAL SEARCH REPORT

| International application No. |
|---|
| **PCT/KR2024/006747** |

**A. CLASSIFICATION OF SUBJECT MATTER**

**H04W 4/80**(2018.01)i; **H04W 8/00**(2009.01)i; **H04B 1/7163**(2011.01)i; **H04W 72/0446**(2023.01)i; **G01S 13/02**(2006.01)i; **G01S 13/76**(2006.01)i; **H04W 48/10**(2009.01)i; **H04W 12/08**(2009.01)i

According to International Patent Classification (IPC) or to both national classification and IPC

**B. FIELDS SEARCHED**

Minimum documentation searched (classification system followed by classification symbols)

H04W 4/80(2018.01); H04W 48/16(2009.01); H04W 56/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UWB(Ultra-Wideband), advertisement, response, SOR(start of ranging), public, random address

**C. DOCUMENTS CONSIDERED TO BE RELEVANT**

| Category* | Citation of document, with indication, where appropriate, of the relevant passages | Relevant to claim No. |
|---|---|---|
| X | LEE, Hongwon et al. Public advertisement for NBA-MMS-UWB native discovery. IEEE 802.15. 23-0249-00-04ab. 14 May 2023. See slides 6-11. | 1-5,7-12,14-20 |
| A | | 6,13 |
| A | LEE, Hongwon et al. Text for UWB Native Discovery for Ranging Session and Channel Usage Coordination. IEEE 802.15, 23-0124-02-004ab. 13 March 2023. See pages 2-6. | 1-20 |
| A | HUANG, Lei et al. Negotiation of Short-Term Operating Parameters during the MMS Ranging Phase. IEEE 802.15, 23-0207-01-04ab. 16 May 2023. See slides 4-11. | 1-20 |
| A | CHITRAKAR, Rojan. Secured frames for MMS ranging. IEEE 802.15, 23-0216-00-04ab. 12 May 2023. See slides 3-7. | 1-20 |
| A | US 2023-0087308 A1 (CISCO TECHNOLOGY, INC.) 23 March 2023 (2023-03-23) See claims 1-8. | 1-20 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 September 2024** | **04 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006747**

| Patent document cited in search report | Publication date (day/month/year) | Patent family member(s) | Publication date (day/month/year) |
|---|---|---|---|
| US 2023-0087308 A1 | 23 March 2023 | WO 2023-049678 A1 | 30 March 2023 |

Form PCT/ISA/210 (patent family annex) (July 2022)